(19) Europäisches Patentamt
European Patent Office
Office européen des brevets

(11) EP 4 410 902 A1

(12) **EUROPEAN PATENT APPLICATION**
published in accordance with Art. 153(4) EPC

(43) Date of publication:
**07.08.2024 Bulletin 2024/32**

(21) Application number: **22876429.6**

(22) Date of filing: **29.09.2022**

(51) International Patent Classification (IPC):
***C08L 101/12*** *(2006.01)* ***C08G 81/00*** *(2006.01)*
***C08K 3/01*** *(2018.01)* ***C08L 35/02*** *(2006.01)*
***C08L 67/00*** *(2006.01)* ***C08L 79/02*** *(2006.01)*
***C08L 101/02*** *(2006.01)*

(52) Cooperative Patent Classification (CPC):
**C08G 81/00; C08K 3/01; C08L 35/02; C08L 67/00; C08L 79/02; C08L 101/02; C08L 101/12**

(86) International application number:
**PCT/JP2022/036384**

(87) International publication number:
**WO 2023/054565 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 JP 2021161391**

(71) Applicant: **FUJIFILM Corporation**
**Tokyo 106-8620 (JP)**

(72) Inventor: **MIYATA Tetsushi**
**Haibara-gun, Shizuoka 421-0396 (JP)**

(74) Representative: **HGF**
**HGF Limited**
**1 City Walk**
**Leeds LS11 9DX (GB)**

(54) **METHOD FOR PRODUCING MAGNETIC PARTICLE-CONTAINING COMPOSITION, MAGNETIC PARTICLE-CONTAINING COMPOSITION, MAGNETIC PARTICLE-CONTAINING CURED PRODUCT, MAGNETIC PARTICLE-INTRODUCED SUBSTRATE, AND ELECTRONIC MATERIAL**

(57) A first object of the present invention is to provide a method for producing a magnetic particle-containing composition which has excellent storage stability and has fluidity suitable for coating even after a certain period of time after stirring. A second object of the present invention is to provide a magnetic particle-containing composition which has excellent storage stability and has fluidity suitable for coating even after a certain period of time after stirring. A third object of the present invention is to provide a magnetic particle-containing cured product, a magnetic particle-introduced substrate, and an electronic material.

The method for producing a magnetic particle-containing composition of the present invention includes a step of cooling, to 5°C or lower, a precursor composition which contains magnetic particles, a dispersant, and at least one of a solvent or a liquid reactive monomer, in which the dispersant has an amine-based adsorptive group and a crystalline polymer chain.

EP 4 410 902 A1

## Description

## BACKGROUND OF THE INVENTION

1. Field of the Invention

The present invention relates to a method for producing a magnetic particle-containing composition, a magnetic particle-containing composition, a magnetic particle-containing cured product, a magnetic particle-introduced substrate, and an electronic material.

2. Description of the Related Art

With performance enhancement and miniaturization of electronic devices, a degree of integration of electronic circuits is increasing. As one of materials for improving the degree of integration, there is a coating-type composition containing magnetic particles. Since a magnetic body can be mounted in any shape by using such a composition, the miniaturization and the performance enhancement of the electronic devices are easily achieved as compared with a method in the related art, in which an individual piece of the magnetic body is disposed on a chip.

For example, JP2020-013943A discloses "a casting liquid composition containing (A) a powder including magnetic particles, (B) a resin, and (C) a dispersant, in which a content of the magnetic particles is more than 70 vol%".

## SUMMARY OF THE INVENTION

In recent years, an attempt has been made to produce, using a coating-type composition containing magnetic particles, a magnetic particle-introduced substrate obtained by filling hole portions (holes) of a substrate with the magnetic body.

Recently, in a case where the present inventor has studied on preparation of a coating-type composition containing magnetic particles with reference to the composition disclosed in JP2020-013943A and performance of the coating-type composition as a hole-filling composition, it has been found that, for example, in a case where magnetic particles having a large particle size and/or a high specific gravity is used in order to achieve high magnetic permeability and low magnetic loss, there is a problem in that the magnetic particles tend to settle during storage of the composition. On the other hand, it has been found that, in a case where a viscosity of the composition is increased in order to suppress the sedimentation of the magnetic particles, there is a problem in that fluidity of the composition itself is lowered and thus coating properties are likely to be unsuitable. That is, it has been found that there is room for studying production of a composition which can suppress the sedimentation of the magnetic particles during storage (in other words, has excellent storage stability) and has fluidity suitable for coating in a case where the composition is used.

An object of the present invention is to provide a method for producing a magnetic particle-containing composition which has excellent storage stability and has fluidity suitable for coating even after a certain period of time after stirring.

Another object of the present invention is to provide a magnetic particle-containing composition which has excellent storage stability and has fluidity suitable for coating even after a certain period of time after stirring.

Another object of the present invention is to provide a magnetic particle-containing cured product, a magnetic particle-introduced substrate, and an electronic material.

As a result of conducting an extensive investigation to achieve the objects, the present inventor has found that the objects can be achieved by the following constitution.

(1) A method for producing a magnetic particle-containing composition, comprising:

a step of cooling, to 5°C or lower, a precursor composition which contains magnetic particles, a dispersant, and at least one of a solvent or a liquid reactive monomer,
in which the dispersant has an amine-based adsorptive group and a crystalline polymer chain.

(2) The method for producing a magnetic particle-containing composition according to (1),
in which the crystalline polymer chain is a chain including a polyester structure.
(3) The method for producing a magnetic particle-containing composition according to (2),
in which a repetition number in the polyester structure is 10 or more.
(4) The method for producing a magnetic particle-containing composition according to any one of (1) to (3),
in which the dispersant includes a repeating unit including the crystalline polymer chain.
(5) The method for producing a magnetic particle-containing composition according to any one of (1) to (4),
in which the dispersant has the crystalline polymer chain as a graft chain.

(6) The method for producing a magnetic particle-containing composition according to any one of (1) to (5), in which the amine-based adsorptive group is a group selected from the group consisting of a group represented by Formula (A1) described later to a group represented by Formula (A3) described later.
(7) The method for producing a magnetic particle-containing composition according to any one of (1) to (6), in which a content of the dispersant in the precursor composition is 0.3% by mass or more with respect to a total solid content of the composition.
(8) The method for producing a magnetic particle-containing composition according to any one of (1) to (7), in which the precursor composition further contains a rheology control agent.
(9) The method for producing a magnetic particle-containing composition according to any one of (1) to (8), in which the magnetic particles include soft magnetic particles.
(10) The method for producing a magnetic particle-containing composition according to any one of (1) to (9), in which a volume average particle size of the magnetic particles is 4 μm or more.
(11) A magnetic particle-containing composition comprising:

magnetic particles;
a dispersant; and
at least one of a solvent or a liquid reactive monomer,
in which, in a case where the magnetic particle-containing composition is heated from 10°C to 100°C at 10 °C/min using a differential scanning calorimeter, an endothermic peak temperature is 60°C or lower.

(12) The magnetic particle-containing composition according to (11), in which the dispersant has an amine-based adsorptive group and a crystalline polymer chain.
(13) The magnetic particle-containing composition according to (12), in which the crystalline polymer chain is a chain including a polyester structure.
(14) The magnetic particle-containing composition according to (13), in which a repetition number in the polyester structure is 10 or more.
(15) The magnetic particle-containing composition according to any one of (12) to (14), in which the dispersant includes a repeating unit including the crystalline polymer chain.
(16) The magnetic particle-containing composition according to any one of (12) to (15), in which the dispersant has the crystalline polymer chain as a graft chain.
(17) The magnetic particle-containing composition according to any one of (11) to (16), in which the amine-based adsorptive group is a group selected from the group consisting of a group represented by Formula (A1) described later to a group represented by Formula (A3) described later.
(18), The magnetic particle-containing composition according to any one of (11) to (17) in which a content of the dispersant is 0.3% by mass or more with respect to a total solid content of the composition.
(19) The magnetic particle-containing composition according to any one of (11) to (18), further comprising: a rheology control agent.
(20) The magnetic particle-containing composition according to any one of (11) to (19), in which the magnetic particles include soft magnetic particles.
(21) The magnetic particle-containing composition according to any one of (11) to (19), in which a volume average particle size of the magnetic particles is 4 μm or more.
(22) A magnetic particle-containing cured product formed of the magnetic particle-containing composition according to any one of (11) to (21).
(23) A magnetic particle-introduced substrate comprising:

a substrate in which a hole portion is formed; and
the magnetic particle-containing cured product according to (22), which is disposed in the hole portion.

(24) An electronic material comprising: the magnetic particle-introduced substrate according to (23).

According to the present invention, it is possible to provide a method for producing a magnetic particle-containing composition which has excellent storage stability and has fluidity suitable for coating even after a certain period of time after stirring.
In addition, according to the present invention, it is also possible to provide a magnetic particle-containing composition which has excellent storage stability and has fluidity suitable for coating even after a certain period of time after stirring.
In addition, according to the present invention, it is also possible to provide a magnetic particle-containing cured

product, a magnetic particle-introduced substrate, and an electronic material.

## DESCRIPTION OF THE PREFERRED EMBODIMENTS

Hereinafter, the present invention will be described in detail.

Description of configuration requirements described below may be made on the basis of representative embodiments of the present invention in some cases, but the present invention is not limited to such embodiments.

In notations for a group (atomic group) in the present specification, in a case where the group is cited without specifying that it is substituted or unsubstituted, the group includes both a group having no substituent and a group having a substituent as long as it does not impair the spirit of the present invention. For example, an "alkyl group" includes not only an alkyl group having no substituent (unsubstituted alkyl group), but also an alkyl group having a substituent (substituted alkyl group). In addition, an "organic group" in the present specification refers to a group including at least 1 carbon atom.

"Actinic rays" or "radiation" in the present specification means, for example, a bright line spectrum of a mercury lamp, far ultraviolet rays typified by an excimer laser, extreme ultraviolet rays (EUV light), X-rays, electron beams (EB), or the like. "Light" in the present specification means actinic ray or radiation.

Unless otherwise specified, "exposure" in the present specification encompasses not only exposure by a bright line spectrum of a mercury lamp, far ultraviolet rays typified by an excimer laser, extreme ultraviolet rays, X-rays, EUV light, or the like, but also drawing by particle beams such as electron beams and ion beams.

In the present specification, a numerical range expressed using "to" is used in a meaning of a range that includes the preceding and succeeding numerical values of "to" as the lower limit value and the upper limit value, respectively.

In the present specification, (meth)acrylate represents acrylate or methacrylate, (meth)acryl represents acryl or methacryl, and (meth)acryloyl represents acryloyl or methacryloyl.

In the present specification, "solid content" of a composition means components in the composition, other than a solvent. In addition, even in a case where properties of the above-described other components are liquid, the components are regarded as the solid content.

In addition, in the present specification, a weight-average molecular weight (Mw) is a value by a gel permeation chromatography (GPC) method in terms of polystyrene.

In the present specification, the GPC method is based on a method in which HLC-8020 GPC (manufactured by TOSOH CORPORATION) is used, TSKgel SuperHZM-H, TSKgel SuperHZ4000, and TSKgel SuperHZ2000 (manufactured by TOSOH CORPORATION, 4.6 mm ID × 15 cm) are used as columns, and tetrahydrofuran (THF) is used as an eluent.

In addition, in the present specification, for each component, unless otherwise specified, one kind of substance corresponding to each component may be used alone, or two or more kinds thereof may be used in combination. Here, in a case where two or more kinds of substances corresponding to respective components are used in combination, the content of the components indicates the total content of the substances used in combination unless otherwise specified.

[Method for producing magnetic particle-containing composition]

The method for producing a magnetic particle-containing composition according to the embodiment of the present invention (hereinafter, also referred to as "production method according to the embodiment of the present invention") is a method for producing a magnetic particle-containing composition, which includes

a step of cooling, to 5°C or lower, a precursor composition which contains magnetic particles, a dispersant (hereinafter, also referred to as "specific dispersant"), and at least one of a solvent or a liquid reactive monomer,
in which the dispersant has an amine-based adsorptive group and a crystalline polymer chain.
With the production method according to the embodiment of the present invention having the above-described configuration, a magnetic particle-containing composition which has excellent storage stability and has fluidity suitable for coating even after a certain period of time after stirring is obtained.

Although the details thereof are not clear, the present inventor has presumed as follows.

As a result of recent studies, the present inventor has found that, in a case where a composition containing magnetic particles and a specific dispersant is cooled to 5°C or lower, the composition is gelled and the magnetic particles are less likely to settle. It is presumed that the gelation of the composition is caused by formation of a crosslinking structure due to interaction (for example, electrostatic interaction or the like) between the crystalline polymer chains in the specific dispersant, and it is presumed that the sedimentation of the magnetic particles is suppressed by adsorption of the magnetic particles to the amine-based adsorptive group in the specific dispersant in the crosslinking structure. That is, it is presumed that the magnetic particle-containing composition obtained through the production method according to the embodiment of the present invention has excellent storage stability due to the gelation of the above-described composition.

In addition, on the other hand, the present inventor has also clarified that the above-described crosslinking structure formed by the specific dispersant is easily released by stirring due to a loose interaction to be a sol state, and exhibits fluidity with excellent coating properties even after a certain period of time after stirring. That is, the magnetic particle-containing composition obtained through the production method according to the embodiment of the present invention is brought into a sol state by stirring, and can exhibit fluidity with excellent coating properties even after a certain period of time after stirring. Furthermore, it has been confirmed that the magnetic particle-containing composition obtained through the production method according to the embodiment of the present invention is brought into a sol state even by heating, and can exhibit fluidity with excellent coating properties even in a case where the temperature is returned to room temperature after heating for a certain period of time.

As is clear from the results of Comparative Examples in the section of Examples of the present specification, for example, in a case where storage stability (suppression of the sedimentation of the magnetic particles) is secured by increasing a viscosity of the magnetic particle-containing composition itself by reducing a content of liquid components such as the solvent and the liquid reactive monomer, the fluidity is not exhibited even in a case where the stirring is performed, and the coating properties are deteriorated (refer to Comparative Example 4).

Hereinafter, the fact that the magnetic particle-containing composition obtained through the production method according to the embodiment of the present invention has more excellent storage stability, that the magnetic particle-containing composition obtained through the production method according to the embodiment of the present invention has more excellent fluidity after a certain period of time after stirring, and/or that a magnetic particle-containing cured product which is obtained from the magnetic particle-containing composition obtained through the production method according to the embodiment of the present invention has more excellent magnetic properties may be referred to as "effect of the present invention is more excellent".

Hereinafter, a specific procedure of the production method according to the embodiment of the present invention will be described.

The production method according to the embodiment of the present invention includes a step of cooling a precursor composition to 5°C or lower.

Hereinafter, first, each component which can be contained in the precursor composition will be described in detail.

[Precursor composition]

The precursor composition contains magnetic particles, the specific dispersant, and at least one of a solvent or a liquid reactive monomer.

<Magnetic particles>

The precursor composition contains magnetic particles.

The magnetic particles include a metal atom.

In the present specification, examples of the above-described metal atom also include metalloid atoms such as boron, silicon, germanium, arsenic, antimony, and tellurium.

The above-described metal atom may be contained in the magnetic particles as an alloy (preferably a magnetic alloy), a metal oxide (preferably a magnetic oxide), a metal nitride (preferably a magnetic oxide), or a metal carbide (preferably a magnetic carbide), which includes a metal element.

A content of the above-described metal atom is preferably 50% to 100% by mass, more preferably 75% to 100% by mass, and still more preferably 95% to 100% by mass with respect to the total mass of the magnetic particles.

The above-described metal atom is not particularly limited, but preferably includes at least one metal atom selected from the group consisting of Fe, Ni, and Co.

A content of the at least one metal atom selected from the group consisting of Fe, Ni, and Co (in the case where a plurality of metal atoms are included, the total content thereof) is preferably 50% by mass or more, more preferably 60% by mass or more, and still more preferably 70% by mass or more with respect to the total mass of metal atoms in the magnetic particles. The upper limit value of the above-described content is not particularly limited, but for example, it is 100% by mass or less, preferably 98% by mass or less and more preferably 95% by mass or less.

The magnetic particles may include a material other than Fe, Ni, and Co, and specific examples thereof include Al, Si, S, Sc, Ti, V, Cu, Y, Mo, Rh, Pd, Ag, Sn, Sb, Te, Ba, Ta, W, Re, Au, Bi, La, Ce, Pr, Nd, P, Zn, Sr, Zr, Mn, Cr, Nb, Pb, Ca, B, C, N, and O.

In a case where the magnetic particles include a metal atom other than Fe, Ni, and Co, it is preferable to include one or more selected from the group consisting of Si, Cr, B, and Mo.

Specific examples of the magnetic particles include Fe-Co based alloys (preferably, permendur), Fe-Ni based alloys (for example, permalloy), Fe-Zr based alloys, Fe-Mn based alloys, Fe-Si based alloys, Fe-Al based alloys, Ni-Mo based alloys (preferably, supermalloy), Fe-Ni-Co based alloys, Fe-Si-Cr based alloys, Fe-Si-B based alloys, Fe-Si-Al based alloys (preferably, sendust), Fe-Si-B-C based alloys, Fe-Si-B-Cr based alloys, Fe-Si-B-Cr-C based alloys, Fe-Co-Si-B based alloys, Fe-Si-B-Nb based alloys, Fe nanocrystalline alloy, alloys such as Fe-based amorphous alloy and Co-based amorphous alloy, and ferrites such as Ni ferrite, Mn ferrite, spinel ferrite (preferably, Ni-Zn based ferrite, Mn-Zn based ferrite, or Fe-Mn ferrite), and hexagonal ferrite (preferably, barium ferrite or magnetoplumbite-type hexagonal ferrite). The above-described alloy may be amorphous.

Among these, from the viewpoint of low loss, the magnetic particles are preferably soft magnetic particles. Examples of the soft magnetic particles include Fe-based amorphous alloy, Fe-Si-Cr based alloy, Fe nanocrystalline alloy, Fe-Ni-Co based alloy, Co-based amorphous alloy, Ni-Mo based alloy, Ni-Zn based ferrite, Mn-Zn based ferrite, Fe-Mn based ferrite, Ni ferrite, and Mn ferrite.

A surface layer may be provided on a surface of the above-described magnetic particles. In a case where the magnetic particles have the surface layer in this way, a function corresponding to a material of the surface layer can be imparted to the magnetic particles.

Examples of the surface layer include an inorganic layer and an organic layer.

From the viewpoint that it is possible to form a surface layer excellent in at least one of insulation properties, gas barrier properties, or chemical stability, a compound for forming the inorganic layer is preferably a metal oxide, a metal nitride, a metal carbide, a metal phosphate compound, a metal borate compound, or a silicate compound (for example, a silicate ester such as tetraethyl orthosilicate or a silicate such as sodium silicate). Specific examples of elements contained in these compounds include Fe, Al, Ca, Mn, Zn, Mg, V, Cr, Y, Ba, Sr, Ge, Zr, Ti, Si, and rare earth elements.

Examples of a material constituting the inorganic layer obtained from the compound for forming an inorganic layer include silicon oxide, germanium oxide, titanium oxide, aluminum oxide, zirconium oxide, hafnium oxide, and magnesium oxide, and the inorganic layer may be a layer containing two or more kinds thereof.

Examples of a compound for forming the organic layer include an acrylic monomer. Specific examples of the acrylic monomer include compounds described in paragraphs 0022 to 0023 of JP2019-067960A.

Examples of a material constituting the organic layer obtained from the compound for forming an organic layer include an acrylic resin.

A thickness of the surface layer is not particularly limited, but from the viewpoint that the function of the surface layer is further exhibited, it is preferably 3 to 1,000 nm.

A volume average particle size of the magnetic particles contained in the precursor composition is, for example, preferably 3 μm or more, and from the viewpoint that the effect of the present invention is more excellent, it is more preferably 4 μm or more and still more preferably 5 μm or more. The upper limit value thereof is not particularly limited, but is preferably, for example, 50 μm or less.

The volume average particle size of the magnetic particles can be obtained based on a particle size distribution curve representing a volume-based frequency distribution of the magnetic particles, which is obtained by a laser diffraction scattering-type particle size distribution analyzer (for example, product "LA960N" manufactured by HORIBA, Ltd).

A shape of the magnetic particles is not particularly limited and may be any of a plate shape, an elliptical shape, a spherical shape, or an amorphous shape, but from the viewpoint that the effect of the present invention is more excellent, a spherical shape is preferable.

The magnetic particles may be used alone or in combination of two or more kinds thereof.

In a case where two or more kinds of magnetic particles are used in combination, for example, it is preferable to use magnetic particles having a volume average particle size of 10 μm or more (preferably, magnetic particles having a volume average particle diameter of 20 to 50 μm) and magnetic particles having a volume average particle size of less than 10 μm (preferably, magnetic particles having a volume average particle size of 3 to 7 μm) in combination.

In addition, in a case where two or more kinds of magnetic particles are used in combination, it is preferable to use a combination of ferrite particles and alloy particles is also preferable, and it is more preferable to use a combination of one or more selected from the group consisting of Ni-Zn based ferrite, Mn-Zn based ferrite, Fe-Mn based ferrite, Ni ferrite, and Mn ferrite and one or more selected from the group consisting of Fe-based amorphous alloy, Fe-Si-Cr based alloy, Fe nanocrystalline alloy, Fe-Ni-Co based alloy, Co-based amorphous alloy, and Ni-Mo based alloy.

In addition, in a case where the ferrite particles and the alloy particles are used in combination as the magnetic particles, it is preferable to use ferrite particles having a volume average particle size of 10 μm or more (preferably, ferrite particles having a volume average particle size of 20 to 50 μm) and alloy particles having a volume average particle size of less than 10 μm (preferably, alloy particles having a volume average particle size of 3 to 7 μm) in combination.

In addition, in a case where the ferrite particles and the alloy particles are used in combination as the magnetic particles, a content ratio (mass ratio; ferrite particles/alloy particles) is preferably 30/70 to 70/30 and more preferably

40/60 to 60/40.

In the precursor composition, a content of the magnetic particles (in a case where a plurality of types are contained, the total content thereof) is preferably 85% by mass or more, more preferably 88% by mass or more, and still more preferably 90% by mass or more with respect to the total solid content of the composition. The upper limit value of the above-described content is not particularly limited, but is, for example, preferably 98% by mass or less and more preferably 96% by mass or less.

<Dispersant>

The precursor composition contains a dispersant (specific dispersant) having an amine-based adsorptive group and a crystalline polymer chain.

As the specific dispersant, a polymer dispersant is preferable from the viewpoint that the effect of the present invention is more excellent. A weight-average molecular weight of the specific dispersant is not particularly limited, but is, for example, preferably 3,000 or more, more preferably 4,000 or more, still more preferably 5,000 or more, and particularly preferably 6,000 or more. In addition, the upper limit value thereof is, for example, preferably 300,000 or less, more preferably 200,000 or less, still more preferably 100,000 or less, and particularly preferably 50,000 or less.

In the precursor composition, a lower limit value of a content of the specific dispersant is preferably 0.1% by mass or more with respect to the total solid content of the composition, and from the viewpoint that the effect of the present invention is more excellent, it is more preferably 0.3% by mass or more and still more preferably 0.6% by mass or more. The upper limit value thereof is preferably 10% by mass or less, more preferably 8.0% by mass or less, still more preferably 5.0% by mass or less, and particularly preferably 3.0% by mass or less.

An acid value of the specific dispersant is not particularly limited, but is, for example, preferably 0 to 400 mgKOH/g, more preferably 10 to 350 mgKOH/g, still more preferably 30 to 300 mgKOH/g, and particularly preferably 50 to 200 mgKOH/g.

In a case where the acid value of the specific dispersant is 50 mgKOH/g or more, the effect of the present invention is more excellent.

In the present specification, the acid value can be calculated, for example, from the average content of acid groups in the compound. In addition, the specific dispersant having a desired acid value can be obtained by changing a content of a repeating unit including an acid group in the specific dispersant.

An amine value of the specific dispersant is not particularly limited, but is, for example, preferably 1 to 100 mgKOH/g and more preferably 10 to 50 mgKOH/g.

In the present specification, the amine value can be calculated, for example, from an average content of amino groups in the compound. In addition, the specific dispersant having a desired amine value can be obtained by changing a content of a repeating unit including an amine value in the specific dispersant.

(Amine-based adsorptive group)

The amine-based adsorptive group contained in the specific dispersant is a functional group including a nitrogen atom derived from a primary to tertiary amine, and examples thereof include a substituted or unsubstituted monovalent amino group and a substituted or unsubstituted divalent amino group.

A group in which a carbonyl group is bonded to a nitrogen atom, represented by >N-C(=O), is not included in the amine-based adsorptive group.

In addition, in the substituted or unsubstituted monovalent amino group and the substituted or unsubstituted divalent amino group, the nitrogen atom in the amino group may be a cationic nitrogen atom. In a case where the nitrogen atom in the amino group is a cationic nitrogen atom, a counter anion is not particularly limited.

In addition, the nitrogen atom included in the substituted or unsubstituted divalent amino group may be a ring member atom of a nitrogen-containing ring. In other words, a divalent amino group in which a nitrogen atom included in a nitrogen-containing ring also corresponds to the amine-based adsorptive group.

The specific dispersant may include the amine-based adsorptive group in a main chain or in a side chain. The case where the specific dispersant includes the amine-based adsorptive group in the main chain corresponds to, for example, a case where the specific dispersant is a polymer dispersant including an alkylimine structural unit (polyalkylimine-based polymer). The alkylimine structural unit is a structural unit represented by *-AL-NR-* (* represents a bonding position, AL represents an alkylene group, and R represents a hydrogen atom or a monovalent organic group), and -NR- in the structure corresponds to the amine-based adsorptive group. In a case where the alkylimine structural unit is, for example, an ethylene imine structural unit ($*-C_2H_5-NH-*$), -NH- in the structural unit corresponds to the amine-based adsorptive group.

The specific dispersant may include one or more amine-based adsorptive groups, but from the viewpoint that the effect of the present invention is more excellent, it is preferable to include a repeating unit including the amine-based

adsorptive group.

As the substituted or unsubstituted monovalent amino group, for example, a group represented by Formula (A1) is preferable.

Formula (A1): $*\text{-NR}^{11}\text{R}^{12}$

In Formula (A1), examples of $R^{11}$ and $R^{12}$ each independently include a hydrogen atom and a monovalent organic group. * represents a bonding position.

The monovalent organic group is not particularly limited, and examples thereof include a monovalent aliphatic hydrocarbon group. The monovalent aliphatic hydrocarbon group may be linear, branched, or cyclic, but is preferably linear or branched.

As the monovalent aliphatic hydrocarbon group, an alkyl group having 1 to 20 carbon atoms or an alkenyl group having 2 to 20 carbon atoms is preferable, an alkyl group having 1 to 12 carbon atoms is more preferable, an alkyl group having 1 to 6 carbon atoms is still more preferable, and a methyl group is particularly preferable.

In addition, the monovalent aliphatic hydrocarbon group may further have a substituent (preferably, a monovalent substituent). Examples of the substituent include a hydroxyl group, a carboxy group, a phosphoric acid group, a sulfo group, an acid anhydride group, an amino group, and an imino group.

As the substituted or unsubstituted divalent amino group, for example, a group represented by Formula (A2) or Formula (A3) is preferable. As described above, the substituted or unsubstituted divalent amino group may be included in the main chain.

Formula (A2): $*\text{-NR}^{21}\text{-}*$

Formula (A3): $*\text{-N}^{+}\text{R}^{22}\text{R}^{23}\text{-}*$

In Formula (A2), examples of $R^{21}$ include a hydrogen atom or a monovalent organic group. * represents a bonding position.

The monovalent organic group represented by $R^{21}$ is not particularly limited, and examples thereof include a monovalent aliphatic hydrocarbon group. The monovalent aliphatic hydrocarbon group may be linear, branched, or cyclic, but is preferably linear or branched.

In addition, in the above-described aliphatic hydrocarbon group, $-CH_2-$ may be substituted with one or more selected from the group consisting of -CO-, -O-, -S-, and $-SO_2-$.

In addition, the monovalent aliphatic hydrocarbon group may further have a substituent (preferably, a monovalent substituent). Examples of the substituent include a hydroxyl group, a carboxy group, a phosphoric acid group, a sulfo group, an acid anhydride group, an amino group, and an imino group.

Specific examples of the monovalent organic group represented by $R^{21}$ include an alkyl group having 1 to 20 carbon atoms (preferably having 1 to 12 carbon atoms and more preferably having 1 to 6 carbon atoms), an alkenyl group having 2 to 20 carbon atoms (preferably having 2 to 12 carbon atoms and more preferably having 2 to 6 carbon atoms), and a group including the crystalline polymer chain, which will be described later.

The group represented by Formula (A2) is preferably a group represented by $*\text{-CH}_2\text{-NR}^{21}\text{-CH}_2\text{-}*$.

In Formula (A3), examples of $R^{22}$ and $R^{23}$ each independently include a hydrogen atom or a monovalent organic group. * represents a bonding position.

The monovalent organic group is not particularly limited, and examples thereof include a monovalent aliphatic hydrocarbon group. The monovalent aliphatic hydrocarbon group may be linear, branched, or cyclic, but is preferably linear or branched.

In addition, in the above-described aliphatic hydrocarbon group, $-CH_2-$ may be substituted with one or more selected from the group consisting of -CO-, -O-, -S-, and $-SO_2-$.

In addition, the monovalent aliphatic hydrocarbon group may further have a substituent (preferably, a monovalent substituent). Examples of the substituent include a hydroxyl group, a carboxy group, a phosphoric acid group, a sulfo group, an acid anhydride group, an amino group, and an imino group.

Specific examples of the monovalent organic group represented by $R^{22}$ and $R^{23}$ include an alkyl group having 1 to 20 carbon atoms (preferably having 1 to 12 carbon atoms and more preferably having 1 to 6 carbon atoms), an alkenyl group having 2 to 20 carbon atoms (preferably having 2 to 12 carbon atoms and more preferably having 2 to 6 carbon atoms), and a group including the crystalline polymer chain, which will be described later.

In addition, the group represented by Formula (A3) further includes a counter anion. The counter anion is not particularly limited. Examples of a suitable aspect of the counter anion include an anionic group including the crystalline polymer chain, which will be described later.

The group represented by Formula (A3) is preferably a group represented by $*\text{-CH}_2\text{-N}^{+}\text{R}^{22}\text{R}^{23}\text{-CH}_2\text{-}*$.

(Crystalline polymer chain)

Examples of the crystalline polymer chain include a chain including a polyester structure. In addition, examples of other chains include a polyether structure (for example, an EO structure) chain, a chain including a cellulose structure, a chain including a polyolefin structure (for example, a polyethylene structure and a polypropylene structure), a chain including a polyurethane structure, a chain including a polyurea structure, and a chain including a polyamide structure.
As the crystalline polymer chain is longer, a steric repulsion effect is higher, and dispersibility of the magnetic particles is improved. On the other hand, in a case where the crystalline polymer chain is too long, an attraction force to the magnetic particles decreases, and the dispersibility of the magnetic particles tends to decrease. Therefore, as the number of atoms in the crystalline polymer chain, the number of atoms excluding hydrogen atoms is preferably 40 to 10,000, more preferably 50 to 2,000, and still more preferably 60 to 600.
From the viewpoint that the effect of the present invention is more excellent, the crystalline polymer chain is preferably a chain including a polyester structure.
The polyester structure is preferably a cyclic or chain-like polyester structure, and more preferably a chain-like polyester structure.
The above-described chain-like polyester structure preferably has a decyclized structure of a lactone such as ε-caprolactone, δ-caprolactone, β-propiolactone, γ-butyrolactone, δ-valerolactone, γ-valerolactone, enantholactone, β-butyrolactone, γ-hexanolactone, γ-octanolactone, δ-hexanolactone, δ-octanolactone, δ-dodecanolactone, α-methyl-γ-butyrolactone, and lactide (which may be an L-form or a D-form), and more preferably has a decyclized structure of ε-caprolactone or δ-valerolactone.
Hereinafter, a structure including, as a repeating unit, a structure obtained by ring-opening ε-caprolactone is also referred to as "polycaprolactone structure", and a structure including, as a repeating unit, a structure obtained by ring-opening δ-valerolactone is also referred to as "polyvalerolactone structure".
The chain including a polyester structure may include only one kind of polyester structure or a plurality of these structures. From the viewpoint that the effect of the present invention is more excellent, it is preferable to include only one kind.
The number of repeating units in the polyester structure is, for example, preferably 6 or more, and from the viewpoint that the effect of the present invention is more excellent, it is more preferably 10 or more, still more preferably 20 or more, and particularly preferably 30 or more. The upper limit value thereof is not particularly limited, but is, for example, preferably 300 or less and more preferably 200 or less.
Examples of the chain-like polyester structure include a group represented by Formula (B1) or Formula (B2).

Formula (B1): $*\text{-(-O-}C_iH_{2i}\text{-CO-)}_s\text{-}*$

Formula (B2): $*\text{-(-O-CO-}C_jH_{2j}\text{-)}_t\text{-}*$

In Formulae (B1) and (B2), i and j each independently represent an integer of 2 to 8.
i and j are each preferably an integer of 4 to 6, more preferably 4 or 5, and still more preferably 5.
In addition, in Formulae (B1) and (B2), s and t are, for example, preferably 6 or more, more preferably 10 or more, and still more preferably 20 or more. s and t are integers.
In the group represented by Formula (B1), a plurality of $C_iH_{2i}$'s may be the same or different from each other. In addition, in the group represented by Formula (B2), a plurality of $C_jH_{2j}$'s may be the same or different from each other.
In the specific dispersant, it is preferable that the crystalline polymer chain is contained as a graft chain. The graft chain refers to a portion from a base of a main chain (an atom bonded to the main chain in a group which is branched off from the main chain) to a terminal of the group which is branched off from the main chain.
In addition, it is preferable that the specific dispersant includes a repeating unit including the crystalline polymer chain.
In the polymer dispersant, a content of the repeating unit including the crystalline polymer chain is, for example, 2% to 100% by mass, preferably 2% to 95% by mass, more preferably 2% to 90% by mass, still more preferably 5% to 80% by mass, and particularly preferably 5% to 60% by mass with respect to all repeating units of the polymer dispersant.
Examples of specific aspects of the specific dispersant include polymer dispersants of aspects 1 and 2 shown below.

(Polymer dispersant of aspect 1)

The polymer dispersant of the aspect 1 is preferably a polymer dispersant including any one or more repeating unit of Formula (S 1) or Formula (S2) as the repeating unit including the crystalline polymer chain. However, in a case where an amine-based adsorptive group is not included in any one or more repeating unit of Formula (S 1) or Formula

(S2), the polymer dispersant of the aspect 1 further includes a repeating unit including the amine-based adsorptive group. In other words, the polymer dispersant of the aspect 1 is preferably a polymer dispersant including any one or more repeating unit of Formula (S 1) and Formula (S2), which includes an amine-based adsorptive group, or a polymer dispersant including any one or more repeating unit of Formula (S1) and Formula (S2) and a repeating unit including an amine-based adsorptive group.

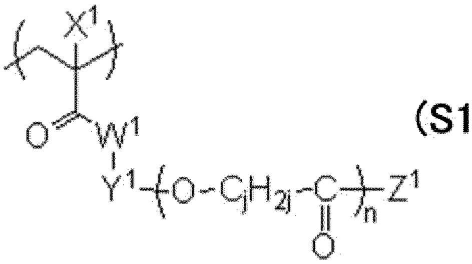
(S1)

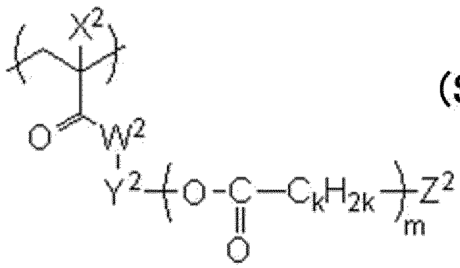
(S2)

In Formula (S1) and Formula (S2), $W^1$ and $W^2$ each independently represent -O- or -NH-. $W^1$ and $W^2$ are preferably -O-.

In Formula (S1) and Formula (S2), $X^1$ and $X^2$ each independently represent a hydrogen atom or a monovalent organic group. From the viewpoint of synthetic restriction, $X^1$ and $X^2$ are each independently preferably a hydrogen atom or an alkyl group having 1 to 12 carbon atoms, more preferably a hydrogen atom or a methyl group, and still more preferably a methyl group.

In Formula (S1) and Formula (S2), $Y^1$ and $Y^2$ each independently represent a divalent linking group, and the linking group is not particularly limited in structure. Specific examples of the divalent linking group represented by $Y^1$ and $Y^2$ include linking groups of (Y-1) to (Y-21). In the structures shown below, A and B respectively mean bonding sites with a left terminal group and a right terminal group in Formulae (S1) and (S2). Among the structures shown below, from the viewpoint of simplicity of synthesis, (Y-2) or (Y-13) is more preferable.

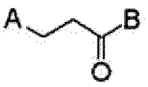
(Y-1)

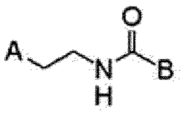
(Y-2)

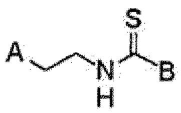
(Y-3)

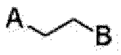
(Y-4)

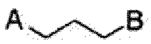
(Y-5)

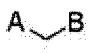
(Y-6)

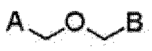
(Y-7)

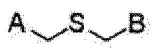
(Y-8)

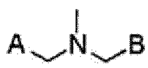
(Y-9)

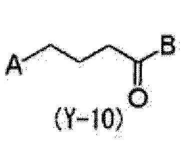
(Y-10)

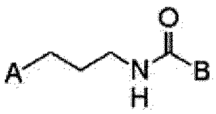
(Y-11)

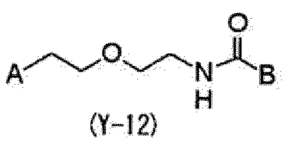
(Y-12)

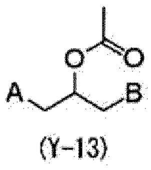
(Y-13)

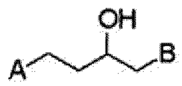
(Y-14)

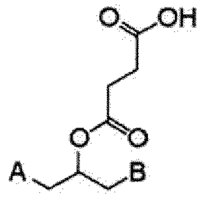
(Y-15)

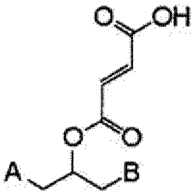
(Y-16)

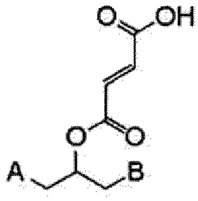
(Y-17)

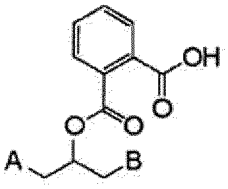
(Y-18)

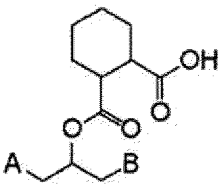
(Y-19)

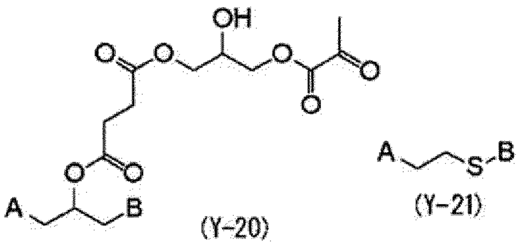
(Y-20)

(Y-21)

In Formula (S1) and Formula (S2), $Z^1$ and $Z^2$ each independently represent a hydrogen atom or a monovalent substituent. A structure of the above-described substituent is not particularly limited, but specific examples thereof include an alkyl group, a hydroxyl group, an alkoxy group, an aryloxy group, a heteroaryloxy group, an alkylthioether group, an arylthioether group, a heteroarylthioether group, and an amino group. Among these, from the viewpoint of particularly improving the dispersibility, the groups represented by $Z^1$ and $Z^2$ are each independently preferably an alkyl group having 5 to 24 carbon atoms or an alkoxy group having 5 to 24 carbon atoms, and more preferably a branched alkyl group having 5 to 24 carbon atoms, a cyclic alkyl group having 5 to 24 carbon atoms, or an alkoxy group having 5 to 24 carbon atoms. The alkyl group included in the alkoxy group may be linear, branched, or cyclic.

In addition, the substituent represented by $Z^1$ and $Z^2$ is also preferably a group containing a curable group such as a (meth)acryloyl group, an epoxy group, and/or an oxetanyl group.

In addition, the substituent represented by $Z^1$ and $Z^2$ may be a group containing an onium structure.

In Formula (S1) and Formula (S2), n and m each independently represent an integer of 6 to 500. n and m are each preferably an integer of 10 or more and still more preferably an integer of 20 or more.

In Formula (S1) and Formula (S2), j and k each independently represent an integer of 2 to 8. Formulae j and k are preferably an integer of 4 to 6 and more preferably 5.

In addition, in Formula (S1), a plurality of $C_jH_{2j}$'s may be the same or different from each other, and in Formula (S2), a plurality of $C_kH_{2k}$'s may be the same or different from each other.

The repeating unit represented by Formula (S1) is more preferably a repeating unit represented by Formula (S1A).

In addition, the repeating unit represented by Formula (S2) is more preferably a repeating unit represented by Formula (S2A).

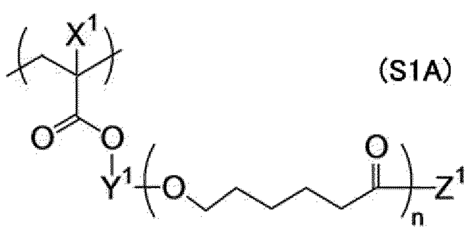
(S1A)

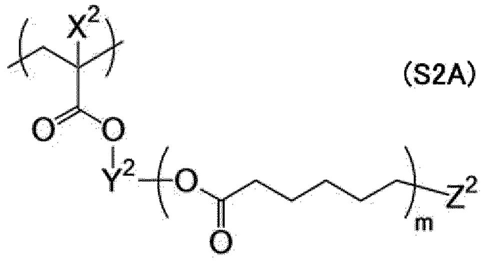

(S2A)

In Formula (S1A), $X^1$, $Y^1$, $Z^1$, and n have the same meanings as $X^1$, $Y^1$, $Z^1$, and n in Formula (S1), and preferred ranges thereof are also the same. In Formula (S2A), $X^2$, $Y^2$, $Z^2$, and m have the same meanings as $X^2$, $Y^2$, $Z^2$, and m in Formula (S2), and preferred ranges thereof are also the same.

In the polymer dispersant of the aspect 1, a content of the repeating unit represented by Formula (S1) and Formula (S2) is, for example, 2% to 100% by mass, preferably 2% to 95% by mass, more preferably 2% to 90% by mass, still more preferably 5% to 80% by mass, and particularly preferably 5% to 60% by mass with respect to all repeating units of the polymer dispersant of the aspect 1.

In addition, the polymer dispersant of the aspect 1 may include a hydrophobic repeating unit which is different from the repeating unit represented by Formula (S1) and Formula (S2) (in other words, which does not correspond to the repeating unit represented by Formula (S1) and Formula (S2)). Here, in the present specification, the hydrophobic repeating unit is a repeating unit which does not have an acid group (for example, a carboxylic acid group, a sulfonic acid group, a phosphoric acid group, a phenolic hydroxyl group, or the like).

The hydrophobic repeating unit is preferably a repeating unit derived from (corresponding to) a compound (monomer) having a ClogP value of 1.2 or more, and more preferably a repeating unit derived from a compound having a ClogP value of 1.2 to 8.

The ClogP value is a value calculated by a program "CLOGP" available from Daylight Chemical Information System, Inc. This program provides a value of "calculated logP" calculated by the fragment approach (see the following documents) of Hansch and Leo. The fragment approach is based on a chemical structure of a compound, and the logP value of the compound is estimated by dividing the chemical structure into partial structures (fragments) and summing up degrees of contribution to logP which are assigned to the fragments. Details thereof are described in the following documents. In the present specification, a ClogP value calculated by a program CLOGP v4.82 is used.

A. J. Leo, Comprehensive Medicinal Chemistry, Vol. 4, C. Hansch, P. G. Sammnens, J. B. Taylor and C. A. Ramsden, Eds., p. 295, Pergamon Press, 1990, C. Hansch & A. J. Leo. Substituent Constants For Correlation Analysis in Chemistry and Biology. John Wiley & Sons. A. J. Leo. Calculating logPoct from structure. Chem. Rev., 93, 1281 to 1306, 1993.

The logP refers to a common logarithm of a partition coefficient P, is a physical property value that shows how a certain organic compound is partitioned in an equilibrium of a two-phase system consisting of oil (generally, 1-octanol) and water by using a quantitative numerical value, and is expressed by the following expression.

$$\log P = \log(Coil/Cwater)$$

In the expression, Coil represents a molar concentration of a compound in an oil phase, and Cwater represents a molar concentration of the compound in a water phase.

The greater the positive logP value based on 0, the higher the oil solubility, and the greater the absolute value of negative logP, the higher the water solubility. Accordingly, the value of logP has a negative correlation with the water solubility of an organic compound and is widely used as a parameter for estimating the hydrophilicity and hydrophobicity of an organic compound.

The polymer dispersant of the aspect 1 preferably includes, as the hydrophobic repeating unit, one or more repeating units selected from repeating units derived from monomers represented by Formulae (i) to (iii).

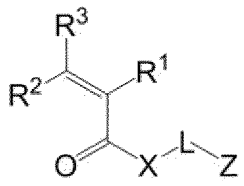

( i )

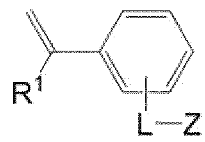

(ii)

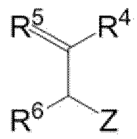

(iii)

In Formulae (i) to (iii), $R^1$, $R^2$, and $R^3$ each independently represent a hydrogen atom, a halogen atom (for example, a fluorine atom, a chlorine atom, a bromine atom, or the like), or an alkyl group (for example, a methyl group, an ethyl group, a propyl group, or the like) having 1 to 6 carbon atoms.

$R^1$, $R^2$, and $R^3$ are each preferably a hydrogen atom or an alkyl group having 1 to 3 carbon atoms, and more preferably a hydrogen atom or a methyl group. $R^2$ and $R^3$ are each still more preferably a hydrogen atom.

X represents -O- or -NH-, and preferably -O-.

L is a single bond or a divalent linking group. Examples of the divalent linking group include a divalent aliphatic group (for example, a substituted or unsubstituted alkylene group, a substituted or unsubstituted alkenylene group, a substituted or unsubstituted alkynylene group, or the like), a divalent aromatic group (for example, a substituted or unsubstituted arylene group or the like), a divalent heterocyclic group, an oxygen atom (-O-), a sulfur atom (-S-), a substituted or unsubstituted divalent amino group ($-NR^{31}-$; here, $R^{31}$ represents a hydrogen atom, an aliphatic group, an aromatic group, or a heterocyclic group), a carbonyl group (-CO-), and a combination thereof.

The divalent aliphatic group may have a cyclic structure or a branched structure. The number of carbon atoms in the aliphatic group is preferably 1 to 20, more preferably 1 to 15, and still more preferably 1 to 10. The aliphatic group may be an unsaturated aliphatic group or a saturated aliphatic group, but is preferably a saturated aliphatic group. In addition, the aliphatic group may have a substituent. Examples of the substituent include a halogen atom, an aromatic group, and a heterocyclic group.

The number of carbon atoms in the divalent aromatic group is preferably 6 to 20, more preferably 6 to 15, and still more preferably 6 to 10. In addition, the aromatic group may have a substituent. Examples of the substituent include a halogen atom, an aliphatic group, an aromatic group, and a heterocyclic group.

The divalent heterocyclic group preferably includes a 5-membered ring or a 6-membered ring as a heterocyclic ring. The heterocyclic ring may be fused with another heterocyclic ring, an aliphatic ring, or an aromatic ring. In addition, the heterocyclic group may have a substituent. Examples of the substituent include a halogen atom, a hydroxyl group, an oxo group (=O), a thioxo group (=S), an imino group (=NH), a substituted imino group ($=N-R^{32}$; here, $R^{32}$ represents an aliphatic group, an aromatic group, or a heterocyclic group), an aliphatic group, an aromatic group, and a heterocyclic group.

L is preferably a single bond, an alkylene group, or a divalent linking group having an oxyalkylene structure. The oxyalkylene structure is more preferably an oxyethylene structure or an oxypropylene structure. Moreover, L may have a polyoxyalkylene structure which includes two or more repeating oxyalkylene structures. As the polyoxyalkylene structure, a polyoxyethylene structure or a polyoxypropylene structure is preferable. The polyoxyethylene structure is represented by $-(OCH_2CH_2)_n-$, and n is preferably an integer of 2 or more and more preferably an integer of 2 to 10.

Examples of Z include an aliphatic group (for example, a substituted or unsubstituted alkyl group and a substituted or unsubstituted unsaturated alkyl group), an aromatic group (for example, a substituted or unsubstituted aryl group), a heterocyclic group, and a combination thereof. These groups may include one or more selected from the group consisting of an oxygen atom (-O-), a sulfur atom (-S-), a substituted or unsubstituted divalent amino group ($-NR^{31}-$; here, $R^{31}$ represents a hydrogen atom, an aliphatic group, an aromatic group, or a heterocyclic group), and a carbonyl group (-CO-).

However, Z does not include an acid group (a carboxyl group, a phosphoric acid group, a sulfo group, and a phenolic hydroxyl group) as the substituent.

The aliphatic group may have a cyclic structure or a branched structure.

The number of carbon atoms in the aliphatic group is preferably 1 to 20, more preferably 1 to 15, and still more preferably 1 to 10.

Examples of the aliphatic group including a cyclic structure include a ring assembly hydrocarbon group and a crosslinked cyclic hydrocarbon group. Examples of the ring assembly hydrocarbon group include a bicyclohexyl group, a perhydronaphthalenyl group, a biphenyl group, and a 4-cyclohexylphenyl group. Examples of the crosslinked cyclic hydrocarbon ring include a bicyclic hydrocarbon ring such as a pinane ring, a norbornane ring, and a bicyclooctane ring

(a bicyclo[2.2.2]octane ring, a bicyclo[3.2.1]octane ring, or the like); a tricyclic hydrocarbon ring such as a homobredane ring, an adamantane ring, a tricyclo[5.2.1.$0^{2,6}$]decane ring, and a tricyclo[4.3.1.$1^{2,5}$]undecane ring; a tetracyclic hydrocarbon ring such as a tetracyclo[4.4.0.$1^{2,5}$.$1^{7,10}$]dodecane ring and a perhydro-1,4-methano-5,8-methanonaphthalene ring; and a fused cyclic hydrocarbon ring (for example, a fused ring in which a plurality of 5- to 8-membered cycloalkane rings are fused, such as a perhydronaphthalene (decalin) ring, a perhydroanthracene ring, a perhydrophenanthrene ring, a perhydroacenaphthene ring, a perhydrofluorene ring, a perhydroindene ring, and a perhydrophenalene ring).

As the aliphatic group, a saturated aliphatic group is more preferred than an unsaturated aliphatic group. In addition, the aliphatic group may have a substituent. Examples of the substituent include a halogen atom, an aromatic group, and a heterocyclic group.

The number of carbon atoms in the aromatic group is preferably 6 to 20, more preferably 6 to 15, and still more preferably 6 to 10. In addition, the aromatic group may have a substituent. Examples of the substituent include a halogen atom, an aliphatic group, an aromatic group, and a heterocyclic group.

It is preferable that the heterocyclic group includes a 5-membered ring or a 6-membered ring as a heterocyclic ring. The heterocyclic ring may be fused with another heterocyclic ring, an aliphatic ring, or an aromatic ring. In addition, the heterocyclic group may have a substituent. Examples of the substituent include a halogen atom, a hydroxyl group, an oxo group (=O), a thioxo group (=S), an imino group (=NH), a substituted imino group (=N-$R^{32}$, where $R^{32}$ is an aliphatic group, an aromatic group, or a heterocyclic group), an aliphatic group, an aromatic group, and a heterocyclic group.

In Formula (iii), $R^4$, $R^5$, and $R^6$ each independently represent a hydrogen atom, a halogen atom (for example, a fluorine atom, a chlorine atom, a bromine atom, or the like), an alkyl group (for example, a methyl group, an ethyl group, a propyl group, or the like) having 1 to 6 carbon atoms, Z, or L-Z. Here, L and Z have the same meanings as L and Z in Formulae (i) and (ii) described above, respectively. $R^4$, $R^5$, and $R^6$ are each preferably a hydrogen atom or an alkyl group having 1 to 3 carbon atoms, and more preferably a hydrogen atom.

The monomer represented by Formula (i) is preferably a compound in which $R^1$, $R^2$, and $R^3$ are each a hydrogen atom or a methyl group, L is a single bond, an alkylene group, or a divalent linking group including an oxyalkylene structure, X is -O- or -NH-, and Z is an aliphatic group, a heterocyclic group, or an aromatic group.

In addition, the monomer represented by Formula (ii) is preferably a compound in which $R^1$ is a hydrogen atom or a methyl group, L is an alkylene group, and Z is an aliphatic group, a heterocyclic group, or an aromatic group.

Moreover, the monomer represented by Formula (iii) is preferably a compound in which $R^4$, $R^5$, and $R^6$ are each a hydrogen atom or a methyl group, and Z is an aliphatic group, a heterocyclic group, or an aromatic group.

Examples of typical compounds represented by Formulae (i) to (iii) include radically polymerizable compounds selected from acrylic acid esters, methacrylic acid esters, and styrenes. Furthermore, regarding the examples of the typical compounds represented by Formulae (i) to (iii), reference can be made to the compounds described in paragraphs 0089 to 0093 of JP2013-249417A, the contents of which are incorporated into the present specification.

In a case where the polymer dispersant of the aspect 1 includes a hydrophobic repeating unit, a content of the hydrophobic repeating unit is preferably 10% to 90% by mass, and more preferably 20% to 80% by mass with respect to all repeating units of the polymer dispersant of the aspect 1.

· Functional group capable of interacting with magnetic particles

It is also preferable that the polymer dispersant of the aspect 1 has a functional group capable of interacting with the magnetic particles.

Examples of the functional group capable of interacting with the magnetic particles include an acid group, a basic group, a coordinating group, and a reactive functional group. From the viewpoint that the effect of the present invention is more excellent, it is preferably one or more of an acid group and a basic group, and more preferably a basic group.

The polymer dispersant of the aspect 1 preferably further includes a repeating unit including the functional group capable of interacting with the magnetic particles; and it is preferable to include one or more selected from the group consisting of a repeating unit including an acid group, a repeating unit including a basic group, a repeating unit including a coordinating group, and a repeating unit having a reactive functional group, more preferable to include one or more of a repeating unit including an acid group or a repeating unit including a basic group, and still more preferable to include a repeating unit including a basic group.

The repeating unit including the functional group capable of interacting with the magnetic particles is preferably a repeating unit which is different from the above-described repeating unit represented by Formula (S1) or Formula (S2) and the hydrophobic repeating unit.

Examples of the acid group which is the functional group capable of interacting with the magnetic particles include a carboxylic acid group, a sulfonic acid group, a phosphoric acid group, and a phenolic hydroxyl group; and a carboxylic acid group, a sulfonic acid group, or a phosphoric acid group is preferable, and a carboxylic acid group is

more preferable.

In a case where the polymer dispersant of the aspect 1 includes a repeating unit including an acid group, a content of the repeating unit including an acid group is preferably 5% to 80% by mass, more preferably 10% to 60% by mass, and still more preferably 20% to 60% by mass with respect to all repeating units of the polymer dispersant of the aspect 1.

Examples of the basic group which is the functional group capable of interacting with the magnetic particles include an amine-based adsorptive group.

In a case where the polymer dispersant of the aspect 1 includes a repeating unit including a basic group, a content of the repeating unit including a basic group is preferably 1% to 60% by mass and more preferably 10% to 50% by mass with respect to all repeating units of the polymer dispersant of the aspect 1.

Examples of the coordinating group and the reactive functional group, which are the functional group capable of interacting with the magnetic particles, include an acetylacetoxy group, a trialkoxysilyl group, an isocyanate group, an acid anhydride, and an acid chloride; and an acetylacetoxy group is preferable.

In a case where the polymer dispersant of the aspect 1 includes one or more repeating units selected from the group consisting of a repeating unit including a coordinating group and a repeating unit including a reactive functional group, the total content of these repeating units is preferably 1% to 60% by mass and more preferably 1% to 30% by mass with respect to all repeating units of the polymer dispersant of the aspect 1.

Examples of the repeating unit including the functional group capable of interacting with the magnetic particles include repeating units derived from a monomer represented by Formula (iv) or (v); repeating units derived from a monomer such as methacrylic acid, crotonic acid, isocrotonic acid, acrylic acid, acrylic acid dimer, acrylic acid oligomer, maleic acid, itaconic acid, fumaric acid, 4-vinylbenzoic acid, vinylphenol, and 4-hydroxyphenylmethacrylamide; and reaction products of a compound including an addition-polymerizable double bond and a hydroxyl group in the molecule (for example, 2-hydroxyethyl methacrylate) and one or more selected from the group consisting of succinic acid anhydride, phthalic acid anhydride, tetrahydroxyphthalic acid anhydride, trimellitic acid anhydride, and pyromellitic acid anhydride.

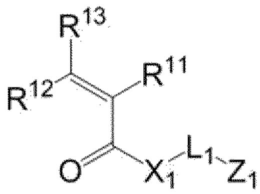
(iv)

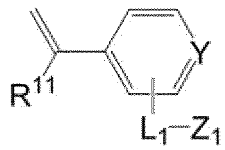
(v)

In Formulae (iv) and (v), $R^{11}$, $R^{12}$, and $R^{13}$ each independently represent a hydrogen atom, a halogen atom (for example, a fluorine atom, a chlorine atom, a bromine atom, or the like), or an alkyl group (for example, a methyl group, an ethyl group, a propyl group, or the like) having 1 to 6 carbon atoms.

In Formulae (iv) and (v), $R^{11}$, $R^{12}$, and $R^{13}$ are each preferably a hydrogen atom or an alkyl group having 1 to 3 carbon atoms, and more preferably a hydrogen atom or a methyl group.

In General Formula (iv), $R^{12}$ and $R^{13}$ are each still more preferably a hydrogen atom.

In Formula (iv), $X_1$ represents -O- or -NH-, and -O- is preferable.

In addition, in Formula (v), Y represents a methine group or a nitrogen atom.

In addition, in Formulae (iv) and (v), $L_1$ represents a single bond or a divalent linking group. The divalent linking group has the same definition as the divalent linking group represented by L in Formula (i) described above.

Among these, as $L_1$, a single bond, an alkylene group, or a divalent linking group including an oxyalkylene structure is preferable, a single bond or an alkylene group is more preferable, and a single bond or an alkylene group having 1 to 6 carbon atoms is still more preferable.

The above-described oxyalkylene structure is more preferably an oxyethylene structure or an oxypropylene structure. Moreover, $L_1$ may have a polyoxyalkylene structure which includes two or more repeating oxyalkylene structures. As the polyoxyalkylene structure, a polyoxyethylene structure or a polyoxypropylene structure is preferable. The polyoxyethylene structure is represented by $-(OCH_2CH_2)_n-$, and n is preferably an integer of 2 or more and more preferably an integer of 2 to 10.

In Formulae (iv) and (v), $Z_1$ represents the functional group capable of interacting with the magnetic particles,

and is preferably a carboxylic acid group or an amine-based adsorptive group.

The monomer represented by Formula (iv) is preferably a compound in which $R^{11}$, $R^{12}$, and $R^{13}$ are each independently a hydrogen atom or a methyl group, $L_1$ is an alkylene group, $X_1$ is -O- or -NH-, and $Z_1$ is an amine-based adsorptive group or a carboxylic acid group.

The monomer represented by Formula (v) is preferably a compound in which $R^{11}$ is a hydrogen atom or a methyl group, $L_1$ is an alkylene group, $Z_1$ is an amine-based adsorptive group or a carboxylic acid group, and Y is a methine group.

In a case where the polymer dispersant of the aspect 1 includes a repeating unit including the functional group capable of interacting with the magnetic particles, a content thereof is preferably 1% to 95% by mass, more preferably 20% to 90% by mass, still more preferably 40% to 90% by mass, and particularly preferably 60% to 90% by mass with respect to all repeating units of the polymer dispersant of the aspect 1.

· Curable group and repeating unit including curable group

The polymer dispersant of the aspect 1 may include a curable group.

Examples of the curable group include an ethylenically unsaturated group, an epoxy group, and an oxetanyl group. The ethylenically unsaturated group is not particularly limited, and examples thereof include a (meth)acryloyl group, a vinyl group, and a styryl group, and a (meth)acryloyl group is preferable.

Among these, the polymer dispersant of the aspect 1 preferably includes a repeating unit including a curable group in a side chain.

In a case where the polymer dispersant of the aspect 1 includes a repeating unit including a curable group, a content thereof is preferably 1% to 30% by mass and more preferably 1% to 15% by mass with respect to all repeating units of the polymer dispersant of the aspect 1.

· Other repeating units

For the purpose of improving various performances such as a film forming ability, as long as the effect of the present invention is not impaired, the polymer dispersant of the aspect 1 may further have other repeating units having various functions, which are different from the above-mentioned repeating units.

Examples of such other repeating units include repeating units derived from radically polymerizable compounds selected from acrylonitriles, methacrylonitriles, and the like.

In the polymer dispersant of the aspect 1, one kind or two or more kinds of these other repeating units can be used, and a content thereof is preferably, for example, 0% to 50% by mass with respect to all repeating units of the polymer dispersant of the aspect 1.

(Polymer dispersant of aspect 2)

The polymer dispersant of the aspect 2 is a polymer dispersant including a repeating unit including a polyalkyleneimine structure and a polyester structure. It is preferable that the polymer dispersant of the aspect 2 includes the polyalkyleneimine structure in a main chain and includes the polyester structure as a graft chain.

The above-described polyalkyleneimine structure is a polymerization structure including two or more identical or different alkyleneimine chains. Specific examples of the alkyleneimine chain include alkyleneimine chains represented by Formulae (4A) and (4B). The polyalkyleneimine structure is also preferably a structure including both of an alkylimine chain represented by Formula (4A) and an alkyleneimine chain represented by Formula (4B).

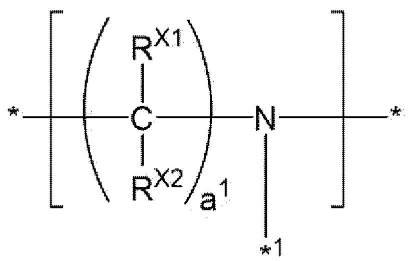

(4A)

In Formula (4A), $R^{X1}$ and $R^{X2}$ each independently represent a hydrogen atom or an alkyl group. $a^1$ represents an integer of 2 or more. $*^1$ represents a bonding position with a polyester chain, with an adjacent alkyleneimine chain, or with a hydrogen atom or a substituent.

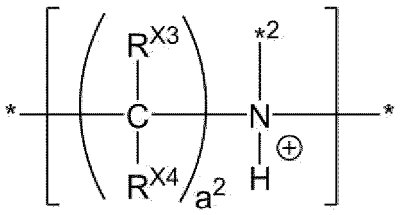

(4B)

In Formula (4B), $R^{X3}$ and $R^{X4}$ each independently represent a hydrogen atom or an alkyl group. $a^2$ represents an integer of 2 or more. The alkyleneimine chain represented by Formula (4B) is bonded to a polyester chain having an anionic group by forming a salt-crosslinked group from $N^+$ specified in Formula (4B) and the anionic group included in the polyester chain.

* in Formulae (4A) and (4B) and $*^2$ in Formula (4B) each independently represent a position bonded to an adjacent alkyleneimine chain or to a hydrogen atom or a substituent.

Among these, * in Formula (4A) and Formula (4B) preferably represents a position where an adjacent alkyleneimine chain is bonded.

$R^{X1}$ and $R^{X2}$ in Formula (4A) and $R^{X3}$ and $R^{X4}$ in Formula (4B) each independently represent a hydrogen atom or an alkyl group.

The number of carbon atoms in the alkyl group is preferably 1 to 6 and more preferably 1 to 3.

In Formula (4A), both $R^{X1}$ and $R^{X2}$ are preferably a hydrogen atom.

In Formula (4B), both $R^{X3}$ and $R^{X4}$ are preferably a hydrogen atom.

$a^1$ in Formula (4A) and $a^2$ in Formula (4B) are not particularly limited as long as they are an integer of 2 or more. The upper limit value thereof is preferably 10 or less, more preferably 6 or less, still more preferably 4 or less, particularly more preferably 2 or 3, and most preferably 2.

In Formula (4A) and Formula (4B), * represents a bonding position with an adjacent alkyleneimine chain or with a hydrogen atom or a substituent.

Examples of the above-described substituent include a substituent such as an alkyl group (for example, an alkyl group having 1 to 6 carbon atoms). In addition, a polyester chain may be bonded as the substituent.

The alkyleneimine chain represented by Formula (4A) is preferably linked to the polyester chain at the position of $*^1$ described above. Specifically, it is preferable that a carbonyl carbon in the polyester chain is bonded at the position of $*^1$ described above.

Examples of the above-described polyester chain include a polyester chain represented by Formula (5A).

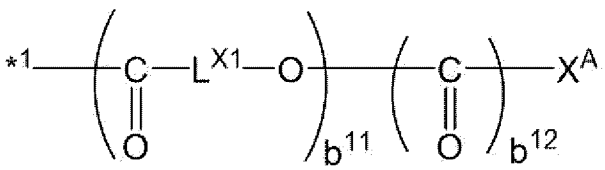

(5A)

In a case where the alkyleneimine chain is the alkyleneimine chain represented by Formula (4B), it is preferable that the polyester chain includes an anionic group (preferably, oxygen anion $O^-$), and this anionic group and $N^+$ in Formula (4B) form a salt-crosslinked group.

Examples of such a polyester chain include a polyester chain represented by Formula (5B).

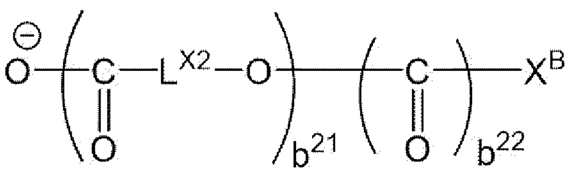

(5B)

$L^{X1}$ in Formula (5A) and $L^{X2}$ in Formula (5B) each independently represent a divalent linking group. Preferred examples of the divalent linking group include an alkylene group having 3 to 30 carbon atoms.

$b^{11}$ in Formula (5A) and $b^{21}$ in Formula (5B) each independently represent an integer of 2 or more, preferably an integer of 6 or more, and the upper limit thereof is, for example, 200 or less.

$b^{12}$ in Formula (5A) and $b^{22}$ in Formula (5B) each independently represent 0 or 1.

$X^A$ in Formula (5A) and $X^B$ in Formula (5B) each independently represent a hydrogen atom or a substituent. Examples of the substituent include an alkyl group, an alkoxy group, a polyalkyleneoxyalkyl group, and an aryl group.

Examples of the number of carbon atoms in the above-described alkyl group (which may be linear, branched, or cyclic) and an alkyl group included in the above-described alkoxy group (which may be linear, branched, or cyclic) include 1 to 30, and 1 to 10 are preferable. In addition, the above-described alkyl group may further have a substituent, and examples of the substituent include a hydroxyl group and a halogen atom (including a fluorine atom, a chlorine atom, a bromine atom, an iodine atom, and the like).

The polyalkyleneoxyalkyl group is a substituent represented by $R^{X6}(OR^{X7})_p(O)_q$-. $R^{X6}$ represents an alkyl group, $R^{X7}$ represents an alkylene group, p represents an integer of 2 or more, and q represents 0 or 1.

The alkyl group represented by $R^{X6}$ is synonymous with the alkyl group represented by $X^A$. In addition, examples of the alkylene group represented by $R^{X7}$ include a group obtained by removing one hydrogen atom from the alkyl group represented by $X^A$.

p is an integer of 2 or more, and the upper limit value thereof is, for example, 10 or less, preferably 5 or less.

Examples of the aryl group include an aryl group having 6 to 24 carbon atoms (which may be monocyclic or polycyclic).

The above-described aryl group may further have a substituent, and examples of the substituent include an alkyl group, a halogen atom, and a cyano group.

The above-described polyester chain preferably has a decyclized structure of a lactone such as ε-caprolactone, δ-caprolactone, β-propiolactone, γ-butyrolactone,δ-valerolactone, γ-valerolactone, enantholactone, β-butyrolactone, γ-hexanolactone, γ-octanolactone, δ-hexanolactone, δ-octanolactone, δ-dodecanolactone, α-methyl-γ-butyrolactone, and lactide (which may be an L-form or a D-form), and more preferably has a decyclized structure of ε-caprolactone or δ-valerolactone.

The above-described repeating unit including a polyalkyleneimine structure and a polyester structure can be synthesized according to a synthesis method described in JP5923557B.

<Solvent>

The precursor composition preferably contains a solvent. Since the precursor composition contains at least one of a solvent or a liquid reactive monomer described later, in a case where the precursor composition does not contain a solvent, the precursor composition contains the liquid reactive monomer described later.

Examples of the solvent include water and an organic solvent, and an organic solvent is preferable.

From the viewpoint of coating properties, a boiling point of the solvent is preferably 100°C to 400°C and more preferably 140°C to 300°C. In the present specification, the boiling point means a standard boiling point unless otherwise specified.

Examples of the organic solvent include acetone, methyl ethyl ketone, cyclohexane, ethyl acetate, ethylene dichloride, tetrahydrofuran, toluene, ethylene glycol monomethyl ether, ethylene glycol monoethyl ether, ethylene glycol dimethyl ether, propylene glycol monomethyl ether, propylene glycol monoethyl ether, acetylacetone, cyclohexanone, cyclopentanone, diacetone alcohol, ethylene glycol monomethyl ether acetate, ethylene glycol ethyl ether acetate, ethylene glycol monoisopropyl ether, ethylene glycol monobutyl ether acetate, 3-methoxypropanol, methoxymethoxyethanol, diethylene glycol monomethyl ether, diethylene glycol monoethyl ether, diethylene glycol dimethyl ether, diethylene glycol diethyl ether, propylene glycol monomethyl ether acetate, propylene glycol monoethyl ether acetate, 1,4-butanediol diacetate, 3-methoxypropyl acetate, N,N-dimethylformamide, dimethyl sulfoxide, γ-butyrolactone,ethyl acetate, butyl acetate, methyl lactate, N-methyl-2-pyrrolidone, and ethyl lactate, but the organic solvent is not limited thereto.

In a case where the precursor composition contains a solvent, from the viewpoint that the effect of the present invention is more excellent, a content of the solvent is preferably 1% to 25% by mass, more preferably 1% to 15% by mass, and still more preferably 1% to 12% by mass with respect to the total mass of the composition.

It is also preferable that the precursor composition does not substantially contain the solvent. The fact that the precursor composition not substantially contain the solvent means that the content of the solvent in the precursor composition is less than 1% by mass with respect to the total mass of the composition, and for example, the content thereof is preferably 0% by mass or more and less than 1% by mass, more preferably 0% to 0.5% by mass, and still more preferably 0% to 0.1% by mass.

<Binder component>

The precursor composition preferably contains one or more components (binder components) selected from the group consisting of a non-reactive binder component and a reactive monomer which is a reactive binder component. That is, the binder component may be the non-reactive binder component itself or may be the reactive monomer (resin

precursor).

The binder component is a component different from the specific dispersant described above and a rheology control agent (thixotropic agent) described later.

The reactive monomer which is a reactive binder component is a component which has a reactive group and can form a resin by being polymerized and/or crosslinked by a predetermined curing treatment with heat, light (ultraviolet light or the like), or the like. The resin thus formed functions as a binder (binding material) in a cured product.

The reactive group is not particularly limited as long as it is a known polymerizable group (for example, a photopolymerizable group or a thermally polymerizable group), and examples thereof include a group including an ethylenically unsaturated group and a ring-polymerizable group such as an epoxy group and an oxetanyl group.

Specific examples of the reactive monomer include a thermally polymerizable compound and a photopolymerizable compound. These compounds may be any of a monomer, an oligomer, or a polymer.

In addition, the reactive monomer may be liquid or solid.

From the viewpoint of more excellent hole filling property, the reactive monomer is preferably liquid.

The liquid reactive monomer refers to a compound having a viscosity of 100 Pa s or less at normal temperature (25°C) and including one or more reactive groups.

The viscosity can be measured by MCR-102 (manufactured by Anton Paar GmbH).

The liquid reactive monomer is a liquid in specific examples of the binder component, which will be described later, and corresponds to a compound having a reactive group. Specific examples thereof include a liquid compound including a group including an ethylenically unsaturated group, a liquid epoxy compound, and a liquid oxetanyl compound.

In a case where the precursor composition contains a liquid reactive monomer, from the viewpoint that the effect of the present invention is more excellent, a content thereof is preferably 0.5% to 20% by mass, more preferably 1.0% to 15% by mass, still more preferably 1.0% to 12% by mass, and particularly preferably 1.0% to 10% by mass with respect to the total solid content of the composition.

In a case where the precursor composition contains a liquid reactive monomer, from the viewpoint that the effect of the present invention is more excellent, a content thereof is preferably 0.5% to 20% by mass, more preferably 1.0% to 15% by mass, still more preferably 1.0% to 12% by mass, and particularly preferably 1.0% to 10% by mass with respect to the total mass of the composition.

As described above, the precursor composition contains at least one of the solvent or the liquid reactive monomer, and may contain both thereof.

In a case where the reactive monomer is contained as the binder component, it is preferable that the precursor composition further contains a curing agent and/or a curing accelerator, which will be described later.

In addition, the non-reactive binder component is a binder component having no reactive group, and it is intended that the non-reactive binder component itself functions as a binder (binding material).

From the viewpoint that the effect of the present invention is more excellent, it is preferable that the binder component includes at least one of an epoxy compound (preferably, a liquid epoxy compound) or an oxetane compound (preferably, a liquid oxetanyl compound). The epoxy compound means a compound having one or more epoxy groups in the molecule, and the oxetane compound means a compound having one or more oxetanyl groups in the molecule.

A content of the binder component in the precursor composition is preferably 0.1% to 20% by mass, more preferably 1.0% to 15% by mass, still more preferably 1.0% to 12% by mass, and particularly preferably 1.0% to 10% by mass with respect to the total solid content of the composition.

Hereinafter, specific examples of the binder component will be described.

Examples of a suitable aspect of the binder component include a (meth)acrylic resin, an epoxy resin, an ene-thiol resin, a polycarbonate resin, a polyvinyl acetal resin, a polyether resin, a polyarylate resin, a polysulfone resin, a polyethersulfone resin, a polyphenylene resin, a polyarylene ether phosphine oxide resin, a polyimide resin, a polyamidoimide resin, a polyolefin resin, a cyclic olefin resin, a polyester resin, a styrene resin, a polyvinyl acetal resin, and a phenoxy resin. These resins may be used alone or as a mixture of two or more kinds thereof.

Examples of the epoxy resin include an epoxy resin which is a glycidyl etherified product of a phenol compound, an epoxy resin which is a glycidyl etherified product of various novolac resins, an alicyclic epoxy resin, an aliphatic epoxy resin, a heterocyclic epoxy resin, a glycidyl ester-based epoxy resin, a glycidyl amine-based epoxy resin, an epoxy resin obtained by glycidylating halogenated phenols, a condensate of a silicon compound having an epoxy group and another silicon compound, and a copolymer of a polymerizable unsaturated compound having an epoxy group and another polymerizable unsaturated compound.

In addition, as the epoxy resin, MARPROOF G-0150M, G-0105SA, G-0130SP, G-0250SP, G-1005S, G-1005SA, G-1010S, G-2050M, G-01100, or G-01758 (manufactured by NOF Corporation, an epoxy group-containing polymer) can also be used.

From the viewpoint of improving heat resistance, as the cyclic olefin resin, a norbornene resin is preferable. Examples of a commercially available product of the norbornene resin include ARTON series (for example, ARTON F4520) manufactured by JSR Corporation. Examples of a commercially available product of the polyvinyl acetal resin

include "KS-1" manufactured by SEKISUI CHEMICAL CO., LTD.

Examples of a commercially available product of the phenoxy resin include "YX7553BH30" (manufactured by Mitsubishi Chemical Corporation).

In addition, examples of a suitable aspect of the binder component also include resins described in Examples of WO2016/088645A.

In addition, examples of a suitable aspect of the binder component also include a resin which has an ethylenically unsaturated group (for example, a (meth)acryloyl group) in a side chain and in which a main chain and the ethylenically unsaturated group are bonded to each other through a divalent linking group to form an alicyclic structure.

In addition, examples of a suitable aspect of the binder component also include a compound having a ring-polymerizable group such as an epoxy group and an oxetanyl group.

Examples of the compound having a ring-polymerizable group such as an epoxy group and an oxetanyl group include a polymer having an epoxy group in a side chain and a polymerizable monomer or oligomer having two or more epoxy groups in the molecule; and specific examples thereof include a bisphenol A-type epoxy resin, a bisphenol F-type epoxy resin, a phenol novolac-type epoxy resin, a cresol novolac-type epoxy resin, and an aliphatic epoxy resin.

As these resins, commercially available products may be used, or an epoxy group may be introduced into a side chain of a polymer.

With regard to commercially available products thereof, for example, the description in paragraph 0191 and the like of JP2012-155288A can be referred to, the contents of which are incorporated herein by reference.

In addition, examples thereof also include ADEKA RESIN EP-4000S, EP-40035, EP-4010S, and EP-4011S (all of which are manufactured by ADEKA CORPORATION); NC-2000, NC-3000, NC-7300, XD-1000, EPPN-501, and EPPN-502 (all of which are manufactured by ADEKA CORPORATION); and JER1031S.

In addition, specific examples of the bisphenol A-type epoxy resin and the bisphenol F-type epoxy resin include ZX1059 (manufactured by NIPPON STEEL Chemical & Material Co., Ltd.) and 828US (manufactured by Mitsubishi Chemical Corporation).

Furthermore, examples of a commercially available product of the phenol novolac-type epoxy resin include JER-157S65, JER-152, JER-154, and JER-157S70 (all of which are manufactured by Mitsubishi Chemical Corporation).

In addition, as the polymerizable monomer or oligomer having two or more epoxy groups in the molecule, it is also possible to use ZX1658GS (liquid 1,4-glycidyl cyclohexane-type epoxy resin, manufactured by NIPPON STEEL Chemical & Material Co., Ltd.), HP-4700 (naphthalene-type tetrafunctional epoxy resin, manufactured by DIC Corporation), NC3000L (biphenyl-type epoxy resin, manufactured by Nippon Kayaku Co., Ltd.), or the like.

Specific examples of the polymer having an oxetanyl group in the side chain and the polymerizable monomer or oligomer having two or more oxetanyl groups in the molecule include ARON OXETANE OXT-121, OXT-221, OX-SQ, and PNOX (all of which are manufactured by Toagosei Co., Ltd).

In a case of synthesizing the resin having an epoxy group by introducing an epoxy group into a polymer side chain, the introduction reaction can be carried out by a reaction in an organic solvent with a catalyst, for example, a tertiary amine such as triethylamine and benzylmethylamine, a quaternary ammonium salt such as dodecyltrimethylammonium chloride, tetramethylammonium chloride, and tetraethylammonium chloride, pyridine, triphenylphosphine, or the like at a reaction temperature of 50°C to 150°C for a predetermined period of time. An amount of an alicyclic epoxy unsaturated compound introduced can be controlled so that an acid value of the resin to be obtained is in a range of 5 to 200KOH·mg/g. In addition, a weight-average molecular weight of the resin can be set to be in a range of 500 to 5,000,000 (preferably 1,000 to 500,000).

Instead of the alicyclic epoxy unsaturated compound, a compound having a glycidyl group as an epoxy group, such as glycidyl (meth) acrylate and allyl glycidyl ether, may also be used. With regard to such a compound, for example, the description in paragraph 0045 and the like of JP2009-265518A can be referred to, the contents of which are incorporated herein by reference.

In addition, examples of a suitable aspect of the binder component also include a resin having an acid group, a basic group, or an amide group. The resin having an acid group, a basic group, or an amide group is suitable from the viewpoint that the resin easily exhibits a function as a dispersant for dispersing the magnetic body particles and the effect of the present invention is more excellent.

Examples of the acid group include a carboxy group, a phosphoric acid group, a sulfo group, and a phenolic hydroxyl group, and from the viewpoint that the effect of the present invention is more excellent, a carboxy group is preferable.

Examples of the basic group include an amino group (a group obtained by removing one hydrogen atom from ammonia, a primary amine, or a secondary amine) and an imino group.

In a case where the resin has an acid group, from the viewpoint that the effect of the present invention is more excellent, an acid value of the resin is preferably 10 to 500 mgKOH/g and more preferably 30 to 400 mgKOH/g.

Examples of a suitable aspect of the binder component also include a compound (hereinafter, also referred to as "ethylenically unsaturated compound") which includes a group (hereinafter, also referred to as "ethylenically unsaturated group") including an ethylenically unsaturated bond. A molecular weight (polymerization-average molecular weight) of the ethylenically unsaturated compound is preferably 2,000 or less.

As the ethylenically unsaturated compound, a compound including one or more ethylenically unsaturated bonds is preferable, a compound including two or more ethylenically unsaturated bonds is more preferable, a compound including three or more ethylenically unsaturated bonds is still more preferable, and a compound including five or more ethylenically unsaturated bonds is particularly preferable. The upper limit is, for example, 15 or less. Examples of the ethylenically unsaturated group include a vinyl group, a (meth)allyl group, and a (meth)acryloyl group.

As the ethylenically unsaturated compound, for example, compounds described in paragraph 0050 of JP2008-260927A and paragraph 0040 of JP2015-068893A can be used, the contents of which are incorporated into the present specification.

The ethylenically unsaturated compound may be in any of chemical forms such as a monomer, a prepolymer, an oligomer, a mixture thereof, and a multimer thereof.

The ethylenically unsaturated compound is preferably a tri- to pentadeca-functional (meth)acrylate compound, and more preferably a tri- to hexa-functional (meth)acrylate compound.

The ethylenically unsaturated compound is also preferably a compound having one or more ethylenically unsaturated groups and having a boiling point of 100°C or higher. Reference can be made to, for example, the compounds described in paragraph 0227 of JP2013-029760A and paragraphs 0254 to 0257 of JP2008-292970A, the contents of which are incorporated into the present specification.

The ethylenically unsaturated compound is preferably dipentaerythritol triacrylate (as a commercially available product, KAYARAD D-330; manufactured by Nippon Kayaku Co., Ltd.), dipentaerythritol tetraacrylate (as a commercially available product, KAYARAD D-320; manufactured by Nippon Kayaku Co., Ltd.), dipentaerythritol penta(meth)acrylate (as a commercially available product, KAYARAD D-310; manufactured by Nippon Kayaku Co., Ltd.), dipentaerythritol hexa(meth)acrylate (as a commercially available product, KAYARAD DPHA; manufactured by Nippon Kayaku Co., Ltd., and A-DPH-12E; manufactured by Shin-Nakamura Chemical Co., Ltd.), or a structure (for example, SR454 and SR499 commercially available from Sartomer) in which an ethylene glycol residue or a propylene glycol residue is between these (meth)acryloyl groups. Oligomer types thereof can also be used. In addition, NK ESTER A-TMMT (pentaerythritol tetraacrylate, manufactured by Shin-Nakamura Chemical Co., Ltd.) KAYARAD RP-1040, KAYARAD DPEA-12LT, KAYARAD DPHA LT, KAYARAD RP-3060, and KAYARAD DPEA-12 (all trade names, manufactured by Nippon Kayaku Co., Ltd.), and the like may be used.

The ethylenically unsaturated compound may have an acid group such as a carboxylic acid group, a sulfonic acid group, and a phosphoric acid group. The ethylenically unsaturated compound including an acid group is preferably an ester of an aliphatic polyhydroxy compound and an unsaturated carboxylic acid, more preferably an ethylenically unsaturated compound having an acid group by reacting a nonaromatic carboxylic acid anhydride with an unreacted hydroxyl group of an aliphatic polyhydroxy compound, and still more preferably a compound in which the aliphatic polyhydroxy compound in the ester is pentaerythritol and/or dipentaerythritol. Examples of a commercially available product include ARONIX TO-2349, M-305, M-510, and M-520 manufactured by Toagosei Co., Ltd.

An acid value of the ethylenically unsaturated compound including an acid group is preferably 0.1 to 40 mgKOH/g and more preferably 5 to 30 mgKOH/g. In a case where the acid value of the ethylenically unsaturated compound is 0.1 mgKOH/g or more, development dissolution characteristics are favorable, and in a case where the acid value is 40 mgKOH/g or less, the ethylenically unsaturated compound is advantageous in terms of production and/or handling. In addition, a photopolymerization performance is favorable, and curing properties are excellent.

As the ethylenically unsaturated compound, a compound including a caprolactone structure is also a preferred aspect.

The compound including a caprolactone structure is not particularly limited as long as the compound has a caprolactone structure in a molecule, and examples thereof include ε-caprolactone-modified polyfunctional (meth)acrylate which is obtained by esterifying polyhydric alcohol such as trimethylolethane, ditrimethylolethane, trimethylolpropane, ditrimethylolpropane, pentaerythritol, dipentaerythritol, tripentaerythritol, glycerin, diglycerol, and trimethylol melamine, (meth)acrylic acid, and ε-caprolactone. Among these, a compound which includes a caprolactone structure and is represented by Formula (Z-1) is preferable.

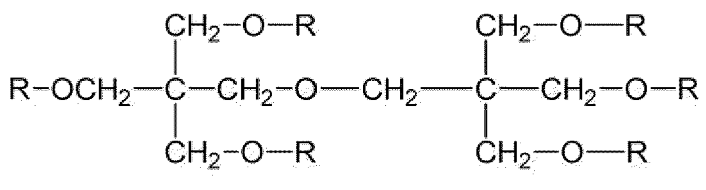

(Z-1)

In Formula (Z-1), all six R's are groups represented by Formula (Z-2), or one to five among the six R's are

groups represented by Formula (Z-2) and the others are groups represented by Formula (Z-3).

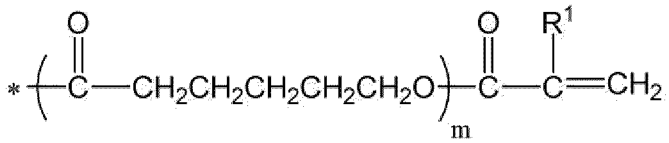

(Z-2)

In Formula (Z-2), $R^1$ represents a hydrogen atom or a methyl group, m represents a number of 1 or 2, and "*" represents a bonding site.

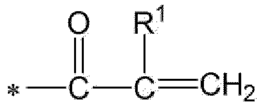

(Z-3)

In Formula (Z-3), $R^1$ represents a hydrogen atom or a methyl group, and "*" represents a bonding site.

The ethylenically unsaturated compound including a caprolactone structure is commercially available, for example, from Nippon Kayaku Co., Ltd. as KAYARAD DPCA series, and examples thereof include DPCA-20 (compound in which m is 1 in Formulae (Z-1) to (Z-3), the number of groups represented by Formula (Z-2) is 2, and $R^1$'s are all hydrogen atoms), DPCA-30 (compound in which m is 1 in Formulae (Z-1) to (Z-3), the number of groups represented by Formula (Z-2) is 3, and $R^1$'s are all hydrogen atoms), DPCA-60 (compound in which m is 1 in Formulae (Z-1) to (Z-3), the number of groups represented by Formula (Z-2) is 6, and $R^1$'s are all hydrogen atoms), and DPCA-120 (compound in which m is 2 in Formulae (Z-1) to (Z-3), the number of groups represented by Formula (Z-2) is 6, and $R^1$'s are all hydrogen atoms). In addition, examples of a commercially available product of the ethylenically unsaturated compound including a caprolactone structure also include M-350 (trade name) (trimethylolpropane triacrylate) manufactured by Toagosei Co., Ltd.

As the ethylenically unsaturated compound, a compound represented by Formula (Z-4) or (Z-5) can also be used.

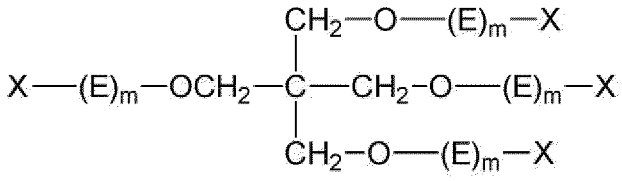

(Z-4)

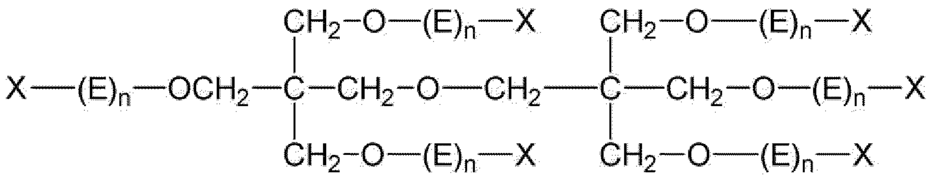

(Z-5)

In Formulae (Z-4) and (Z-5), E represents $-((CH_2)_yCH_2O)-$ or $-((CH_2)_yCH(CH_3)O)-$, y represents an integer of 0 to 10, and X represents a (meth)acryloyl group, a hydrogen atom, or a carboxylic acid group.

In Formula (Z-4), the total number of (meth)acryloyl groups is 3 or 4, m represents an integer of 0 to 10, and the sum of m's is an integer of 0 to 40.

In Formula (Z-5), the total number of (meth)acryloyl groups is 5 or 6, n represents an integer of 0 to 10, and the sum of n's is an integer of 0 to 60.

In Formula (Z-4), m is preferably an integer of 0 to 6 and more preferably an integer of 0 to 4.

In addition, the total number of m's is preferably an integer of 2 to 40, more preferably an integer of 2 to 16, and still more preferably an integer of 4 to 8.

In Formula (Z-5), n is preferably an integer of 0 to 6 and more preferably an integer of 0 to 4.

In addition, the total number of n's is preferably an integer of 3 to 60, more preferably an integer of 3 to 24, and still more preferably an integer of 6 to 12.

Furthermore, a form in which a terminal on the oxygen atom side of $-((CH_2)_yCH_2O)-$ or $((CH_2)_yCH(CH_3)O)-$ in Formula (Z-4) or Formula (Z-5) is bonded to X is preferable.

The compound represented by Formula (Z-4) or Formula (Z-5) may be used alone or in combination of two or

more thereof. In particular, aspects such as a form in which all of six X's in Formula (Z-5) are acryloyl groups, and a mixture of a compound in which all of six X's in Formula (Z-5) are acryloyl groups and a compound in which at least one among the six X's is a hydrogen atom are preferable. With such a configuration, the developability can be further improved.

Furthermore, the total content of the compounds represented by Formula (Z-4) or Formula (Z-5) in the ethylenically unsaturated compound is preferably 20% by mass or more and more preferably 50% by mass or more.

Among the compounds represented by Formula (Z-4) or Formula (Z-5), a pentaerythritol derivative and/or a dipentaerythritol derivative is more preferable.

In addition, the ethylenically unsaturated compound may include a cardo skeleton.

As the ethylenically unsaturated compound including a cardo skeleton, an ethylenically unsaturated compound including a 9,9-bisarylfluorene skeleton is preferable.

The ethylenically unsaturated compound including a cardo skeleton is not limited, and examples thereof include Oncoat EX series (manufactured by NAGASE & CO., LTD.) and OGSOL (manufactured by Osaka Gas Chemicals Co., Ltd.).

As the ethylenically unsaturated compound, a compound including an isocyanuric acid skeleton as a central nucleus is also preferable. Examples of such an ethylenically unsaturated compound include NK ESTER A-9300 (produced by Shin-Nakamura Chemical Co., Ltd.).

A content of ethylenically unsaturated groups in the ethylenically unsaturated compound (which means a value obtained by dividing the number of ethylenically unsaturated groups in the ethylenically unsaturated compound by the molecular weight (g/mol) of the ethylenically unsaturated compound) is preferably 5.0 mmol/g or more. The upper limit thereof is not particularly limited, but is generally 20.0 mmol/g or less.

Examples of a suitable aspect of the binder component also include a compound including a ring-polymerizable group such as an epoxy group and an oxetanyl group (hereinafter, also referred to as "ring-polymerizable compound"). A molecular weight (polymerization-average molecular weight) of the ring-polymerizable compound is preferably 2,000 or less.

The ring-polymerizable group is preferably an epoxy group or an oxetanyl group, and more preferably an epoxy group.

The number of ring-polymerizable groups in the ring-polymerizable compound is 1 or more, preferably 2 to 10.

In the ring-polymerizable compound, the epoxy group and/or the oxetanyl group (preferably, the epoxy group) may be fused with a cyclic group (an alicyclic group or the like). The number of carbon atoms in the cyclic group fused with the epoxy group and/or the oxetanyl group is preferably 5 to 15. In addition, in the above-described cyclic group, a portion other than a portion fused with the epoxy group and/or the oxetanyl group may be monocyclic or polycyclic. In one cyclic group, only one epoxy group or oxetanyl group may be fused, or two or more epoxy groups and/or oxetanyl groups may be fused.

Examples of the ring-polymerizable compound include a monofunctional or polyfunctional glycidyl ether compound.

The ring-polymerizable compound may be, for example, (poly)alkylene glycol diglycidyl ether.

The ring-polymerizable compound may be, for example, a glycidyl ether compound of a polyhydric alcohol having 3 or more valences, such as glycerol, sorbitol, and (poly)glycerol.

The ring-polymerizable compound may be the compound including a caprolactone structure represented by Formula (Z-1) described above, in which the group represented by Formula (Z-2) is modified to Formula (Z-2E) and the group represented by Formula (Z-3) is modified to Formula (Z-3E).

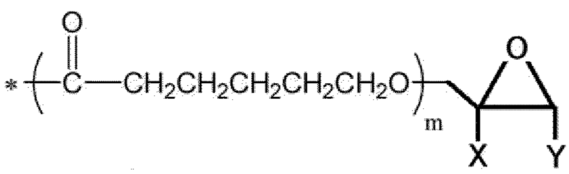

(Z-2E)

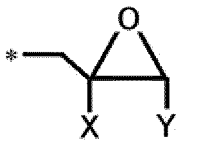

(Z-3E)

In Formula (Z-2E), m represents a number of 1 or 2, X and Y each independently represent a hydrogen atom or a substituent (preferably, an alkyl group preferably having 1 to 3 carbon atoms), and "*" represents a bonding site.

In Formula (Z-3E), X and Y each independently represent a hydrogen atom or a substituent (preferably, an

alkyl group preferably having 1 to 3 carbon atoms), and "*" represents a bonding site.

The ring-polymerizable compound may be the compound represented by Formula (Z-4) described above, in which X is modified to represent the group represented by Formula (Z-3E) or a hydrogen atom.

In Formula (Z-4) modified as described above, the total number of groups represented by Formula (Z-3E) is 2 to 4.

The ring-polymerizable compound may be the compound represented by Formula (Z-5) described above, in which X is modified to represent the group represented by Formula (Z-3E) or a hydrogen atom.

In Formula (Z-5) modified as described above, the total number of groups represented by Formula (Z-3E) is 2 to 6 (preferably 5 or 6).

The ring-polymerizable compound may be a compound having a structure in which N pieces of cyclic groups fused with the epoxy group and/or the oxetanyl group are bonded through a linking group.

N is an integer of 2 or more, preferably an integer of 2 to 6 and more preferably 2. In the above-described linking group, the total number of atoms other than hydrogen atoms is preferably 1 to 20 and more preferably 2 to 6. In a case where N is 2, examples of the above-described linking group include an alkyleneoxycarbonyl group.

Examples of a commercially available product of the ring-polymerizable compound include polyfunctional aliphatic glycidyl ether compounds such as DENACOL EX-314 and EX-512 (both of which are manufactured by Nagase ChemteX Corporation).

In addition, CELLOXIDE 2021P (manufactured by Daicel Corporation, polyfunctional epoxy monomer) can also be used as the commercially available product.

In addition, EHPE 3150 (manufactured by Daicel Corporation, polyfunctional epoxy/oxiranyl monomer) can also be used as the commercially available product.

<Rheology control agent>

From the viewpoint that the effect of the present invention is more excellent, the precursor composition preferably contains a rheology control agent.

The rheology control agent is a component which imparts thixotropic properties to the composition, in which high viscosity is exhibited in a case where a shearing force (shear rate) is low and low viscosity is exhibited in a case where a shear force (shear rate) is high.

In a case where the precursor composition contains a rheology control agent, a content of the rheology control agent is preferably 0.1 to 10% by mass, more preferably 0.1 to 6.0% by mass, and still more preferably 0.1 to 4.0% by mass with respect to the total solid content of the composition.

Examples of the rheology control agent include an organic rheology control agent and an inorganic rheology control agent, and an organic rheology control agent is preferable.

(Organic rheology control agent)

In a case where the precursor composition contains an organic rheology control agent, a content of the organic rheology control agent is preferably 0.1 to 10% by mass, more preferably 0.1 to 6.0% by mass, and still more preferably 0.1 to 4.0% by mass with respect to the total solid content of the composition.

The organic rheology control agent may be used alone or in combination of two or more kinds thereof.

Examples of the organic rheology control agent include a compound having one or more (preferably two or more) adsorptive groups and further having a steric repulsion structural group.

The adsorptive group interacts with the surface of the magnetic particles to adsorb the organic rheology control agent to the surface of the magnetic particles.

Examples of the above-described adsorptive group include an acid group, a basic group, and an amide group.

Examples of the acid group include a carboxy group, a phosphoric acid group, a sulfo group, a phenolic hydroxyl group, and an acid anhydride group thereof (an acid anhydride group of a carboxy group or the like), and from the viewpoint that the effect of the present invention is more excellent, a carboxy group is preferable.

Examples of the basic group include an amino group (a group obtained by removing one hydrogen atom from ammonia, a primary amine, or a secondary amine) and an imino group.

Among these, as the adsorptive group, a carboxy group or an amide group is preferable, and a carboxy group is more preferable.

Since the steric repulsion structural group has a sterically bulky structure, steric hindrance is introduced into the magnetic particles to which the organic rheology control agent is adsorbed, and an appropriate space is maintained between the magnetic particles. As the steric repulsion structural group, for example, a chain-like group is preferable, a long-chain fatty acid group is more preferable, and a long-chain alkyl group is still more preferable.

It is also preferable that the organic rheology control agent has a hydrogen-bonding unit. The hydrogen-bonding unit is a partial structure which functions to construct a hydrogen-bonding network between the organic rheology control

agents and between the organic rheology control agent and other components. The organic rheology control agent contributing to the formation of the network may or may not be adsorbed to the surface of the magnetic particles.

The hydrogen-bonding unit may be the same as or different from the above-described adsorptive group. In a case where the hydrogen-bonding unit is the same as the above-described adsorptive group, a part of the above-described adsorptive group is bonded to the surface of the magnetic particles, and another part functions as the hydrogen-bonding unit.

As the hydrogen-bonding unit, a carboxy group or an amide group is preferable. The carboxy group as the hydrogen-bonding unit is preferable from the viewpoint that the carboxy group is easily incorporated into a curing reaction in a case of producing a cured product, and the amide group is preferable from the viewpoint that temporal stability of the precursor composition is more excellent.

The organic rheology control agent is preferably one or more selected from the group consisting of a polycarboxylic acid (a compound having two or more carboxy groups), a polycarboxylic acid anhydride (a compound having two or more acid anhydride groups composed of carboxy groups), and an amide wax.

These compounds may be a resin or may be other than a resin.

In addition, these compounds may correspond to an aggregation control agent and/or an aggregation dispersant, which will be described later.

Examples of the organic rheology control agent include modified urea, urea-modified polyamide, fatty acid amide, polyurethane, polyamide amide, a polymer urea derivative, and salts thereof (carboxylic acid salts and the like).

The modified urea is a reaction product of an isocyanate monomer or an adduct thereof with an organic amine. The modified urea is modified with a polyoxyalkylene polyol (polyoxyethylene polyol, polyoxypropylene polyol, or the like) and/or an alkyd chain or the like. The urea-modified polyamide is, for example, a compound having a urea bond and a compound having a moderate polar group or a low polar group at a terminal. Examples of the moderate polar group or the low polar group include a polyoxyalkylene polyol (polyoxyethylene polyol, polyoxypropylene polyol, or the like) and an alkyd chain. The fatty acid amide is a compound having a long-chain fatty acid group and an amide group in the molecule.

These compounds may be a resin or may be other than a resin.

In addition, these compounds may correspond to an aggregation control agent and/or an aggregation dispersant, which will be described later.

A molecular weight (in a case of having a molecular weight distribution, a weight-average molecular weight) of the organic rheology control agent is preferably in a range of 200 to 50,000.

In a case where the organic rheology control agent has an acid value, the acid value is preferably 5 to 400 mgKOH/g.

In a case where the organic rheology control agent has an amine acid value, the amine value is preferably 5 to 300 mgKOH/g.

· Aggregation control agent

Examples of the organic rheology control agent also include an aggregation control agent. The aggregation control agent may be a resin or may be other than a resin.

The aggregation control agent has a function of being bonded to an aggregate having a relatively high density, such as the magnetic particles, and on the other hand, of dispersing a component such as the reactive monomer in the composition, thereby making it possible to produce a bulky aggregate.

In a case where the precursor composition contains an aggregation control agent, re-dispersibility can be improved since hard cake formation of the magnetic particles in the composition is suppressed and a bulky aggregate is formed.

Examples of the aggregation control agent include a cellulose derivative.

Examples of the cellulose derivative include carboxymethyl cellulose, methyl cellulose, hydroxyethyl cellulose, hydroxypropyl cellulose, hydroxypropylmethyl cellulose, hydroxypropylethyl cellulose, and salts thereof.

In a case where the precursor composition contains an aggregation control agent, a content of the aggregation control agent is preferably 0.1% to 24% by mass, more preferably 0.1% to 15% by mass, still more preferably 0.5% to 12% by mass, even more preferably 0.5% to 10% by mass, particularly preferably 0.5% to 8% by mass, and most preferably 0.5% to 7% by mass with respect to the total solid content of the composition.

· Aggregation dispersant

Examples of the organic rheology control agent also include an aggregation dispersant.

The aggregation dispersant may be a resin or may be other than a resin.

The aggregation dispersant has a function of being adsorbed on the surface of the magnetic particles, maintaining a distance between the magnetic particles at a certain level or more due to interaction between the dispersants while separating the magnetic particles from each other, and preventing the magnetic particles from being directly aggregated. As a result, aggregation of the magnetic particles is suppressed, and an aggregate having a relatively low density is formed even in a case where the aggregate is formed. The aggregation dispersant can further disperse components such as the reactive monomer in the composition to form a bulky aggregate, and thus the re-dispersibility can be improved.

As the aggregation dispersant, an alkylolammonium salt of a polybasic acid is preferable.

The polybasic acid may have two or more acid groups, and examples thereof include acidic polymers including a repeating unit having an acid group (for example, polyacrylic acid, polymethacrylic acid, polyvinyl sulfonic acid, and polyphosphoric acid). In addition, examples of the polybasic acid other than those described above include polymers obtained by polymerizing an unsaturated fatty acid such as crotonic acid. The alkylolammonium salt of a polybasic acid is obtained by reacting these polybasic acids with alkylolammonium. The salt obtained by such a reaction usually includes the following partial structure.

$$-C(=O)-N(-R^1)(-R^2-OH)$$

Here, $R^1$ is an alkyl group and $R^2$ is an alkylene group.

As the alkylolammonium salt of a polybasic acid, a polymer including a plurality of the above-described partial structures is preferable. In a case where the alkylolammonium salt of a polybasic acid is a polymer, a weight-average molecular weight is preferably 1,000 to 100,000 and more preferably 5,000 to 20,000. The polymer of the alkylolammonium salt of a polybasic acid is bonded to the surface of the magnetic particles and forms a hydrogen bond with another aggregation dispersant molecule such that the main chain structure of the polymer enters between the magnetic particles, and thus the magnetic particles can be separated from each other.

Examples of one suitable aspect of the aggregation dispersant include an amide wax which is a condensate obtained by a dehydration condensation of (a) saturated aliphatic monocarboxylic acids and hydroxy group-containing aliphatic monocarboxylic acids, (b) at least one acid of the polybasic acids, and (c) at least one amine of diamines and tetramines.

It is preferable that (a) to (c) are used such that a molar ratio of (a):(b):(c) is 1 to 3:0 to 5:1 to 6.

The number of carbon atoms in the saturated aliphatic monocarboxylic acids is preferably 12 to 22. Specific examples thereof include lauric acid, myristic acid, pentadecyl acid, palmitic acid, margaric acid, stearic acid, nonadecanoic acid, arachidic acid, and behenic acid.

The number of carbon atoms in the hydroxy group-containing aliphatic monocarboxylic acids is preferably 12 to 22. Specific examples thereof include 12-hydroxystearic acid and dihydroxystearic acid.

These saturated aliphatic monocarboxylic acids and hydroxy group-containing aliphatic monocarboxylic acids may be used alone or in combination of a plurality thereof.

The polybasic acid is preferably a carboxylic acid which is a dicarboxylic acid or higher and has 2 to 12 carbon atoms, and more preferably a dicarboxylic acid.

Examples of such a dicarboxylic acid include aliphatic dicarboxylic acids such as oxalic acid, malonic acid, succinic acid, glutaric acid, adipic acid, pimelic acid, suberic acid, azelaic acid, sebacic acid, 1,10-decanedicarboxylic acid, and 1,12-dodecanedicarboxylic acid; aromatic dicarboxylic acids such as phthalic acid, isophthalic acid, and terephthalic acid; and alicyclic dicarboxylic acids such as 1,2-cyclohexanedicarboxylic acid, 1,3-cyclohexanedicarboxylic acid, 1,4-cyclohexanedicarboxylic acid, and cyclohexylsuccinic acid. These polybasic acids may be used alone or in combination of a plurality thereof.

The number of carbon atoms in the diamines is preferably 2 to 14. Specific examples thereof include ethylenediamine, 1,3-propanediamine, 1,4-butanediamine, hexamethylenediamine, metaxylenediamine, tolylenediamine, paraxylenediamine, phenylenediamine, isophoronediamine, 1,10-decanediamine, 1,12-dodecanediamine, 4,4-diaminodicyclohexyl methane, and 4,4-diaminodiphenyl methane.

The number of carbon atoms in the tetramines is preferably 2 to 14. Specific examples thereof include butane-1,1,4,4-tetramine, and pyrimidine-2,4,5,6-tetramine. These diamines and tetramines may be used alone or in combination of a plurality thereof.

Amounts of the diamines and the tetramines are adjusted according to the number of moles of the saturated aliphatic monocarboxylic acid or the hydroxy group-containing aliphatic monocarboxylic acid and the number of moles of the polybasic acids, so that the total number of carboxy groups and the total number of amino groups are equivalent. For example, in a case of n mol (n = 0 to 5) of an aliphatic dicarboxylic acid which is the polybasic acids with respect to 2 mol of an aliphatic monocarboxylic acid, and the diamines is (n + 1) mol, the acid and the amine are equivalent.

The amide wax may be obtained as a mixture of a plurality of compounds having different molecular weights. The amide wax is preferably a compound represented by Chemical Formula (I). The amide wax may be a single compound or a mixture.

$$A\text{-}C\text{-}(B\text{-}C)_m\text{-}A \cdots \qquad (I)$$

In Formula (I), A is a dehydrated residual group of the saturated aliphatic monocarboxylic acid and/or the hydroxy group-containing aliphatic monocarboxylic acid, B is a dehydrated residual group of the polybasic acid, C is a dehydrogenated residual group of the diamine and/or the tetramine, and m is $0 \leq m \leq 5$.

Examples of one suitable aspect of the aggregation dispersant include a compound represented by Formula (II).

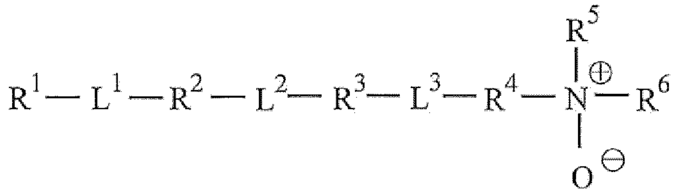

(II)

In Formula (II), $R^1$ represents a monovalent linear aliphatic hydrocarbon group having 10 to 25 carbon atoms, $R^2$ and $R^3$ each independently represent a divalent aliphatic hydrocarbon group having 2, 4, 6, or 8 carbon atoms, a divalent alicyclic hydrocarbon group having 6 carbon atoms, or a divalent aromatic hydrocarbon group, $R^4$ represents a divalent aliphatic hydrocarbon group having 1 to 8 carbon atoms, and $R^5$ and $R^6$ each independently represent a monovalent aliphatic hydrocarbon group having 1 to 3 carbon atoms or a hydroxyalkyl ether group.

In Formula (II), $L^1$ to $L^3$ each independently represent an amide bond, and in a case where $L^1$ and $L^3$ are each -CONH-, $L^2$ is -NHCO-, and in a case where $L^1$ and $L^3$ are each -NHCO-, $L^2$ is -CONH-.

$R^1$ is a monovalent linear aliphatic hydrocarbon group having 10 to 25 carbon atoms, and examples thereof include a linear alkyl group such as a decyl group, a lauryl group, a myristyl group, a pentadecyl group, a stearyl group, a palmityl group, a nonadecyl group, an eicosyl group, and a behenyl group; a linear alkenyl group such as a decenyl group, a pentadecenyl group, an oleyl group, and an eicosenyl group; and a linear alkynyl group such as a pentadecynyl group, an octadecynyl group, and a nonadecinyl group.

Among these, $R^1$ is preferably a monovalent linear aliphatic hydrocarbon group having 14 to 25 carbon atoms, and more preferably a monovalent linear aliphatic hydrocarbon group having 18 to 21 carbon atoms. The linear aliphatic hydrocarbon group is preferably an alkyl group.

Examples of the divalent aliphatic hydrocarbon group having 2, 4, 6, or 8 carbon atoms in $R^2$ and $R^3$ include an ethylene group, an n-butylene group, an n-hexylene group, and an n-octylene group.

Examples of the divalent alicyclic hydrocarbon group having 6 carbon atoms in $R^2$ and $R^3$ include a 1,4-cyclohexylene group, a 1,3-cyclohexylene group, and a 1,2-cyclohexylene group.

Examples of the divalent aromatic hydrocarbon group in $R^2$ and $R^3$ include an arylene group having 6 to 10 carbon atoms, such as a 1,4-phenylene group, a 1,3-phenylene group, and a 1,2-phenylene group.

Among these, from the viewpoint that an effect of improving viscosity is excellent, $R^2$ and $R^3$ are each preferably a divalent aliphatic hydrocarbon group having 2, 4, 6, or 8 carbon atoms, more preferably a divalent aliphatic hydrocarbon group having 2, 4, or 6 carbon atoms, still more preferably a divalent aliphatic hydrocarbon group having 2 or 4 carbon atoms, and particularly preferably a divalent aliphatic hydrocarbon group having 2 carbon atoms. The divalent aliphatic hydrocarbon group is preferably a linear alkylene group.

$R^4$ represents a divalent aliphatic hydrocarbon group having 1 to 8 carbon atoms, and among these, from the viewpoint that the effect of improving viscosity is excellent, a linear or branched alkylene group is preferable, and a linear alkylene group is more preferable.

In addition, the number of carbon atoms in the divalent aliphatic hydrocarbon group in $R^4$ is 1 to 8, and from the viewpoint that the effect of improving viscosity is excellent, it is preferably 1 to 7, more preferably 3 to 7, still more preferably 3 to 6, and particularly preferably 3 to 5.

Accordingly, $R^4$ is preferably a linear or branched alkylene group having 1 to 8 carbon atoms, more preferably a linear alkylene group having 1 to 7 carbon atoms, still more preferably a linear alkylene group having 3 to 7 carbon atoms, particularly preferably a linear alkylene group having 3 to 6 carbon atoms, and most preferably a linear alkylene group having 3 to 5 carbon atoms.

Examples of the monovalent aliphatic hydrocarbon group having 1 to 3 carbon atoms in $R^5$ and $R^6$ include a linear or branched alkyl group having 1 to 3 carbon atoms, such as a methyl group, an ethyl group, a propyl group, and an isopropyl group; a linear or branched alkenyl group having 2 or 3 carbon atoms, such as a vinyl group, a 1-methylvinyl group, and a 2-propenyl group; and a linear or branched alkynyl group having 2 or 3 carbon atoms, such as an ethynyl

group and a propynyl group.

Examples of the hydroxyalkyl ether group in $R^5$ and $R^6$ include a mono- or di(hydroxy) $C_{1-3}$ alkyl ether group such as a 2-hydroxyethoxy group, a 2-hydroxypropoxy group, and a 2,3-dihydroxypropoxy group.

Among these, $R^5$ and $R^6$ are each independently preferably a monovalent aliphatic hydrocarbon group having 1 to 3 carbon atoms, more preferably a linear or branched alkyl group having 1 to 3 carbon atoms, still more preferably a linear alkyl group having 1 to 3 carbon atoms, and particularly preferably a methyl group.

As the compound represented by Formula (II), compounds represented by Formulae (II-1) to (II-9) are preferable.

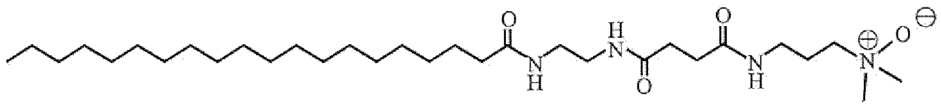
(II-1)

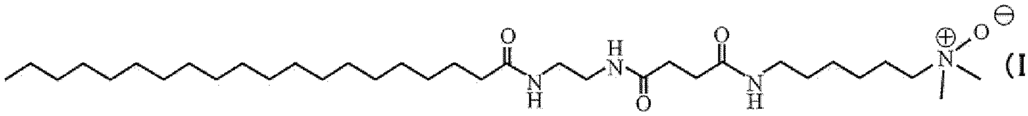
(II-2)

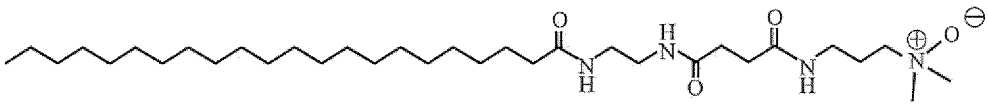
(II-3)

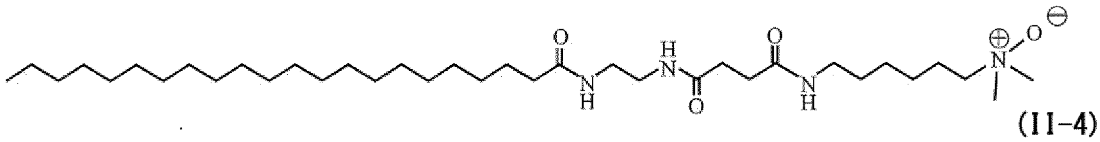
(II-4)

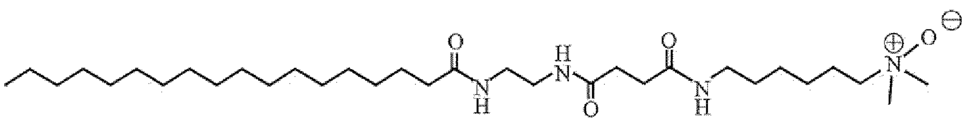
(II-5)

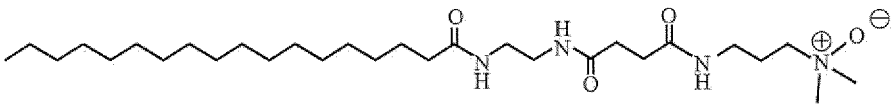
(II-6)

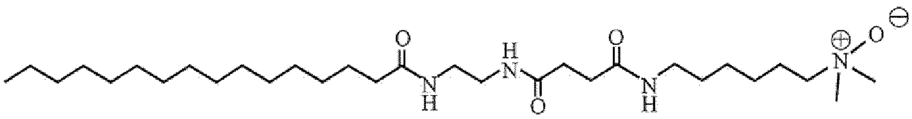
(II-7)

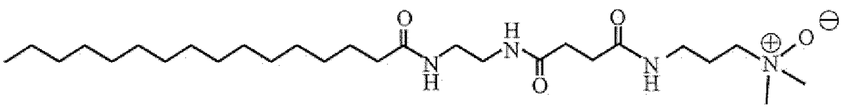
(II-8)

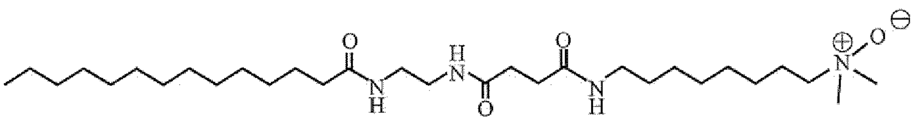
(II-9)

Examples of the aggregation dispersant include ANTI-TERRA-203, 204, 206, and 250 (all trade names, manufactured by BYK-Chemie GmbH); ANTI-TERRA-U (trade name, manufactured by BYK-Chemie GmbH); DISPER BYK-102, 180, and 191 (all trade names, manufactured by BYK-Chemie GmbH); BYK-P105 (trade name, manufactured by BYK-Chemie GmbH); TEGO Disper 630 and 700 (all trade names, manufactured by Evonik Degussa Japan Co., Ltd.);

Talen VA-705B (trade name, manufactured by KYOEISHA CHEMICAL CO., LTD.); and FLOWNON RCM-300TL and RCM-230 AF (trade name, manufactured by KYOEISHA CHEMICAL CO., LTD., amide wax).

In a case where the precursor composition contains an aggregation dispersant, a content of the aggregation dispersant is preferably 0.1% to 10% by mass, more preferably 0.1% to 6.0% by mass, and still more preferably 0.1% to 4.0% by mass with respect to the total solid content of the composition.

(Inorganic rheology control agent)

Examples of the inorganic rheology control agent include bentonite, silica, calcium carbonate, and smectite.

<Curing agent>

The precursor composition may contain a curing agent.

Particularly, in a case where the precursor composition contains the compound having an epoxy group and/or an oxetanyl group as the binder component, it is also preferable that the precursor composition contains a curing agent.

Examples of the curing agent include a phenol-based curing agent, a naphthol-based curing agent, an acid anhydride-based curing agent, an active ester-based curing agent, a benzoxazine-based curing agent, a cyanate ester-based curing agent, a carbodiimide-based curing agent, and an amine adduct-based curing agent.

The curing agent may be used alone or in combination of two or more kinds thereof.

Specific examples of the phenol-based curing agent and the naphthol-based curing agent include "MEH-7700", "MEH-7810", and "MEH-7851" manufactured by MEIWA PLASTIC INDUSTRIES, LTD.; "NHN", "CBN", and "GPH" manufactured by Nippon Kayaku Co., Ltd.; "SN-170", "SN-180", "SN-190", "SN-475", "SN-485", "SN-495", "SN-375", and "SN-395" manufactured by NIPPON STEEL Chemical & Material Co., Ltd.; and "LA-7052", "LA-7054", "LA-3018", "LA-3018-50P", "LA-1356", "TD2090", and "TD-2090-60M" manufactured by DIC Corporation.

Examples of the acid anhydride-based curing agent include a curing agent having one or more acid anhydride groups in one molecule.

Specific examples of the acid anhydride-based curing agent include phthalic anhydride, tetrahydrophthalic anhydride, hexahydrophthalic anhydride, methyl tetrahydrophthalic anhydride, methyl hexahydrophthalic anhydride, methyl nadic anhydride, hydrogenated methyl nadic anhydride, trialkyltetrahydrophthalic anhydride, dodecenyl succinic anhydride, 5-(2,5-dioxotetrahydro-3-furanyl)-3-methyl-3-cyclohexene-1,2-dicarboxylic anhydride, trimellitic anhydride, pyromellitic anhydride, benzophenone tetracarboxylic dianhydride, biphenyltetracarboxylic acid dianhydride, naphthalene tetracarboxylic dianhydride, oxydiphthalic dianhydride, 3,3’-4,4’-diphenylsulfone tetracarboxylic dianhydride, 1,3,3a,4,5,9b-hexahydro-5-(tetrahydro-2,5-dioxo-3-furanyl)-naphtho[1,2-C]furan-1,3-dione, ethylene glycol bis(anhydrotrimellitate), and a polymer-type acid anhydride such as styrene·maleic acid resin formed by copolymerization of styrene and maleic acid.

Examples of a commercially available product of the acid anhydride-based curing agent include "HNA-100", "MH-700", "MTA-15", "DDSA", "HF-08", and "OSA" manufactured by New Japan Chemical Co., Ltd.; "YH306" and "YH307" manufactured by Mitsubishi Chemical Corporation.; "H-TMAn" manufactured by MITSUBISHI GAS CHEMICAL COMPANY, INC.; and "HN-2200", "HN-2000", "HN-5500" and "MHAC-P" manufactured by Hitachi Chemical Co., Ltd.

As the active ester-based curing agent, compounds having three or more ester groups with high reaction activity in one molecule, such as phenol esters, thiophenol esters, N-hydroxyamine esters, and esters of heterocyclic hydroxy compounds, are preferably used.

As the active ester-based curing agent, an active ester compound including a dicyclopentadiene-type diphenol structure, an active ester compound including a naphthalene structure, an active ester compound including acetylated phenol novolac, or an active ester compound including a benzoylated phenol novolac is preferable. "Dicyclopentadiene-type diphenol structure" represents a divalent structural unit consisting of phenylene-dicyclopentalene-phenylene.

Examples of a commercially available product of the active ester-based curing agents include active ester compounds including a dicyclopentadiene-type diphenol structure, such as "EXB9451", "EXB9460","EXB9460S", "HPC-8000", "HPC-8000H", "HPC-8000-65T", "HPC-8000H-65TM", "EXB-8000L", and "EXB-8000L-65TM" (manufactured by DIC Corporation); active ester compounds including a naphthalene structure, such as "EXB9416-70BK" and "EXB-8150-65T" (manufactured by DIC Corporation); active ester compounds including acetylated phenol novolac, such as "DC808" (manufactured by Mitsubishi Chemical Corporation.); active ester compounds including benzoylated phenol novolac, such as "YLH1026" (manufactured by Mitsubishi Chemical Corporation.); active ester-based curing agents which are acetylated phenol novolac, such as "DC808" (manufactured by Mitsubishi Chemical Corporation.); and active ester-based curing agents which are benzoylated phenol novolac, such as "YLH1026" (manufactured by Mitsubishi Chemical Corporation.), "YLH1030" (manufactured by Mitsubishi Chemical Corporation.), and "YLH1048" (manufactured by Mitsubishi Chemical Corporation.).

Specific examples of the benzoxazine-based curing agent include "JBZ-OP100D" and "ODA-BOZ" manufactured by JFE Chemical Corporation; "HFB2006M" manufactured by Showa High Polymer Co., Ltd.; and "P-d" and "F-a" manufactured by SHIKOKU CHEMICALS CORPORATION.

Specific examples of the cyanate ester-based curing agent include "PT30" and "PT60" (both of which are phenol novolac-type polyfunctional cyanate ester resins) manufactured by Lonza Japan Ltd.; and "BA230" and "BA230S75" (prepolymers in which some or all of bisphenol A dicyanate molecules are triazinated and form a trimer).

Specific examples of the carbodiimide-based curing agent include "V-03" and "V-07" manufactured by Nisshinbo Chemical Inc.

Examples of a commercially available products of the amine adduct-type curing agent include AMICURE PN-23 and PN-50 (both of which are manufactured by Ajinomoto Fine-Techno Co., Inc.).

In a case where the precursor composition contains a compound having an epoxy group (or a compound having an oxetanyl group) and a curing agent, a ratio of a content of the compound having an epoxy group (or the compound having an oxetanyl group) to a content of the curing agent is preferably set such that an equivalent ratio of the epoxy group in the compound having an epoxy group (or the oxetanyl group in the compound having an oxetanyl group) to a reactive group in the curing agent (an active hydrogen group such as a hydroxyl group in the curing agent) ("number of epoxy groups (or number of oxetanyl groups)"/"number of reactive groups") is 30/70 to 70/30, more preferably set such that the equivalent ratio is 40/60 to 60/40, and still more preferably set such that the equivalent ratio is 45/55 to 55/45.

In addition, in a case where the precursor composition contains a compound having an epoxy group, a compound having an oxetanyl group, and a curing agent, it is preferable that the equivalent ratio of the epoxy group in the compound having an epoxy group and the oxetanyl group in the compound having an oxetanyl group to the reactive group in the curing agent ("number of epoxy groups and number of oxetanyl groups"/"number of reactive groups") satisfy the above-described numerical range.

In the precursor composition, the content of the curing agent is preferably 0.001% to 3.5% by mass and more preferably 0.01% to 3.5% by mass with respect to the total solid content of the composition.

<Curing accelerator>

The precursor composition may contain a curing accelerator.

Particularly, in a case where the precursor composition contains the compound having an epoxy group and/or an oxetanyl group as the binder component, it is also preferable that the precursor composition contains a curing accelerator.

Examples of the curing accelerator include triphenylphosphine, methyltributylphosphonium dimethyl phosphate, tris-ortho-tolylphosphine, and a boron trifluoride amine complex. Examples of a commercially available product of the phosphate-based curing accelerator include HISHICOLIN PX-4MP (manufactured by Nippon Chemical Industrial CO., LTD.).

In addition, examples of the curing accelerator also include imidazole-based curing accelerators such as 2-methylimidazole (trade name; 2MZ), 2-undecylimidazole (trade name; C11-Z), 2-heptadecylimidazole (trade name; C17Z), 1,2-dimethylimidazole (trade name; 1.2 DMZ), 2-ethyl-4-methylimidazole (trade name; 2E4MZ), 2-phenylimidazole (trade name; 2PZ), 2-phenyl-4-methylimidazole (trade name; 2P4MZ), 1-benzyl-2-methylimidazole (trade name; 1B2MZ), 1-benzyl-2-phenylimidazole (trade name; 1B2PZ), 1-cyanoethyl-2-methylimidazole (trade name; 2MZ-CN), 1-cyanoethyl-2-undecylimidazole (trade name; C11Z-CN), 1-cyanoethyl-2-phenylimidazolium trimellitate (trade name; 2PZCNS-PW), 2,4-diamino-6-[2'-methylimidazolyl-(1')]-ethyl-s-triazine (trade name; 2MZ-A), 2,4-diamino-6-[2'-undecylimidazolyl-(1')]-ethyl-s-triazine (trade name; C11Z-A), 2,4-diamino-6-[2'-ethyl-4'-methylimidazolyl-(1')]-ethyl-s-triazine (trade name; 2E4MZ-A), 2,4-diamino-6-[2'-methylimidazolyl-(1')]-ethyl-s-triazine isocyanuric acid adduct (trade name; 2MA-OK), 2-phenyl-4,5-dihydroxymethylimidazole (trade name; 2PHZ-PW), 2-phenyl-4-methyl-5-hydroxymethylimidazole (trade name; 2P4MHZ-PW), 1-cyanoethyl-2-phenylimidazole (trade name; 2PZ-CN), 2,4-diamino-6-[2'-methylimidazolyl-(1')]-ethyl-s-triazine (trade name; 2MZA-PW), and 2,4-diamino-6-[2'-methylimidazolyl-(1')]-ethyl-s-triazine isocyanuric acid adduct (trade name: 2MAOK-PW) (all manufactured by SHIKOKU CHEMICALS CORPORATION.). Furthermore, examples of the triarylphosphine-based curing accelerator also include compounds described in paragraph 0052 of JP2004-43405A. Examples of the phosphorus-based curing accelerator obtained by adding triphenylborane to triarylphosphine also include compounds described in paragraph 0024 of JP2014-5382A.

A content of the curing accelerator in the precursor composition is preferably 0.0002% to 3% by mass, more preferably 0.002% to 2% by mass, and still more preferably 0.02% to 1% by mass with respect to the total solid content of the composition.

<Polymerization initiator>

The precursor composition may contain a polymerization initiator.

Particularly, in a case where the precursor composition contains the compound including an ethylenically

unsaturated group as the binder component, it is preferable that the precursor composition contains a polymerization initiator.

The polymerization initiator is not particularly limited, and known polymerization initiators can be used. Examples of the polymerization initiator include a photopolymerization initiator and a thermal polymerization initiator.

In a case where the precursor composition contains a polymerization initiator, a content thereof is preferably 0.8% to 5% by mass, more preferably 0.8% to 4% by mass, and even more preferably 1.5% to 3% by mass with respect to the total solid content of the composition.

<Thermal polymerization initiator>

Examples of the thermal polymerization initiator include azo compounds such as 2,2'-azobisisobutyronitrile (AIBN), 3-carboxypropionitrile, azobismalenonitrile, and dimethyl-(2,2')-azobis(2-methylpropionate) [V-601], and organic peroxides such as benzoyl peroxide, lauroyl peroxide, and potassium persulfate.

Specific examples of the thermal polymerization initiator include the polymerization initiator described in pp. 65 to 148 of "Ultraviolet Curing System" (published by Sogo Gijutsu Center, 1989) written by Kiyomi KATO.

<Photopolymerization initiator>

The photopolymerization initiator is not particularly limited as long as the photopolymerization initiator can initiate the polymerization of the polymerizable compound, and known photopolymerization initiators can be used. As the photopolymerization initiator, for example, a photopolymerization initiator exhibiting photosensitivity from an ultraviolet range to a visible light range is preferable. In addition, the photopolymerization initiator may be an activator which generates active radicals by causing a certain action with a photoexcited sensitizer, or an initiator which initiates cationic polymerization according to the type of the polymerizable compound.

Furthermore, the photopolymerization initiator preferably includes at least one compound having a molar absorption coefficient of at least 50 in a range of 300 to 800 nm (more preferably 330 to 500 nm).

Examples of the photopolymerization initiator include a halogenated hydrocarbon derivative (for example, a compound including a triazine skeleton, a compound including an oxadiazole skeleton, or the like), an acyl phosphine compound such as acyl phosphine oxide, hexaaryl biimidazole, an oxime compound such as an oxime derivative, an organic peroxide, a thio compound, a ketone compound, an aromatic onium salt, an aminoacetophenone compound, and hydroxyacetophenone.

Regarding specific examples of the photopolymerization initiator, reference can be made to, for example, paragraphs 0265 to 0268 of JP2013-029760A, the contents of which are incorporated into the present specification.

More specifically, as the photopolymerization initiator, for example, the aminoacetophenone-based initiator described in JP1998-291969A (JP-H10-291969A) and the acyl phosphine-based initiator described in JP4225898B can also be used.

As the hydroxyacetophenone compound, for example, Omnirad-184, Omnirad-1173, Omnirad-500, Omnirad-2959, and Omnirad-127 (product names, all manufactured by IGM RESINS B.V) can be used.

As the aminoacetophenone compound, for example, Omnirad-907, Omnirad-369, and Omnirad-379EG (product names, all manufactured by IGM RESINS B.V), which are commercially available products, can be used.

As the aminoacetophenone compound, the compound which is described in JP2009-191179A and whose absorption wavelength is matched to a light source having a long wavelength such as a wavelength of 365 nm or a wavelength of 405 nm can also be used.

As the acyl phosphine compound, for example, Omnirad-819 and Omnirad-TPO (product names, both manufactured by IGM RESINS B.V), which are commercial products, can be used.

As the photopolymerization initiator, an oxime ester-based polymerization initiator (oxime compound) is more preferable. In particular, an oxime compound has high sensitivity and high polymerization efficiency, and easily designs a content of a coloring material in the composition to be high, which is preferable.

As specific examples of the oxime compound, the compound described in JP2001-233842A, the compound described in JP2000-080068A, or the compound described in JP2006-342166A can be used.

Examples of the oxime compound include 3-benzoyloxyiminobutan-2-one, 3-acetoxyiminobutan-2-one, 3-propionyloxyiminobutan-2-one, 2-acetoxyiminopentan-3-one, 2-acetoxyimino-1-phenylpropan-1-one, 2-benzoyloxyimino-1-phenylpropan-1-one, 3-(4-toluenesulfonyloxy)iminobutan-2-one, and 2-ethoxycarbonyloxyimino-1-phenylpropan-1-one.

Furthermore, the compounds described in J. C. S. Perkin II (1979) pp. 1653 to 1660, J. C. S. Perkin II (1979) pp. 156 to 162, Journal of Photopolymer Science and Technology (1995) pp. 202 to 232, JP2000-066385A, JP2000-080068A, JP2004-534797A, and JP2006-342166A can also be mentioned.

Among commercially available products, IRGACURE-OXE01 (manufactured by BASF SE), IRGACURE-OXE02 (manufactured by BASF SE), IRGACURE-OXE03 (manufactured by BASF SE), or IRGACURE-OXE04 (manufactured by BASF SE) is also preferable. In addition, TR-PBG-304 (manufactured by TRONLY), ADEKA ARKLS NCI-831 and ADEKA ARKLS NCI-930 (manufactured by ADEKA CORPORATION), or N-1919 (carbazole and oxime ester skeleton-containing photoinitiator (manufactured by ADEKA CORPORATION)) can also be used.

In addition, as oxime compounds other than the above-described oxime compounds, the compound which is described in JP2009-519904A and in which oxime is linked to a N-position of carbazole; the compound which is described in US7626957B and in which a hetero substituent is introduced into a benzophenone moiety; the compounds which are described in JP2010-015025A and US2009/292039A and in which a nitro group is introduced into the moiety of a coloring agent; the ketoxime compound described in WO2009/131189A; the compound which is described in US7556910B and includes a triazine skeleton and an oxime skeleton in the same molecule; the compound which is described in JP2009-221114A, has an absorption maximum at 405 nm, and exhibits favorable sensitivity with respect to a light source of a g-line; and the like may be used.

Reference can be made to, for example, paragraphs 0274 and 0275 of JP2013-029760A, the contents of which are incorporated into the present specification.

Specifically, as the oxime compound, a compound represented by Formula (OX-1) is preferable. In addition, an N-O bond in the oxime compound may be an (E) isomer, a (Z) isomer, or a mixture of an (E) isomer and a (Z) isomer.

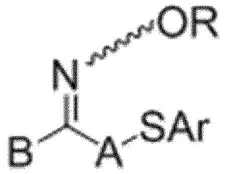

(OX-1)

In Formula (OX-1), R and B each independently represent a monovalent substituent, A represents a divalent organic group, and Ar represents an aryl group.

In Formula (OX-1), the monovalent substituent represented by R is preferably a group of monovalent non-metal atom.

Examples of the group of monovalent non-metal atom include an alkyl group, an aryl group, an acyl group, an alkoxycarbonyl group, an aryloxycarbonyl group, a heterocyclic group, an alkylthiocarbonyl group, and an arylthiocarbonyl group. In addition, these groups may have one or more substituents. Furthermore, each of the substituents may be further substituted with another substituent.

Examples of the substituent include a halogen atom, an aryloxy group, an alkoxycarbonyl group or an aryloxycarbonyl group, an acyloxy group, an acyl group, an alkyl group, and an aryl group.

As the monovalent substituent represented by B in Formula (OX-1), an aryl group, a heterocyclic group, an arylcarbonyl group, or a heterocyclic carbonyl group is preferable, and an aryl group or a heterocyclic group is more preferable. These groups may have one or more substituents. Examples of the substituents include the above-described substituents.

As the divalent organic group represented by A in Formula (OX-1), an alkylene group having 1 to 12 carbon atoms, a cycloalkylene group, or an alkynylene group is preferable. These groups may have one or more substituents. Examples of the substituents include the above-described substituents.

As the photopolymerization initiator, a fluorine atom-containing oxime compound can also be used. Specific examples of the fluorine atom-containing oxime compound include the compound described in JP2010-262028A; the compounds 24 and 36 to 40 described in JP2014-500852A; and the compound (C-3) described in JP2013-164471A. The contents thereof are incorporated into the present specification.

As the photopolymerization initiator, compounds represented by General Formulae (1) to (4) can also be used.

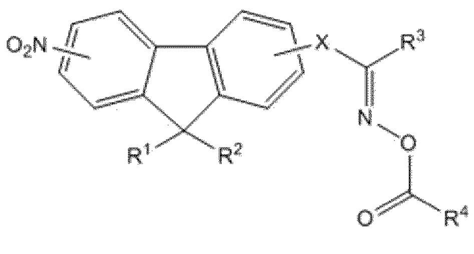

(1)

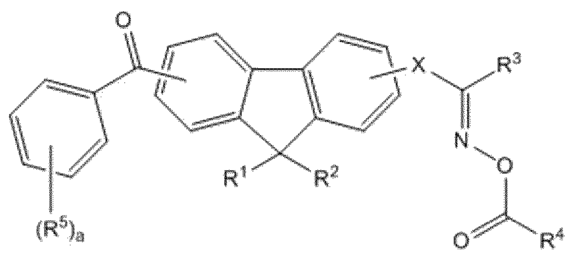

(2)

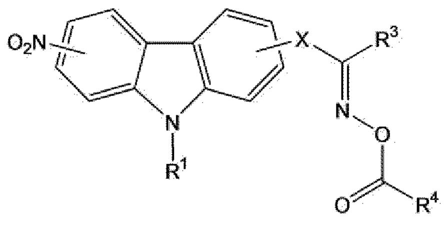

(3)

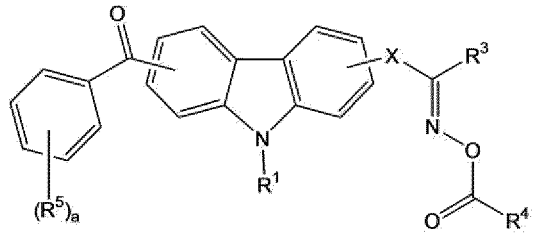

(4)

In Formula (1), $R^1$ and $R^2$ each independently represent an alkyl group having 1 to 20 carbon atoms, an alicyclic hydrocarbon group having 4 to 20 carbon atoms, an aryl group having 6 to 30 carbon atoms, or an aryl alkyl group having 7 to 30 carbon atoms, in a case where $R^1$ and $R^2$ each represent a phenyl group, the phenyl groups may be bonded to each other to form a fluorene group, $R^3$ and $R^4$ each independently represent a hydrogen atom, an alkyl group having 1 to 20 carbon atoms, an aryl group having 6 to 30 carbon atoms, an aryl alkyl group having 7 to 30 carbon atoms, or a heterocyclic group having 4 to 20 carbon atoms, and X represents a direct bond or a carbonyl group.

In Formula (2), $R^1$, $R^2$, $R^3$, and $R^4$ have the same definitions as $R^1$, $R^2$, $R^3$, and $R^4$ in Formula (1), $R^5$ represents $-R^6$, $-OR^6$, $-SR^6$, $-COR^6$, $-CONR^6R^6$, $-NR^6COR^6$, $-OCOR^6$, $-COOR^6$, $-SCOR^6$, $-OCSR^6$, $-COSR^6$, $-CSOR^6$, -CN, a halogen atom, or a hydroxyl group, $R^6$ represents an alkyl group having 1 to 20 carbon atoms, an aryl group having 6 to 30 carbon atoms, an aryl alkyl group having 7 to 30 carbon atoms, or a heterocyclic group having 4 to 20 carbon atoms, X represents a direct bond or a carbonyl group, and a represents an integer of 0 to 4.

In Formula (3), $R^1$ represents an alkyl group having 1 to 20 carbon atoms, an alicyclic hydrocarbon group having 4 to 20 carbon atoms, an aryl group having 6 to 30 carbon atoms, or an aryl alkyl group having 7 to 30 carbon atoms, $R^3$ and $R^4$ each independently represent a hydrogen atom, an alkyl group having 1 to 20 carbon atoms, an aryl group having 6 to 30 carbon atoms, an aryl alkyl group having 7 to 30 carbon atoms, or a heterocyclic group having 4 to 20 carbon atoms, and X represents a direct bond or a carbonyl group.

In Formula (4), $R^1$, $R^3$, and $R^4$ have the same definitions as $R^1$, $R^3$, and $R^4$ in Formula (3), $R^5$ represents $-R^6$, $-OR^6$, $-SR^6$, $-COR^6$, $-CONR^6R^6$, $-NR^6COR^6$, $-OCOR^6$, $-COOR^6$, $-SCOR^6$, $-OCSR^6$, $-COSR^6$, $-CSOR^6$, -CN, a halogen atom, or a hydroxyl group, $R^6$ represents an alkyl group having 1 to 20 carbon atoms, an aryl group having 6 to 30 carbon atoms, an aryl alkyl group having 7 to 30 carbon atoms, or a heterocyclic group having 4 to 20 carbon atoms, X represents a direct bond or a carbonyl group, and a represents an integer of 0 to 4.

In Formulae (1) and (2), $R^1$ and $R^2$ are each independently preferably a methyl group, an ethyl group, an n-propyl group, an i-propyl group, a cyclohexyl group, or a phenyl group. $R^3$ is preferably a methyl group, an ethyl group, a phenyl group, a tolyl group, or a xylyl group. $R^4$ is preferably an alkyl group having 1 to 6 carbon atoms or a phenyl group. $R^5$ is preferably a methyl group, an ethyl group, a phenyl group, a tolyl group, or a naphthyl group. X is preferably a direct bond.

Furthermore, in Formulae (3) and (4), $R^1$ is preferably a methyl group, an ethyl group, an n-propyl group, an i-propyl group, a cyclohexyl group, or a phenyl group. $R^3$ is preferably a methyl group, an ethyl group, a phenyl group, a tolyl group, or a xylyl group. $R^4$ is preferably an alkyl group having 1 to 6 carbon atoms or a phenyl group. $R^5$ is preferably a methyl group, an ethyl group, a phenyl group, a tolyl group, or a naphthyl group. X is preferably a direct bond.

Specific examples of the compounds represented by Formula (1) and Formula (2) include the compound described in paragraphs 0076 to 0079 of JP2014-137466A. The contents thereof are incorporated into the present specification.

Specific examples of the oxime compound preferably used in the precursor composition are shown below. Among the oxime compounds shown below, an oxime compound represented by General Formula (C-13) is more preferable.

Furthermore, as the oxime compound, compounds described in Table 1 of WO2015-036910A can also be used, the contents of which are incorporated into the present specification.

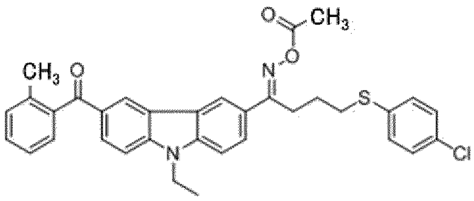

(C-1)

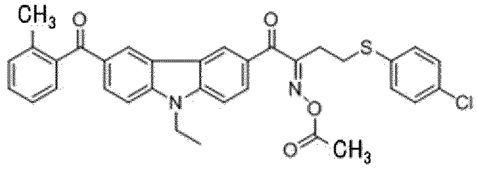

(C-2)

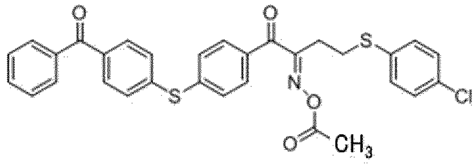

(C-3)

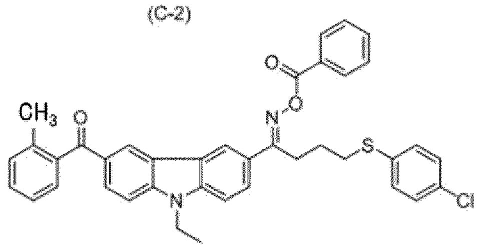

(C-4)

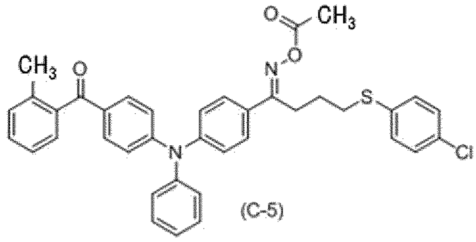

(C-5)

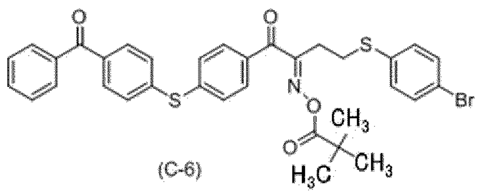

(C-6)

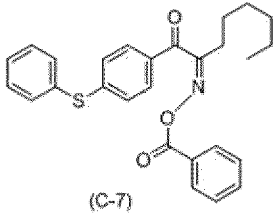

(C-7)

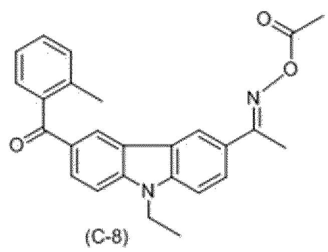

(C-8)

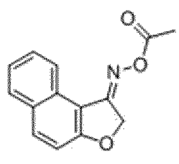

(C-9)

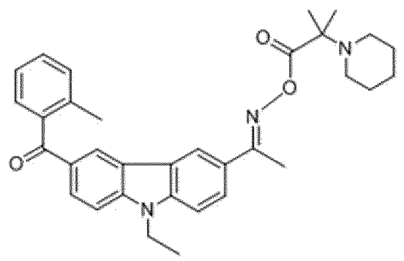

(C-10)

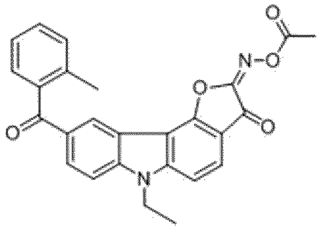

(C-11)

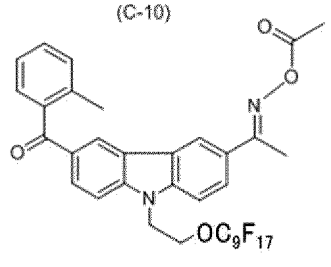

(C-12)

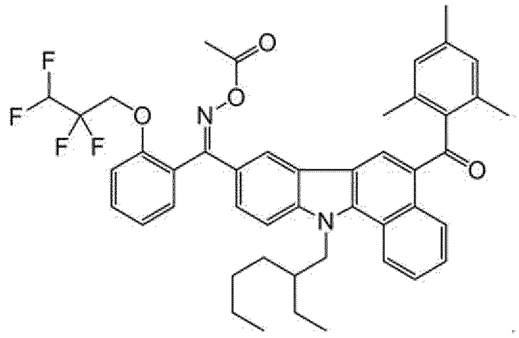

(C-13)

The oxime compound preferably has a maximal absorption wavelength in a wavelength range of 350 to 500 nm, more preferably has a maximal absorption wavelength in a wavelength range of 360 to 480 nm, and still more preferably has a high absorbance at wavelengths of 365 nm and 405 nm.

From the viewpoint of sensitivity, a molar absorption coefficient of the oxime compound at 365 nm or 405 nm is preferably 1,000 to 300,000, more preferably 2,000 to 300,000, and still more preferably 5,000 to 200,000.

The molar absorption coefficient of the compound can be measured by known methods, but for example, it is preferable that the measurement is carried out with an ultraviolet and visible spectrophotometer (Cary-5 spectrophotometer manufactured by Varian, Inc.) at a concentration of 0.01 g/L using ethyl acetate.

Two or more photopolymerization initiators may be used in combination, as needed.

In addition, as the photopolymerization initiator, the compounds described in paragraph 0052 of JP2008-260927A, paragraphs 0033 to 0037 of JP2010-097210A, and paragraph 0044 of JP2015-068893A can also be used, the contents of which are incorporated into the present specification. In addition, the oxime initiator described in KR10-2016-0109444 can also be used.

<Polymerization inhibitor>

The precursor composition may contain a polymerization inhibitor.

The polymerization inhibitor is not particularly limited, and known polymerization inhibitors can be used. Examples of the polymerization inhibitor include phenol-based polymerization inhibitors (for example, p-methoxyphenol, 2,5-di-tert-butyl-4-methylphenol, 2,6-di-tert-butyl-4-methylphenol, 4,4'-thiobis (3-methyl-6-t-butylphenol), 2,2'-methylenebis(4-methyl-6-t-butylphenol), 4-methoxynaphthol, and the like); hydroquinone-based polymerization inhibitor (for example, hydroquinone, 2,6-di-tert-butylhydroquinone, and the like); quinone-based polymerization inhibitors (for example, benzoquinone and the like); free radical polymerization inhibitors (for example, 2,2,6,6-tetramethylpiperidine 1-oxyl free radical, 4-hydroxy-2,2,6,6-tetramethylpiperidine 1-oxyl free radical, and the like); nitrobenzene-based polymerization inhibitors (for example, nitrobenzene, 4-nitrotoluene, and the like); and phenothiazine-based polymerization inhibitors (for example, phenothiazine, 2-methoxyphenothiazine, and the like).

Among these, a phenol-based polymerization inhibitor or a free radical polymerization inhibitor is preferable.

In a case where the polymerization inhibitor is used together with the resin including a curable group, the effect thereof is remarkable.

A content of the polymerization inhibitor in the precursor composition is preferably 0.0001% to 0.5% by mass, more preferably 0.0001% to 0.2% by mass, and still more preferably 0.0001% to 0.05% by mass with respect to the total solid content of the composition.

<Surfactant>

The precursor composition may contain a surfactant. The surfactant contributes to improvement in coating properties of the composition.

In a case where the precursor composition contains a surfactant, a content of the surfactant is preferably 0.001% to 2.0% by mass, more preferably 0.005% to 0.5% by mass, and still more preferably 0.01% to 0.1% by mass with respect to the total solid content of the composition.

Examples of the surfactant include a fluorine-based surfactant, a nonionic surfactant, a cationic surfactant, an anionic surfactant, and a silicone-based surfactant.

For example, in a case where the precursor composition contains a fluorine-based surfactant, liquid properties (particularly, fluidity) of the composition are further improved. That is, in a case of forming a film using the composition

containing a fluorine-based surfactant, an interfacial tension between a coated surface and a coating liquid decreases, wettability on the coated surface is improved, and applicability to the coated surface is improved. Therefore, even in a case where a thin film having a thickness of approximately several micrometers is formed with a small amount of a liquid, the fluorine-based surfactant is effective from the viewpoint that a film having a uniform thickness and small thickness unevenness is more suitably formed.

A fluorine content in the fluorine-based surfactant is preferably 3% to 40% by mass, more preferably 5% to 30% by mass, and still more preferably 7% to 25% by mass. The fluorine-based surfactant in which the fluorine content is within the above-described range is effective from the viewpoint of the uniformity in the thickness of the coating film and/or liquid saving properties, and the solubility in the composition is also excellent.

Examples of the fluorine-based surfactant include surfactants described in paragraphs 0060 to 0064 of JP2014-041318A (paragraphs 0060 to 0064 of the corresponding WO2014/017669A) and the like, surfactants described in paragraphs 0117 to 0132 of JP2011-132503A, and surfactants described in JP2020-008634A, the contents of which are incorporated herein by reference. Examples of a commercially available product of the fluorine-based surfactant include: MEGAFACE F-171, F-172, F-173, F-176, F-177, F-141, F-142, F-143, F-144, F-437, F-475, F-477, F-479, F-482, F-554, F-555-A, F-556, F-557, F-558, F-559, F-560, F-561, F-565, F-563, F-568, F-575, F-780, EXP, MFS-330, R-41, R-41-LM, R-01, R-40, R-40-LM, R-43, RS-43, TF-1956, RS-90, R-94, RS-72-K, and DS-21 (all of which are manufactured by DIC Corporation); FLUORAD FC430, FC431, and FC171 (all of which are manufactured by Sumitomo 3M Ltd.); SURFLON S-382, SC-101, SC-103, SC-104, SC-105, SC-1068, SC-381, SC-383, S-393, and KH-40 (all of which are manufactured by Asahi Glass Co., Ltd.); POLYFOX PF636, PF656, PF6320, PF6520, and PF7002 (all of which are manufactured by OMNOVA Solutions Inc.); and FTERGENT 710FM, 610FM, 601AD, 601ADH2, 602A, 215M, and 245F (all of which are manufactured by NEOS COMPANY LIMITED).

As the fluorine-based surfactant, a block polymer can also be used, and specific examples thereof include the compound described in JP2011-089090A.

Examples of the silicone-based surfactant include KF6001 and KF6007 (manufactured by Shin-Etsu Chemical Co., Ltd.)

From the viewpoint of environmental regulation, the use of perfluoroalkyl sulfonic acid and a salt thereof and use of perfluoroalkyl carboxylic acid and a salt thereof may be restricted.

In a case where a content of the above-described compounds in the precursor composition is decreased, the content of the perfluoroalkyl sulfonic acid (particularly, perfluoroalkyl sulfonic acid in which a perfluoroalkyl group has 6 to 8 carbon atoms) and a salt thereof and the perfluoroalkyl carboxylic acid (particularly, perfluoroalkyl carboxylic acid in which a perfluoroalkyl group has 6 to 8 carbon atoms) and a salt thereof is preferably 0.01 to 1,000 ppb, more preferably 0.05 to 500 ppb, and still more preferably 0.1 to 300 ppb with respect to the total solid content of the composition. In addition, the precursor composition may be substantially free of the perfluoroalkyl sulfonic acid and a salt thereof and the perfluoroalkyl carboxylic acid and a salt thereof. For example, by using a compound which can substitute for the perfluoroalkyl sulfonic acid and a salt thereof and the perfluoroalkyl carboxylic acid and a salt thereof, a composition which is substantially free of the perfluoroalkyl sulfonic acid and a salt thereof and the perfluoroalkyl carboxylic acid and a salt thereof may be selected. Examples of the compound which can substitute for the regulated compounds include a compound which is excluded from the regulation due to difference in number of carbon atoms of the perfluoroalkyl group. However, the above-described contents do not prevent the use of perfluoroalkyl sulfonic acid and a salt thereof and use of perfluoroalkyl carboxylic acid and a salt thereof. The precursor composition may contain the perfluoroalkyl sulfonic acid and a salt thereof and the perfluoroalkyl carboxylic acid and a salt thereof within the maximum allowable range.

<Adhesion aid>

It is also preferable that the precursor composition contains a silane coupling agent as an adhesion aid.

Specific examples of the silane coupling agent include N-phenyl-3-aminopropyltrimethoxysilane, phenyltrimethoxysilane, N-(2-aminoethyl)3-aminopropylmethyldimethoxysilane, N-(2-aminoethyl)3-aminopropylmethyltrimethoxysilane, 3-aminopropyltriethoxysilane, 3-mercaptopropyltrimethoxysilane, vinyltrimethoxysilane, N-(2-(vinylbenzylamino)ethyl)3-aminopropyltrimethoxysilane hydrochloride, 3-methacryloxypropyltrimethoxysilane, 3-chloropropylmethyldimethoxysilane, and 3-chloropropyltrimethoxysilane. Examples of a commercially available product of the silane coupling agent include KBM series, KBE series, and the like (for example, KBM-573 and KBM-103) manufactured by Shin-Etsu Chemical Co., Ltd.

In a case where the precursor composition contains an adhesion aid, a content of the adhesion aid is preferably 0.05% to 2% by mass, more preferably 0.05% to 1% by mass, and still more preferably 0.05% to 0.8% by mass with respect to the total solid content of the composition.

<Other optional components>

The precursor composition may further contain optional components other than the above-described components. Examples thereof include a sensitizer, a co-sensitizer, a plasticizer, a diluent, an oil sensitizing agent, a filler, a rubber component, and the like, and known additives such as auxiliary agents (for example, an antifoaming agent, a flame retardant, a leveling agent, a peeling accelerator, an antioxidant, a fragrance, a surface tension adjuster, a chain transfer agent, and the like) may be added as necessary.

[Example of suitable aspect of precursor composition]

Examples of one suitable aspect of the precursor composition include compositions containing the magnetic particles, the specific dispersant, one or more components selected from the group consisting of the solvent and the liquid reactive monomer, and the rheology control agent.

Among these, from the viewpoint that the effect of the present invention is more excellent, examples of the precursor composition include compositions containing the magnetic particles, the specific dispersant, one or more liquid components selected from the group consisting of the solvent, the liquid epoxy compound, and the liquid oxetane compound, and the rheology control agent.

In a case where the precursor composition contains a curable component which is cured by light, it is preferable that the precursor composition further contains the photopolymerization initiator.

In a case where the precursor composition contain a curable component which is cured by heat, the precursor composition may further contain the thermal polymerization initiator. In a case where the precursor composition contains a compound including one or more of an epoxy group and an oxetanyl group, the precursor composition may contain the curing accelerator.

[Physical properties of precursor composition]

In a case where a rotation speed (shear rate) of a rheometer is 0.1 (1/s), from the viewpoint of more excellent sedimentation stabilization of the magnetic particles, a viscosity of the precursor composition at 23°C is preferably 1 to 10,000 Pa s, more preferably 1 to 5,000 Pa·s, and still more preferably 1 to 1,000 Pa·s.

Here, the viscosity of the precursor composition at 23°C can be measured by MCR-102 (manufactured by Anton Paar GmbH).

[Method for preparing precursor composition]

The precursor composition can be prepared by mixing the respective components described above by known mixing methods (for example, mixing methods using a stirrer, a homogenizer, a high-pressure emulsification device, a wet-type pulverizer, a wet-type disperser, or the like).

In a case of preparing the precursor composition, the respective components may be formulated at once, or each of the components may be dissolved or dispersed in a solvent and then sequentially formulated. In addition, the input order and the operation conditions during the formulation are not particularly limited.

[Procedure for producing magnetic particle-containing composition]

The production method according to the embodiment of the present invention includes a step of cooling a precursor composition to 5°C or lower.

The cooling temperature is not particularly limited as long as it is 5°C or lower, but from the viewpoint that the effect of the present invention is more excellent, it is preferably 0°C or lower, more preferably -5°C or lower, and still more preferably -10°C or lower. The lower limit value thereof is not particularly limited, but is, for example, -30°C or higher.

A cooling method is not particularly limited, and examples thereof include a method of storing in a refrigerator.

The magnetic particle-containing composition obtained by the production method according to the embodiment of the present invention has excellent storage stability and has fluidity suitable for coating even after a certain period of time from returning to room temperature after stirring or heating.

[Physical properties of magnetic particle-containing composition]

<Endothermic peak temperature>

In a case where the magnetic particle-containing composition is heated from 10°C to 100°C at 10 °C/min using

a differential scanning calorimeter (DSC), the magnetic particle-containing composition obtained by the production method according to the embodiment of the present invention has an endothermic peak temperature at 60°C or lower, and the endothermic peak temperature is more preferably 50°C or lower and still more preferably 30°C or lower. The lower limit value of the endothermic peak temperature is, for example, room temperature (25°C) or higher.

As the differential scanning calorimeter (DSC), for example, "DSC3" manufactured by METTLER TOLEDO, or the like can be used. The above-described endothermic peak temperature is a peak top temperature of an endothermic peak in a first scan in DSC measurement.

<Evaluation of viscoelasticity (temperature at inflection point of storage elastic modulus (G')>

In a case where a storage elastic modulus (G') of the magnetic particle-containing composition obtained by the production method according to the embodiment of the present invention is measured by the following measuring method, it is preferable that the storage elastic modulus (G') has an inflection point. A temperature at the inflection point of the storage elastic modulus (G') is preferably 25°C or higher and lower than 55°C, and more preferably 25°C or higher and lower than 45°C.

(Measuring method)

The viscoelasticity of the magnetic particle-containing composition is measured using a vibration type/rotation type rheometer under the following conditions.

Vibration type/rotation type rheometer:
"MCR302" manufactured by Anton Paar GmbH
Measurement condition:

$\gamma$: 0.1%
$\omega$: 10 rad/s)

Measurement temperature: room temperature (25°C) to 100°C
Temperature rising rate: 0.1 °C/min

Next, the measured data is plotted with the temperature (°C) on the horizontal axis and the storage elastic modulus (G' (unit: Pa)) on the vertical axis, and the temperature at the inflection point of the storage elastic modulus (G') is determined by the following method.

First, a straight line portion before G' rapidly decreases at the beginning is extended to a high temperature side to draw a first straight line (a). Next, a straight line portion after G' first rapidly decreases is extended to a low temperature side to draw a second straight line (b). Thereafter, a vertical line at an intersection of both lines (a) and (b) is drawn on the temperature axis of the horizontal axis, and the temperature is determined as the temperature at the inflection point.

[Applications]

The magnetic particle-containing composition obtained by the production method according to the embodiment of the present invention can be suitably used as a hole-filling composition for a hole portion such as a via hole and a through-hole, provided on a substrate.

In a case where the magnetic particle-containing composition is used as the hole-filling composition, the magnetic particle-containing composition preferably contains the reactive monomer as the binder component, and more preferably contains the epoxy compound and/or the oxetanyl compound.

In a case where the magnetic particle-containing composition contains the epoxy compound and/or the oxetanyl compound as the binder component (preferably contains the liquid epoxy compound and/or the liquid oxetanyl compound as the liquid reactive monomer), examples of a specific procedure of hole filling include a method including the following steps 1 to 3.

Step 1: step of coating a substrate provided with a hole portion such as a via hole and a through-hole with the magnetic particle-containing composition by a known coating method such as a slit coating method, an ink jet method, a spin coating method, a cast coating method, a roll coating method or a screen printing method such that the hole portion is filled with the magnetic particle-containing composition

Step 2: step of heating the magnetic particle-containing composition in the substrate undergone the step 1 at approximately 120°C to 180°C for approximately 30 to 90 minutes such that either or both of the epoxy compound and the oxetanyl compound in the magnetic particle-containing composition are cured

Step 3: step of removing unnecessary portions of the cured product sticking out of a surface of the substrate by physical polishing such that the substrate has a flat surface

In addition, in a case where the magnetic particle-containing composition contains a photocurable reactive monomer as the binder component, it is preferable that the step 2 in the procedures of steps 1 to 3 described above is performed by being changed to a step including an exposure treatment of irradiating the substrate with an active ray or radiation.

In addition, it is also preferable that the magnetic particle-containing composition is formed into a film shape.

In a case where the magnetic particle-containing composition is cured, the magnetic particle-containing composition preferably contains a reactive monomer (preferably a liquid reactive monomer) as the binder component, and more preferably contains the liquid epoxy compound and/or the liquid oxetanyl compound.

A film formed of the magnetic particle-containing composition is suitably used as an electronic component such as an antenna or an inductor provided in an electronic communication device or the like.

From the viewpoint of more excellent magnetic permeability, a film thickness of the film formed of the magnetic particle-containing composition is preferably 1 to 10,000 μm, more preferably 10 to 1,000 μm, and particularly preferably 15 to 800 μm.

[Magnetic particle-containing composition]

The magnetic particle-containing composition according to the embodiment of the present invention is a magnetic particle-containing composition containing magnetic particles, a dispersant, and at least one of a solvent or a liquid reactive monomer,

in which, in a case where the magnetic particle-containing composition is heated from 10°C to 100°C at 10 °C/min using a differential scanning calorimeter, an endothermic peak temperature is 60°C or lower.

The magnetic particle-containing composition according to the embodiment of the present invention corresponds to the magnetic particle-containing composition produced by the above-described production method according to the embodiment of the present invention. Therefore, the various components contained in the magnetic particle-containing composition, the blending amounts thereof, and the physical properties of the magnetic particle-containing composition are the same as those described above.

[Cured product (magnetic particle-containing cured product)]

The cured product (magnetic particle-containing cured product) according to the embodiment of the present invention is formed of the magnetic particle-containing composition obtained by the production method according to the embodiment of the present invention, or formed of the magnetic particle-containing composition according to the embodiment of the present invention.

A shape of the cured product according to the embodiment of the present invention is not particularly limited, and may be, for example, a shape suitable for the shape of the hole portion provided in the substrate or a film shape as described above.

[Method for manufacturing cured product]

The cured product according to the embodiment of the present invention is obtained by curing the magnetic particle-containing composition according to the embodiment of the present invention obtained by the production method according to the embodiment of the present invention, or by curing the magnetic particle-containing composition according to the embodiment of the present invention.

In a case where the magnetic particle-containing composition is cured, the magnetic particle-containing composition preferably contains a reactive monomer (preferably a liquid reactive monomer) as the binder component, and more preferably contains the liquid epoxy compound and/or the liquid oxetanyl compound.

The method for manufacturing the cured product is not particularly limited, but preferably includes the following steps.

· Composition layer forming step
· Curing Step

Hereinafter, the method for manufacturing the cured product according to the embodiment of the present invention will be described with a manufacturing method in a case where the cured product has a film shape as an example. Hereinafter, the film-shaped cured product is referred to as a magnetic particle-containing cured film.

<Composition layer forming step>

In the composition layer forming step, the magnetic particle-containing composition is applied onto a substrate (support) or the like to form a layer (composition layer) of the magnetic particle-containing composition. The substrate may be, for example, a wiring board having an antenna unit or an inductor unit.

As a method of applying the magnetic particle-containing composition onto the substrate, various coating methods such as a slit coating method, an ink jet method, a spin coating method, a cast coating method, a roll coating method, and a screen printing method can be adopted. A film thickness of the composition layer is preferably 1 to 10,000 μm, more preferably 10 to 1,000 μm, and still more preferably 15 to 800 μm. The composition layer applied onto the substrate may be heated (pre-baked), and the pre-baking can be performed, for example, with a hot plate, an oven, or the like at a temperature of 50°C to 140°C for 10 to 1800 seconds. Particularly, the pre-baking is preferably performed in a case where the magnetic particle-containing composition contains a solvent.

<Curing step>

The curing step is not particularly limited as long as the composition layer can be cured, and examples thereof include a heating treatment for heating the composition layer and an exposure treatment for irradiating the composition layer with an actinic ray or radiation.

In a case where the heating treatment is performed, the heating treatment can be performed continuously or batchwise using a heating unit such as a hot plate, a convection oven (hot air circulation dryer), and a high-frequency heater.

A heating temperature in the heating treatment is preferably 120°C to 260°C and more preferably 150°C to 240°C. A heating time is not particularly limited, but is preferably 10 to 1800 seconds.

The pre-baking in the composition layer forming step may also serve as the heating treatment in the curing step.

In a case where the exposure treatment is performed, the irradiation method of actinic ray or radiation is not particularly limited, but it is preferable to perform irradiation through a photo mask having a patterned opening portion.

The exposure is preferably performed by irradiation with radiation. The radiation which can be used for the exposure is preferably ultraviolet rays such as g-ray, h-ray, and i-ray, and a light source is preferably a high-pressure mercury lamp. The irradiation intensity is preferably 5 to 1,500 $mJ/cm^2$ and more preferably 10 to 1,000 $mJ/cm^2$.

In addition, in a case where the magnetic particle-containing composition contains a thermal polymerization initiator, the composition layer may be heated in the above-described exposure treatment. A heating temperature is not particularly limited, but is preferably 80°C to 250°C. A heating time is not particularly limited, but is preferably 30 to 300 seconds.

In a case where the composition layer is heated in the exposure treatment, the exposure treatment may serve as a post-heating step described later. In other words, in a case where the composition layer is heated in the exposure treatment, the method for manufacturing the magnetic particle-containing cured film may not include the post-heating step.

<Developing step>

In a case where the exposure treatment is performed in the curing step, a developing step may be further included.

The developing step is a step of developing the exposed composition layer described above to form the magnetic particle-containing cured film. By this step, the composition layer in a light-unirradiated portion in the exposure treatment is eluted, only a photocured portion remains, and a patterned magnetic particle-containing cured film is obtained.

A type of the developer used in the developing step is not particularly limited, but an alkali developer which does not cause damage to a circuit or the like is desirable.

The development temperature is 20°C to 30°C, for example.

The development time is, for example, 20 to 90 seconds. In recent years, in order to remove the residue better, the development may be performed for 120 to 180 seconds. Furthermore, in order to further improve residue removability, a step of shaking off the developer every 60 seconds and supplying a fresh developer may be repeated several times.

The alkali developer is preferably an alkaline aqueous solution which is prepared by dissolving an alkaline compound in water so that the concentration thereof is 0.001% to 10% by mass (preferably 0.01% to 5% by mass).

Examples of the alkaline compound include sodium hydroxide, potassium hydroxide, sodium carbonate, sodium silicate, sodium metasilicate, ammonia water, ethylamine, diethylamine, dimethylethanolamine, tetramethylammonium hydroxide, tetraethylammonium hydroxide, tetrapropylammonium hydroxide, tetrabutylammonium hydroxy, benzyltrimethylammonium hydroxide, choline, pyrrole, piperidine, and 1,8-diazabicyclo[5.4.0]-7-undecene (among these, an organic alkali is preferable).

Furthermore, in a case where the alkaline compound is used as an alkali developer, the alkaline compound is

generally subjected to a washing treatment with water after development.

<Post-baking>

In a case where the exposure treatment is performed in the curing step, it is preferable to perform a heating treatment (post-baking) after the curing step. The post-baking is a heating treatment to complete the curing. In a case where the developing step is performed, it is preferable to perform the post-baking after the developing step. The heating temperature is preferably 240°C or lower and more preferably 220°C or lower. The lower limit thereof is not particularly limited, but is preferably 50°C or higher and more preferably 100°C or higher, in consideration of an efficient and effective treatment. A heating time is not particularly limited, but is preferably 10 to 1800 seconds.
The post-baking can be performed continuously or batchwise by using a heating unit such as a hot plate, a convection oven (hot air circulation dryer), and a high-frequency heater.
The above-described post-baking is preferably performed in an atmosphere with a low oxygen concentration. The oxygen concentration is preferably 19% by volume or less, more preferably 15% by volume or less, still more preferably 10% by volume or less, particularly preferably 7% by volume or less, and most preferably 3% by volume or less. The lower limit thereof is not particularly limited, but is practically 10 ppm by volume or more.
In addition, the curing may be completed by ultraviolet (UV) irradiation instead of the post-baking by heating described above.
In this case, it is preferable that the magnetic particle-containing composition further contains an UV curing agent. The UV curing agent is preferably an UV curing agent which can be cured at a wavelength shorter than 365 nm that is an exposure wavelength of a polymerization initiator added for a lithography step by ordinary i-line exposure. Examples of the UV curing agent include CIBA IRGACURE 2959 (trade name). In a case where the UV irradiation is performed, it is preferable that the composition layer is a material which cures at a wavelength of 340 nm or less. There is no particular lower limit value of the wavelength, but 220 nm or more is common. In addition, an exposure amount of the UV irradiation is preferably 100 to 5,000 mJ, more preferably 300 to 4,000 mJ, and still more preferably 800 to 3,500 mJ. In order to perform low temperature curing more effectively, it is preferable that the UV curing step is performed after the exposure treatment. It is preferable to use an ozoneless mercury lamp as an exposure light source.

[Magnetic particle-introduced substrate and electronic material]

The magnetic particle-introduced substrate according to the embodiment of the present invention includes a substrate in which a hole portion is formed, and the above-described cured product (magnetic particle-containing cured product) according to the embodiment of the present invention, which is disposed in the hole portion.
The hole portion may be a through-hole or a recessed portion. Examples of the substrate in which the hole portion is formed include a wiring board in which a via hole, a through-hole, or the like is formed. The method for forming the cured product according to the embodiment of the present invention is as described above.
The above-described magnetic particle-introduced substrate can be applied to, for example, an electronic material such as an inductor.

Examples

Hereinafter, the present invention will be described in more detail with reference to Examples. The materials, the amounts of materials used, the proportions, the treatment details, the treatment procedure, and the like shown in Examples below may be appropriately modified as long as the modifications do not depart from the spirit of the present invention. Therefore, the scope of the present invention should not be construed as being limited to Examples.
In the following description, unless otherwise specified, "%" means "% by mass" and "part" means "part by mass".

[Various components used for preparing composition]

Respective components described in Table 1 were prepared in for preparing a composition. Each component described in Table 1 is shown below.

[Magnetic particles]

The following particles were used as magnetic particles.

· P-1: Fe-Mn based ferrite 1 [concentration of solid contents: 100% by mass, volume average particle size: 40 μm]
· P-2: Fe-Mn based ferrite 2 [concentration of solid contents: 100% by mass, volume average particle size: 20 μm]

· P-3: Fe-Mn based ferrite 3 [concentration of solid contents: 100% by mass, volume average particle size: 10 μm]
· P-4: Ni-Zn based ferrite 1 [concentration of solid contents: 100% by mass, volume average particle size: 40 μm]
· P-5: Ni-Zn based ferrite 2 [concentration of solid contents: 100% by mass, volume average particle size: 20 μm]
· P-6: Ni-Zn based ferrite 3 [concentration of solid contents: 100% by mass, volume average particle size: 10 μm]
· P-7: AW2-08 PF-3F [manufactured by Epson Atmix Corporation, concentration of solid contents: 100% by mass, volume average particle size: 3 μm]
· P-8: AW2-08 PF-3F [manufactured by Epson Atmix Corporation, concentration of solid contents: 100% by mass, volume average particle size: 3 μm]
· P-9: AW2-08 PF-3F [manufactured by Epson Atmix Corporation, concentration of solid contents: 100% by mass, volume average particle size: 3 μm]
· P-10: 80% Ni-4Mo PF-SF[Manufactured by Epson Atmix Corporation, concentration of solid contents: 100% by mass, volume average particle size: 5 μm]
· P-11: 80% Ni-4Mo PF-SF[Manufactured by Epson Atmix Corporation, concentration of solid contents: 100% by mass, volume average particle size: 5 μm]
· P-12: 80% Ni-4Mo PF-SF[Manufactured by Epson Atmix Corporation, concentration of solid contents: 100% by mass, volume average particle size: 5 μm]
· P-13: ATFINENC1 PF3FA [Manufactured by Epson Atmix Corporation, concentration of solid contents: 100% by mass, volume average particle size: 3 μm]
· P-14: ATFINENC1 PF3FA [Manufactured by Epson Atmix Corporation, concentration of solid contents: 100% by mass, volume average particle size: 3 μm]
· P-15: ATFINENC1 PF3FA [Manufactured by Epson Atmix Corporation, concentration of solid contents: 100% by mass, volume average particle size: 3 μm]
· P-16: EA-SMP-10 PF-5F [Manufactured by Epson Atmix Corporation, concentration of solid contents: 100% by mass, volume average particle size: 4 μm]
· P-17: EA-SMP-10 PF-5F [Manufactured by Epson Atmix Corporation, concentration of solid contents: 100% by mass, volume average particle size: 4 μm]
· P-18: EA-SMP-10 PF-5F [Manufactured by Epson Atmix Corporation, concentration of solid contents: 100% by mass, volume average particle size: 4 μm]
· P-19: organic-coated particles with AW2-08 PF-3F (manufactured by Epson Atmix Corporation) with reference to JP2016-60682A (concentration of solid contents: 100% by mass, volume average particle size: 3 μm)
· P-20: inorganic-coated (coated with 100 nm $SiO_2$ using powder ALD) particles with AW2-08 PF-3F (manufactured by Epson Atmix Corporation) (concentration of solid contents: 100% by mass, volume average particle size: 3 μm)

[Dispersant]

The following compounds were used as a dispersant.

In the dispersants shown below, a numerical value described together with each structural unit included in a main chain means % by mass of each structural unit with respect to all structural units. In addition, a numerical value described together with each structural unit included in a side chain represents the repetition number.

D-1 to D-6 shown below correspond to the specific dispersant, and D-7 and D-8 correspond to a comparative dispersant.

· D-1: compound shown below (weight-average molecular weight: 20,000) (concentration of solid contents: 100% by mass)

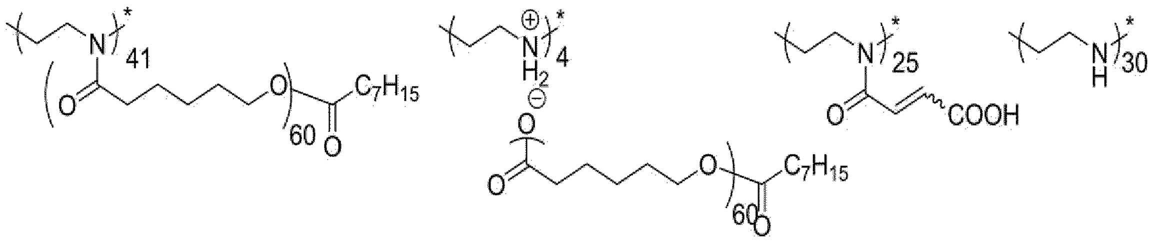

· D-2: compound obtained by the following synthesis method (weight-average molecular weight: 7,000, acid value: 35.0 mgKOH/g, amine value: 17.4 mgKOH/g) (concentration of solid contents: 100% by mass); D-2 was synthesized with reference to the description in paragraphs 0134 to 0138 of JP2017-157252A.

(Synthesis of polyester (i-1))

16.8 g of n-octanoic acid (manufactured by FUJIFILM Wako Pure Chemical Corporation) as a carboxylic acid, 100 g of ε-caprolactone (PLAKCEL M manufactured by Daicel Corporation) as a lactone, and 2.2 g of monobutyltin oxide (structure: $C_4H_9Sn(O)OH$, manufactured by FUJIFII,M Wako Pure Chemical Corporation) as a catalyst were mixed in a 500 mL three-neck flask, and heated at 160°C for 1 hour. 100 g of ε-caprolactone was added dropwise thereto over 5 hours, and the mixture was further stirred for 2 hours. Thereafter, the mixture was cooled to room temperature to obtain a polyester (i-1).

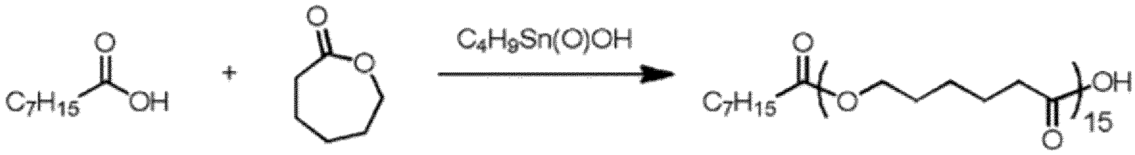


(Synthesis of polyalkyleneimine-based polymer)

2.4 g of polyethylenimine (SP-006 manufactured by Nippon Shokubai Co., Ltd., number-average molecular weight: 600) and 100 g of the polyester (i-1) were mixed, and the mixed liquid was heated at a temperature of 110°C for 3 hours to obtain a polyalkyleneimine-based polymer.

With the obtained polyalkyleneimine-based polymer, from $^1$H-NMR, $^{13}$C-NMR, and elemental analysis using a combustion method, it was confirmed that a proportion of a polyalkyleneimine chain in the polyalkyleneimine-based polymer (polyalkyleneimine chain ratio) was 2.3% by mass.

· D-3: compound shown below (weight-average molecular weight: 10,000) (concentration of solid contents: 20% by mass, dilution solvent: PGMEA)

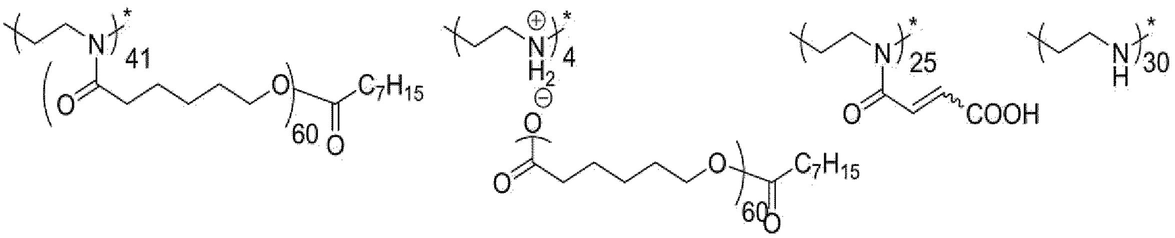

· D-4: compound shown below (weight-average molecular weight: 20,000) (concentration of solid contents: 100% by mass)

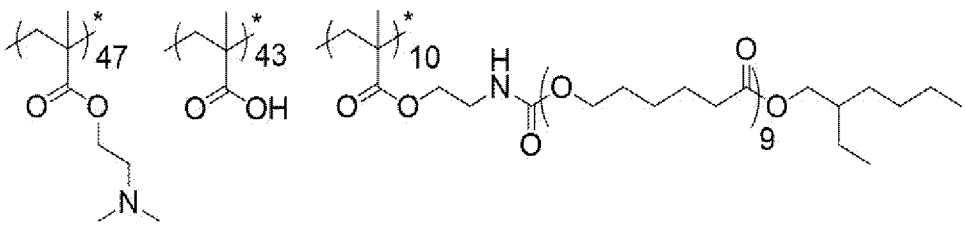

· D-5: compound shown below (weight-average molecular weight: 20,000) (concentration of solid contents: 100% by mass)

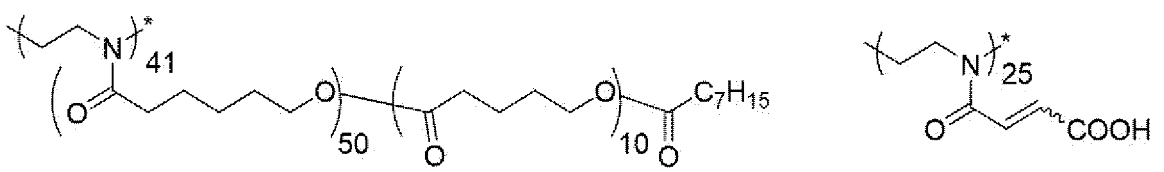

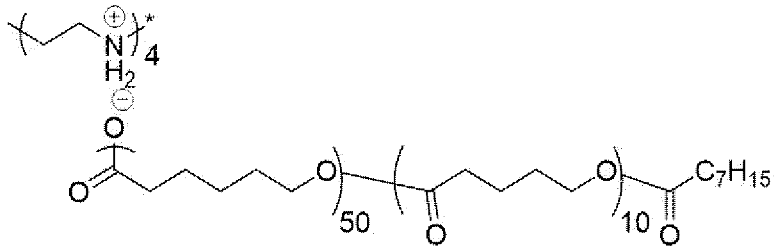

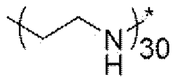

· D-6: compound shown below (weight-average molecular weight: 20,000) (concentration of solid contents: 100% by mass)

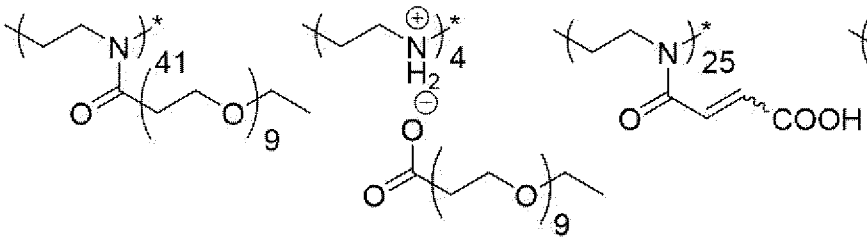

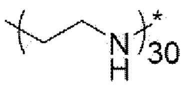

· D-7: compound shown below (weight-average molecular weight: 20,000) (concentration of solid contents: 100% by mass)

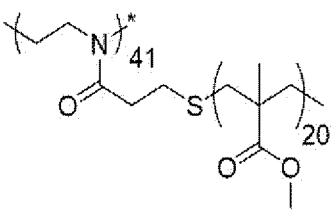

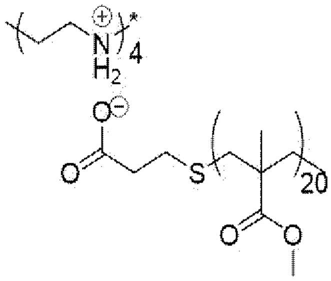

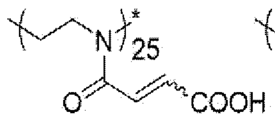

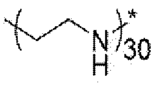

· D-8: compound shown below (weight-average molecular weight: 20,000) (concentration of solid contents: 100% by mass)

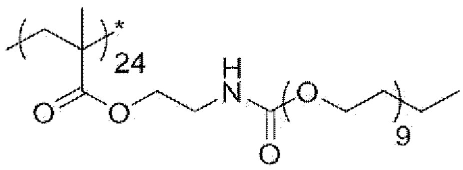

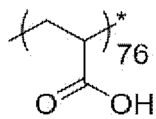

[Rheology control agent or other binders, and liquid reactive monomer]

As a rheology control agent, each of the following compounds B-1 to B-3 was used.

As other binders (binders other than a liquid reactive monomer), each of the following compounds B-4 and B-8 to B-10 was used.

As a liquid reactive monomer, the following B-5 to B-7 and LM-1 to LM-5 were used.

· B-1: product name "FLOWNON RCM-100" (fatty acid ester/aromatic ester, manufactured by KYOEISHA CHEMICAL CO., LTD., concentration of solid contents: 100% by mass, corresponding to the rheology control agent)
· B-2: product name "Talen VA705B (higher aliphatic acid amide, manufactured by KYOEISHA CHEMICAL CO., LTD., concentration of solid contents: 100% by mass, corresponding to the rheology control agent)
· B-3: product name "BYK P-105" (polymer of low-molecular-weight unsaturated carboxylic acid, manufactured by BYK-Chemie GmbH, concentration of solid contents: 100% by mass, corresponding to the rheology control agent)

· B-4: product name "EHPE 3150" (1,2-epoxy-4-(2-oxiranyl)cyclohexane adduct of 2,2-bis(hydroxymethyl)-1-butanol, manufactured by Daicel Corporation, concentration of solid contents: 100% by mass)
· B-5: product name "CELLOXIDE 2021P" (3',4'-epoxycyclohexylmethyl 3,4-epoxycyclohexanecarboxylate, manufactured by Daicel Corporation, concentration of solid contents: 100% by mass)
· B-6: product name "ZX1059" (mixture of bisphenol A-type epoxy resin and bisphenol F-type epoxy resin, manufactured by NIPPON STEEL Chemical & Material Co., Ltd., concentration of solid contents: 100% by mass)
· B-7: product name "828US" (bisphenol A-type epoxy resin, manufactured by Mitsubishi Chemical Corporation, concentration of solid contents: 100% by mass)
· B-8: product name "HP-4700" (naphthalene-type tetrafunctional epoxy resin, manufactured by DIC Corporation, concentration of solid contents: 100% by mass)
· B-9: product name "YX7553 BH30" (phenoxy resin, manufactured by Mitsubishi Chemical Corporation, concentration of solid contents: 30% by mass, dilution solvent: MEK (boiling point: 80°C)/cyclohexanone (boiling point: 173°C))
· B-10: product name "KS-1" (polyvinyl acetal resin, manufactured by SEKISUI CHEMICAL CO., LTD., concentration of solid contents: 100% by mass)
· LM-1: product name "DENACOL EX-314" (glycerol polyglycidyl ether, manufactured by Nagase ChemteX Corporation, concentration of solid contents: 100% by mass)
· LM-2: product name "DENACOL EX-512" (polyglycerol polyglycidyl ether manufactured by Nagase ChemteX Corporation, concentration of solid contents: 100% by mass)
· LM-3: product name "KAYARAD RP-1040" (the following compound, manufactured by Nippon Kayaku Co., Ltd., concentration of solid contents: 100% by mass)

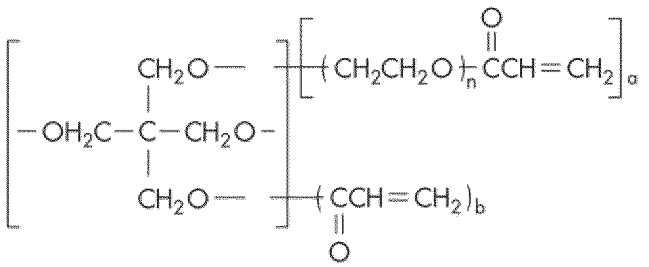

$a+b=4,\ \bar{n}=4$

· LM-4: product name "HP-4700" (naphthalene-type tetrafunctional epoxy resin, manufactured by DIC Corporation, concentration of solid contents: 100% by mass)
· LM-5: product name "CATANA (registered trademark) EPOX 2015" (2-ethylhexyl glycidyl ether, manufactured by SACHEM, INC., concentration of solid contents: 100% by mass)

[Additive]

· A-1: product name "HISHICOLIN PX-4MP" (phosphate-based epoxy curing accelerator, manufactured by Nippon Chemical Industrial CO., LTD., concentration of solid contents: 100% by mass)
· A-2: product name "LA-7054" (novolac-type phenol resin curing agent, manufactured by DIC Corporation, concentration of solid contents: 60% by mass, dilution solvent: MEK (boiling point 80°C))
· A-3: product name "2E4MZ" (2-ethyl-4-methylimidazole (curing accelerator), manufactured by SHIKOKU CHEMICALS CORPORATION., concentration of solid contents: 100% by mass)
· A-4: product name "SO-C2" (silica particles, manufactured by Admatechs., concentration of solid contents: 100% by mass)
· A-5: product name "KBM-573" (N-phenyl-3-aminopropyltrimethoxysilane, manufactured by Shin-Etsu Chemical Co., Ltd., concentration of solid contents: 100% by mass)
· A-6: product name "Irgacure OXE03" (photopolymerization initiator, manufactured by BASF SE, concentration of solid contents: 100% by mass)
· A-7: product name "KF6001" (silicone-based surfactant, manufactured by Shin-Etsu Chemical Co., Ltd., concentration of solid contents: 100% by mass)
· A-8: product name "HNA-100" (acid anhydride-based curing agent, manufactured by New Japan Chemical Co.,

Ltd., concentration of solid contents: 100% by mass)

[Solvent]

- S-1: PGMEA (propylene glycol monomethyl ether acetate (boiling point: 146°C), manufactured by Tokyo Chemical Industry Co., Ltd.)
- S-2: 1,6-HDDA (1,6-hexanediol diacetate (boiling point: 260°C), manufactured by Daicel Corporation)
- S-3: glycerol triacetate (boiling point: 260°C, manufactured by FUJIFILM Wako Pure Chemical Corporation)
- S-4: cyclohexanone (boiling point: 173°C, manufactured by FUJIFILM Wako Pure Chemical Corporation)
- S-5: methyl ethyl ketone (MEK (boiling point: 80°C), manufactured by FUJIFILM Wako Pure Chemical Corporation)

[Production of compositions of Examples and Comparative Examples 1, 2, 4, and 5]

By performing the following steps 1 and 2, each composition of Examples (Examples 1 to 29) and Comparative Examples 1, 2, 4, and 5 was produced.

[Step A: preparation of precursor composition]

Components described in Table 1, other than the solvent, were mixed to have formulation (parts by mass) shown in Table 1, and the mixture was put into an airtight container made of polytetrafluoroethylene (PTFE). Subsequently, the solvent was added thereto to have formulation (parts by mass) shown in Table 1, the container was sealed, and the mixture was dispersed at 50 G for 1 hour using a low frequency resonance acoustic mixer (RAM) manufactured by Resodyn Acoustic Mixers, Inc., thereby preparing a precursor composition.

[Step B: low temperature treatment of precursor composition]

The prepared precursor composition was placed in a constant-temperature tank at a temperature described in the column of "Low temperature treatment" in Table 1, and stored for 24 hours.

[Production of composition of Comparative Example 3]

A composition of Comparative Example 3 was produced by the same method as in Examples (Examples 1 to 29) and Comparative Examples 1, 2, 4, and 5, except that the step B was not performed.

[Various measurements]

The following measurements were carried out on each of the produced compositions of Examples and Comparative Examples.

[DSC measurement of composition]

Each sample was weighed 1 g at a time and subjected to a heat flow evaluation in which the sample was heated from 10°C to 100°C at 10 °C/min in a DSC3 (manufactured by METTLER TOLEDO), and the behavior of an endothermic peak during the first scan was confirmed.

[Viscoelastic measurement of composition]

The viscoelasticity of the produced magnetic paste was measured ($\gamma$ = 0.1%, $\omega$ = 10 rad/s) using MCR302 (rheometer manufactured by Anton Paar GmbH).

The viscoelasticity was measured by increasing the temperature from room temperature (25°C) to 100°C at a rate of 0.1 °C/min. Next, the measured data was plotted with the temperature (°C) on the horizontal axis and the storage elastic modulus (G' (unit: Pa)) on the vertical axis, and the temperature at the inflection point of the storage elastic modulus (G') was determined by the following method.

First, a straight line portion before G' rapidly decreased at the beginning was extended to a high temperature side to draw a first straight line (a). Next, a straight line portion after G' first rapidly decreased was extended to a low temperature side to draw a second straight line (b). Thereafter, a vertical line at an intersection of both lines (a) and (b)

was drawn on the temperature axis of the horizontal axis, and the temperature was determined as the temperature at the inflection point and evaluated according to the following standard.

"A": case where the temperature at the inflection point was 25°C or higher and lower than 45°C
"B": case where the temperature at the inflection point was 45°C or higher and lower than 55°C
"C": case where the temperature at the inflection point was lower than 25°C or 55°C or higher, or a case where the inflection point was not observed

[Evaluation]

[Evaluation of temporal stability]

Each of the compositions was put in a glass container (transparent and capable of perceiving the inside) by 1 kg and allowed to stand at 25 degC, and the period until transparent components bleed out was measured.

(Evaluation standard)

"5": for 6 months or more
"4": for 2 months or more and less than 6 months
"3": for 1 week or more and less than 2 months
"2": for 3 days or more and less than 1 week
"1": for less than 1 week

[Evaluation of coating properties after stirring]

After stirring with a turbular mixer and allowing to stand at room temperature for 1 hour, 100 nm-thick silicon substrates were prepared, coated with each composition using an applicator having a gap of 100 μm, and evaluated in the following two grades depending on whether or not the coating was performed.

(Evaluation standard)

"A": coating could be performed.
"B": coating could not be performed.

[Evaluation of coating properties after heating]

After taking a hot bath of each composition in a water bath at 60°C for 15 minutes and allowing to stand at room temperature for 1 hour, 100 nm-thick silicon substrates were prepared, coated with applicators having a gap of 100 μm, and evaluated in the following two grades depending on whether or not the coating was performed.

"A": coating could be performed.
"B": coating could not be performed.

[Magnetic properties (magnetic permeability)]

<Production of sample substrate for measurement>

An Si wafer having a thickness of 100 μm was coated with CT4000 (manufactured by FUJIFII,M Electronic Materials Co., Ltd.) to produce a substrate.

The obtained substrate was coated with each of the compositions of Examples and Comparative Examples using an applicator having a gap of 100 μm, thereby obtaining a coating film. Next, in a case where the composition with which the wafer was coated did not contain a photopolymerization initiator, the obtained coating film was dried by heating under drying conditions of 100°C for 120 seconds, and then heated at 230°C for 15 minutes, thereby producing a substrate with a cured film. In addition, in a case where the composition with which the wafer was coated contained

a photopolymerization initiator, the coating film was subjected to an exposure treatment with a proximity exposure machine under the conditions of 1,000 mJ/cm$^2$ and heated at 230°C for 10 minutes, thereby producing a substrate with a cured film.

Thereafter, the obtained substrate with a cured film was cut into pieces having a size of 1 cm × 2.8 cm, thereby producing a sample substrate for measurement.

Subsequently, by using PER-01 (manufactured by KEYCOM Corp., high-frequency magnetic permeability measuring device), magnetic properties (a specific magnetic permeability (μ'A) at 60 MHz) of the film in each of the obtained sample substrates for measurement were measured.

<Evaluation standard (specific magnetic permeability)>

"3":

$$\mu'A \geq 10$$

"2":

$$10 > \mu'A \geq 7.5$$

"1":

$$7.5 > \mu'A$$

Table 1 is shown below.

[Table 1]

| Table 1 (1) | Magnetic particles | | Dispersant | | Organic rheology control agent or other binders | | Liquid reactive monomer | | Other additives | | Solvent | | Low temperature treatment | DSC measurement result [peak temperature in 1st heating] | Viscoelasticity measurement result [inflection point of G' in 1 st heating] | Evaluation result | | | |
|---|---|---|---|---|---|---|---|---|---|---|---|---|---|---|---|---|---|---|---|
| | | | | | | | | | | | | | | | | Temporal stability | Coating properties | | Magnetic properties |
| | Type | Part by mass | Type | Part by mass | Type | Part by mass | Type | Part by mass | Type | Part by mass | Type | Part by mass | | | | | After stirring | After heating | |
| Example 1 | P-1 | 42.8 | D-1 | 0.9 | B-1 | 0.4 | LM-1 | 3.2 | | | S-1 | 9.9 | -10°C | 28°C | A | 5 | A | A | 3 |
| | P-17 | 42.8 | | | | | | | | | | | | | | | | | |
| | | | | | | | | | | | | | | | | | | | |
| Example | P-1 | 42.8 | D-2 | 0.9 | B-1 | 0.4 | LM-1 | 3.2 | | | S-1 | 9.9 | -10°C | 27°C | A | 5 | A | A | 3 |
| | P-17 | 42.8 | | | | | | | | | | | | | | | | | |
| | | | | | | | | | | | | | | | | | | | |
| Example 3 | P-1 | 42.8 | D-3 | 4.49 | B-1 | 0.4 | LM-1 | 3.2 | | | S-1 | 6.31 | -10°C | 27°C | A | 5 | A | A | 3 |
| | P-17 | 42.8 | | | | | | | | | | | | | | | | | |
| | | | | | | | | | | | | | | | | | | | |
| Example 4 | P-1 | 42.8 | D-4 | 0.9 | B-1 | 0.4 | LM-1 | 3.2 | | | S-1 | 9.9 | -10°C | 26°C | A | 5 | A | A | 3 |
| | P-17 | 42.8 | | | | | | | | | | | | | | | | | |
| | | | | | | | | | | | | | | | | | | | |
| Example 5 | P-1 | 42.8 | D-5 | 0.9 | B-1 | 0.4 | LM-1 | 3.2 | | | S-1 | 9.9 | -10°C | 27°C | A | 4 | A | A | 3 |
| | P-17 | 42.8 | | | | | | | | | | | | | | | | | |
| | | | | | | | | | | | | | | | | | | | |
| Example 6 | P-1 | 42.8 | D-6 | 0.9 | B-1 | 0.4 | LM-1 | 3.2 | | | S-1 | 9.9 | -10°C | 27°C | A | 3 | A | A | 3 |
| | P-17 | 42.8 | | | | | | | | | | | | | | | | | |
| | | | | | | | | | | | | | | | | | | | |
| Example 7 | P-1 | 42.8 | D-1 | 0.45 | B-1 | 0.45 | LM-1 | 3.6 | | | S-1 | 9.9 | -10°C | 27°C | A | 4 | A | A | 3 |
| | P-17 | 42.8 | | | | | | | | | | | | | | | | | |
| | | | | | | | | | | | | | | | | | | | |

[Table 2]

| Table 1 (2) | Magnetic particles | | Dispersant | | Organic rheology control agent or other binders | | Liquid reactive monomer | | Other additives | | Solvent | | Low temperature treatment | DSC measurement result [peak temperature in 1st heating] | Viscoelasticity measurement result [inflection point of G' in 1st heating] | Evaluation result | | | |
|---|---|---|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | | | | Temporal stability | Coating properties After stirring | Coating properties After heating | Magnetic properties |
| Example 8 | P-1 | 42.8 | D-1 | 0.18 | B-1 | 0.48 | LM-1 | 3.84 | | | S-1 | 9.9 | -10°C | 27°C | A | 3 | A | A | 3 |
| | P-17 | 42.8 | | | | | | | | | | | | | | | | | |
| | | | | | | | | | | | | | | | | | | | |
| Example 9 | P-1 | 42.8 | D-1 | 0.9 | | | LM-1 | 3.6 | | | S-1 | 9.9 | -10°C | 28°C | A | 3 | A | A | 3 |
| | P-17 | 42.8 | | | | | | | | | | | | | | | | | |
| | | | | | | | | | | | | | | | | | | | |
| Example 10 | P-1 | 42.8 | D-1 | 0.9 | B-1 | 0.4 | LM-1 | 3.2 | | | S-1 | 9.9 | -15°C | 27°C | A | 5 | A | A | 3 |
| | P-17 | 42.8 | | | | | | | | | | | | | | | | | |
| | | | | | | | | | | | | | | | | | | | |
| Example 11 | P-1 | 42.8 | D-1 | 0.9 | B-1 | 0.4 | LM-1 | 3.2 | | | S-1 | 9.9 | 0°C | 27°C | A | 5 | A | A | 3 |
| | P-17 | 42.8 | | | | | | | | | | | | | | | | | |
| | | | | | | | | | | | | | | | | | | | |
| Example 12 | P-1 | 42.8 | D-1 | 0.9 | B-1 | 0.4 | LM-1 | 3.2 | | | S-1 | 9.9 | 5°C | 27°C | A | 4 | A | A | 3 |
| | P-17 | 42.8 | | | | | | | | | | | | | | | | | |
| | | | | | | | | | | | | | | | | | | | |
| Example 13 | P-1 | 41.4 | D-1 | 0.9 | B-1 | 0.7 | LM-1 | 5.6 | | | S-1 | 10 | -10°C | 27°C | B | 5 | A | A | 3 |
| | P-17 | 41.4 | | | | | | | | | | | | | | | | | |
| | | | | | | | | | | | | | | | | | | | |

(continued)

| Table 1 (2) | Magnetic particles | | Dispersant | | Organic rheology control agent or other binders | | Liquid reactive monomer | | Other additives | | Solvent | | Low temperature treatment | DSC measurement result [peak temperature in 1st heating] | Viscoelasticity measurement result [inflection point of G' in 1st heating] | Evaluation result | | | |
|---|---|---|---|---|---|---|---|---|---|---|---|---|---|---|---|---|---|---|---|
| | | | | | | | | | | | | | | | | Temporal stability | Coating properties | | Magnetic properties |
| | Type | Part by mass | Type | Part by mass | Type | Part by mass | Type | Part by mass | Type | Part by mass | Type | Part by mass | | | | | After stirring | After heating | |
| Example 14 | P-1 | 44.2 | D-1 | 0.98 | B-1 | 0.41 | LM-1 | 3.31 | | | S-1 | 6.9 | -10°C | 27°C | A | 5 | A | A | 3 |
| | P-17 | 44.2 | | | | | | | | | | | | | | | | | |
| | | | | | | | | | | | | | | | | | | | |
| Example 15 | P-1 | 42.8 | D-1 | 0.9 | B-1 | 0.72 | LM-1 | 5.79 | | | S-1 | 7 | -10°C | 27°C | A | 5 | A | A | 3 |
| | P-17 | 42.8 | | | | | | | | | | | | | | | | | |
| | | | | | | | | | | | | | | | | | | | |

[Table 3]

| Table 1 (3) | Magnetic particles | | Dispersant | | Organic rheology control agent or other binders | | Liquid reactive monomer | | Other additives | | Solvent | | Low temperature treatment | DSC measurement result [peak temperature in 1st heating] | Viscoelasticity measurement result [inflection point of G' in 1 st heating] | Evaluation result | | | |
|---|---|---|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | | | | Temporal stability | Coating properties: After stirring | Coating properties: After heating | Magnetic properties |
| Example 16 | P-1 | 42.8 | D-1 | 0.9 | B-1 | 0.4 | LM-1 | 3.2 | | | S-1 | 9.9 | -10°C | 28°C | A | 5 | A | A | 3 |
| | P-19 | 21.4 | | | | | | | | | | | | | | | | | |
| | P-20 | 21.4 | | | | | | | | | | | | | | | | | |
| Example 17 | P-7 | 85.6 | D-1 | 0.9 | B-1 | 0.4 | LM-1 | 3.2 | | | S-1 | 9.9 | -10°C | 28°C | A | 5 | A | A | 2 |
| | | | | | | | | | | | | | | | | | | | |
| | | | | | | | | | | | | | | | | | | | |

(continued)

| Table 1 (3) | Magnetic particles | | Dispersant | | Organic rheology control agent or other binders | | Liquid reactive monomer | | Other additives | | Solvent | | Low temperature treatment | DSC measurement result [peak temperature in 1st heating] | Viscoelasticity measurement result [inflection point of G' in 1 st heating] | Evaluation result | | | |
|---|---|---|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | | | | Temporal stability | Coating properties After stirring | Coating properties After heating | Magnetic properties |
| Example 18 | P-1 | 4.28 | D-1 | 0.9 | B-1 | 0.4 | LM-1 | 3.2 | | | S-1 | 9.9 | -10°C | 28°C | A | 5 | A | A | 2 |
| | P-2 | 4.28 | | | | | | | | | | | | | | | | | |
| | P-3 | 4.28 | | | | | | | | | | | | | | | | | |
| | P-4 | 4.28 | | | | | | | | | | | | | | | | | |
| | P-5 | 4.28 | | | | | | | | | | | | | | | | | |
| | P-6 | 4.28 | | | | | | | | | | | | | | | | | |
| | P-7 | 4.28 | | | | | | | | | | | | | | | | | |
| | P-8 | 4.28 | | | | | | | | | | | | | | | | | |
| | P-9 | 4.28 | | | | | | | | | | | | | | | | | |
| | P-10 | 4.28 | | | | | | | | | | | | | | | | | |
| | P-11 | 4.28 | | | | | | | | | | | | | | | | | |
| | P-12 | 4.28 | | | | | | | | | | | | | | | | | |
| | P-13 | 4.28 | | | | | | | | | | | | | | | | | |
| | P-14 | 4.28 | | | | | | | | | | | | | | | | | |
| | P-15 | 4.28 | | | | | | | | | | | | | | | | | |
| | P-16 | 4.28 | | | | | | | | | | | | | | | | | |
| | P-17 | 4.28 | | | | | | | | | | | | | | | | | |
| | P-18 | 4.28 | | | | | | | | | | | | | | | | | |
| | P-19 | 4.28 | | | | | | | | | | | | | | | | | |
| | P-20 | 4.28 | | | | | | | | | | | | | | | | | |

[Table 4]

| Table 1 (4) | Magnetic particles | | Dispersant | | Organic rheology control agent or other binders | | Liquid reactive monomer | | Other additives | | Solvent | | Low temperature treatment | DSC measurement result [peak temperature in 1st heating] | Viscoelasticity measurement result [inflection point of G' in 1st heating] | Evaluation result | | | |
|---|---|---|---|---|---|---|---|---|---|---|---|---|---|---|---|---|---|---|---|
| | | | | | | | | | | | | | | | | Temporal stability | Coating properties | | Magnetic properties |
| | Type | Part by mass | Type | Part by mass | Type | Part by mass | Type | Part by mass | Type | Part by mass | Type | Part by mass | | | | | After stirring | After heating | |
| Example 19 | P-1 | 42.8 | D-1 | 0.45 | B-1 | 0.4 | LM-1 | 3.2 | | | S-1 | 9.9 | -10°C | 28°C | A | 5 | A | A | 3 |
| | P-17 | 42.8 | D-2 | 0.45 | | | | | | | | | | | | | | | |
| | | | | | | | | | | | | | | | | | | | |
| Example 20 | P-1 | 42.8 | D-1 | 0.9 | B-1 | 0.14 | LM-1 | 3.2 | | | S-1 | 9.9 | -10°C | 28°C | A | 5 | A | A | 3 |
| | P-17 | 42.8 | | | B-2 | 0.13 | | | | | | | | | | | | | |
| | | | | | B-3 | 0.13 | | | | | | | | | | | | | |
| Example 21 | P-1 | 42.8 | D-1 | 0.9 | B-1 | 0.4 | LM-1 | 1.6 | | | S-1 | 9.9 | -10°C | 28°C | A | 5 | A | A | 3 |
| | P-17 | 42.8 | | | B-4 | 0.2 | | | | | | | | | | | | | |
| | | | | | | | B-5 | 0.2 | | | | | | | | | | | |
| | | | | | | | B-6 | 0.2 | | | | | | | | | | | |
| | | | | | | | B-7 | 0.2 | | | | | | | | | | | |
| | | | | | B-8 | 0.2 | | | | | | | | | | | | | |
| | | | | | B-9 | 0.2 | | | | | | | | | | | | | |
| | | | | | B-10 | 0.2 | | | | | | | | | | | | | |
| | | | | | | | | | A-8 | 0.2 | | | | | | | | | |

(continued)

| Table 1 (4) | Magnetic particles | | Dispersant | | Organic rheology control agent or other binders | | Liquid reactive monomer | | Other additives | | Solvent | | Low temperature treatment | DSC measurement result [peak temperature in 1st heating] | Viscoelasticity measurement result [inflection point of G' in 1st heating] | Evaluation result | | | |
|---|---|---|---|---|---|---|---|---|---|---|---|---|---|---|---|---|---|---|---|
| | | | | | | | | | | | | | | | | Temporal stability | Coating properties | | Magnetic properties |
| | Type | Part by mass | Type | Part by mass | Type | Part by mass | Type | Part by mass | Type | Part by mass | Type | Part by mass | | | | | After stirring | After heating | |
| Example 22 | P-1 | 42.8 | D-1 | 0.9 | B-1 | 0.39 | LM-1 | 2.6 | A-1 | 0.1 | S-1 | 9.9 | -10°C | 28°C | A | 5 | A | A | 3 |
| | P-17 | 42.8 | | | | | | | A-2 | 0.1 | | | | | | | | | |
| | | | | | | | | | A-3 | 0.1 | | | | | | | | | |
| | | | | | | | | | A-4 | 0.1 | | | | | | | | | |
| | | | | | | | | | A-5 | 0.1 | | | | | | | | | |
| | | | | | | | | | A-6 | 0.1 | | | | | | | | | |
| | | | | | | | | | A-7 | 0.01 | | | | | | | | | |

[Table 5]

| Table 1 (5) | Magnetic particles | | Dispersant | | Organic rheology control agent or other binders | | Liquid reactive monomer | | Other additives | | Solvent | | Low temperature treatment | DSC measurement result [peak temperature in 1st heating] | Viscoelasticity measurement result [inflection point of G' in 1st heating] | Evaluation result | | | |
|---|---|---|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | | | | Temporal stability | Coating properties | | Magnetic properties |
| | | | | | | | | | | | | | | | | | After stirring | After heating | |
| Example 23 | P-1 | 42.8 | D-1 | 0.9 | B-1 | 0.4 | LM-1 | 0.64 | | | S-1 | 9.9 | -10°C | 28°C | A | 5 | A | A | 3 |
| | P-17 | 42.8 | | | | | LM-2 | 0.64 | | | | | | | | | | | |
| | | | | | | | LM-3 | 0.64 | | | | | | | | | | | |
| | | | | | | | LM-4 | 0.64 | | | | | | | | | | | |
| | | | | | | | LM-5 | 0.64 | | | | | | | | | | | |
| | | | | | | | | | | | | | | | | | | | |
| Example 24 | P-1 | 42.8 | D-1 | 0.9 | B-1 | 0.4 | LM-1 | 3.2 | | | S-2 | 9.9 | -10°C | 28°C | A | 5 | A | A | 3 |
| | P-17 | 42.8 | | | | | | | | | | | | | | | | | |
| | | | | | | | | | | | | | | | | | | | |
| Example 25 | P-1 | 42.8 | D-1 | 0.9 | B-1 | 0.4 | LM-1 | 3.2 | | | S-3 | 9.9 | -10°C | 28°C | A | 5 | A | A | 3 |
| | P-17 | 42.8 | | | | | | | | | | | | | | | | | |
| | | | | | | | | | | | | | | | | | | | |
| Example 26 | P-1 | 42.8 | D-1 | 0.9 | B-1 | 0.4 | LM-1 | 3.2 | | | S-4 | 9.9 | -10°C | 28°C | A | 5 | A | A | 3 |
| | P-17 | 42.8 | | | | | | | | | | | | | | | | | |
| | | | | | | | | | | | | | | | | | | | |
| Example 27 | P-1 | 42.8 | D-1 | 0.9 | B-1 | 0.4 | LM-1 | 3.2 | | | S-5 | 9.9 | -10°C | 28°C | A | 5 | A | A | 3 |
| | P-17 | 42.8 | | | | | | | | | | | | | | | | | |
| | | | | | | | | | | | | | | | | | | | |

(continued)

| Table 1 (5) | Magnetic particles | | Dispersant | | Organic rheology control agent or other binders | | Liquid reactive monomer | | Other additives | | Solvent | | Low temperature treatment | DSC measurement result [peak temperature in 1st heating] | Viscoelasticity measurement result [inflection point of G' in 1st heating] | Evaluation result | | | |
|---|---|---|---|---|---|---|---|---|---|---|---|---|---|---|---|---|---|---|---|
| | | | | | | | | | | | | | | | | Temporal stability | Coating properties | | Magnetic properties |
| | Type | Part by mass | Type | Part by mass | Type | Part by mass | Type | Part by mass | Type | Part by mass | Type | Part by mass | | | | | After stirring | After heating | |
| Example 28 | P-1 | 42.8 | D-1 | 0.9 | B-1 | 0.4 | LM-1 | 3.2 | | | S-1 | 1.98 | -10°C | 28°C | Presence | 5 | A | A | 3 |
| | P-17 | 42.8 | | | | | | | | | S-2 | 1.98 | | | | | | | |
| | | | | | | | | | | | S-3 | 1.98 | | | | | | | |
| | | | | | | | | | | | S-4 | 1.98 | | | | | | | |
| | | | | | | | | | | | S-5 | 1.98 | | | | | | | |

[Table 6]

| Table 1 (6) | Magnetic particles | | Dispersant | | Organic rheology control agent or other binders | | Liquid reactive monomer | | Other additives | | Solvent | | Low temperature treatment | DSC measurement result [peak temperature in 1st heating] | Viscoelasticity measurement result [inflection point of G' in 1st heating] | Evaluation result | | | |
|---|---|---|---|---|---|---|---|---|---|---|---|---|---|---|---|---|---|---|---|
| | | | | | | | | | | | | | | | | Temporal stability | Coating properties | | Magnetic properties |
| | Type | Part by mass | Type | Part by mass | Type | Part by mass | Type | Part by mass | Type | Part by mass | Type | Part by mass | | | | | After stirring | After heating | |
| Example 29 | P-1 | 42.8 | D-1 | 0.9 | B-1 | 0.4 | LM-3 | 2.7 | A-6 | 0.5 | S-1 | 9.9 | -10°C | 28°C | A | 5 | A | A | 3 |
| | P-17 | 42.8 | | | | | | | | | | | | | | | | | |
| | | | | | | | | | | | | | | | | | | | |
| Comparative Example 1 | P-1 | 42.8 | D-7 | 0.9 | B-1 | 0.4 | LM-1 | 3.2 | | | S-1 | 9.9 | -10°C | None | c | 1 | A | A | 3 |
| | P-17 | 42.8 | | | | | | | | | | | | | | | | | |
| | | | | | | | | | | | | | | | | | | | |
| Comparative Example 2 | P-1 | 42.8 | D-8 | 0.9 | B-1 | 0.4 | LM-1 | 3.2 | | | S-1 | 9.9 | -10°C | 27°C | C | 2 | A | A | 3 |
| | P-17 | 42.8 | | | | | | | | | | | | | | | | | |
| | | | | | | | | | | | | | | | | | | | |
| Comparative Example 3 | P-1 | 41.4 | D-1 | 0.9 | B-1 | 0.7 | LM-1 | 5.6 | | | S-1 | 10 | None | 27°C | C | 2 | A | A | 3 |
| | P-17 | 41.4 | | | | | | | | | | | | | | | | | |
| | | | | | | | | | | | | | | | | | | | |
| Comparative Example 4 | P-7 | 48.5 | | | B-1 | 0.5 | LM-1 | 2 | | | S-1 | 0.5 | -10°C | None | C | 5 | B | B | 3 |
| | P-17 | 48.5 | | | | | | | | | | | | | | | | | |
| | | | | | | | | | | | | | | | | | | | |
| Comparative Example 5 | P-1 | 42.8 | | | B-1 | 0.5 | LM-1 | 4 | | | S-1 | 9.9 | -10°C | None | C | 1 | A | A | 3 |
| | P-17 | 42.8 | | | | | | | | | | | | | | | | | |
| | | | | | | | | | | | | | | | | | | | |

From the results shown in the tables, it was clear that the magnetic particle-containing composition obtained by the production method of Examples had excellent storage stability and had fluidity suitable for coating even after a certain period of time after stirring.

In addition, from the comparison between Example 5 and Example 1, it was confirmed that, in a case where the crystalline polymer chain included in the dispersant contained in the precursor composition was a chain including a single polyester structure (preferably, a chain including only a caprolactone structure as the polyester structure), the storage stability was more excellent.

In addition, from the comparison between Examples 7 and 8 and Example 1, it was confirmed that, in a case where the content of the dispersant in the precursor composition was 0.3% by mass or more (preferably 0.6% by mass or more) with respect to the total solid content of the composition, the storage stability was more excellent.

In addition, from the comparison between Example 9 and Example 1, it was confirmed that, in a case where the precursor composition contained the rheology control agent, the storage stability was more excellent.

In addition, from the comparison between Example 12 and Example 1, it was confirmed that, in a case where the cooling temperature in the low-temperature treatment was 0°C or lower, the storage stability was more excellent.

In addition, from the comparison between Example 17 and Example 1, it was confirmed that, in a case where the volume average particle size of the magnetic particles contained in the precursor composition was 4 μm or more, the magnetic properties were more excellent.

## Claims

**1.** A method for producing a magnetic particle-containing composition, comprising:

a step of cooling, to 5°C or lower, a precursor composition which contains magnetic particles, a dispersant, and at least one of a solvent or a liquid reactive monomer,
wherein the dispersant has an amine-based adsorptive group and a crystalline polymer chain.

**2.** The method for producing a magnetic particle-containing composition according to claim 1,
wherein the crystalline polymer chain is a chain including a polyester structure.

**3.** The method for producing a magnetic particle-containing composition according to claim 2,
wherein a repetition number in the polyester structure is 10 or more.

**4.** The method for producing a magnetic particle-containing composition according to any one of claims 1 to 3,

wherein the amine-based adsorptive group is a group selected from the group consisting of a group represented by Formula (A1) to a group represented by Formula (A3),

Formula (A1): $*\text{-}NR^{11}R^{12}$

in Formula (A1), $R^{11}$ and $R^{12}$ each independently represent a hydrogen atom or a monovalent aliphatic hydrocarbon group, and
* represents a bonding position,

Formula (A2): $*\text{-}NR^{21}\text{-}*$

in Formula (A2), $R^{21}$ represents a hydrogen atom or a monovalent aliphatic hydrocarbon group, and
* represents a bonding position,

Formula (A3): $*\text{-}N^{+}R^{22}R^{23}\text{-}*$

in Formula (A3), $R^{22}$ and $R^{23}$ each independently represent a hydrogen atom or a monovalent aliphatic hydrocarbon group, and
* represents a bonding position.

**5.** The method for producing a magnetic particle-containing composition according to any one of claims 1 to 3,
wherein the dispersant includes a repeating unit including the crystalline polymer chain.

**6.** The method for producing a magnetic particle-containing composition according to any one of claims 1 to 3, wherein the dispersant has the crystalline polymer chain as a graft chain.

**7.** The method for producing a magnetic particle-containing composition according to any one of claims 1 to 3, wherein a content of the dispersant in the precursor composition is 0.3% by mass or more with respect to a total solid content of the composition.

**8.** The method for producing a magnetic particle-containing composition according to any one of claims 1 to 3, wherein the precursor composition further contains a rheology control agent.

**9.** The method for producing a magnetic particle-containing composition according to any one of claims 1 to 3, wherein the magnetic particles include soft magnetic particles.

**10.** The method for producing a magnetic particle-containing composition according to any one of claims 1 to 3, wherein a volume average particle size of the magnetic particles is 4 μm or more.

**11.** A magnetic particle-containing composition comprising:

magnetic particles;
a dispersant; and
at least one of a solvent or a liquid reactive monomer,
wherein, in a case where the magnetic particle-containing composition is heated from 10°C to 100°C at 10 °C/min using a differential scanning calorimeter, an endothermic peak temperature is 60°C or lower.

**12.** The magnetic particle-containing composition according to claim 11, wherein the dispersant has an amine-based adsorptive group and a crystalline polymer chain.

**13.** The magnetic particle-containing composition according to claim 12, wherein the crystalline polymer chain is a chain including a polyester structure.

**14.** The magnetic particle-containing composition according to claim 13, wherein a repetition number in the polyester structure is 10 or more.

**15.** The magnetic particle-containing composition according to any one of claims 12 to 14, wherein the dispersant includes a repeating unit including the crystalline polymer chain.

**16.** The magnetic particle-containing composition according to any one of claims 12 to 14, wherein the dispersant has the crystalline polymer chain as a graft chain.

**17.** The magnetic particle-containing composition according to any one of claims 12 to 14,

wherein the amine-based adsorptive group is a group selected from the group consisting of a group represented by Formula (A1) to a group represented by Formula (A3),

Formula (A1): $*\text{-NR}^{11}\text{R}^{12}$

in Formula (A1), $R^{11}$ and $R^{12}$ each independently represent a hydrogen atom or a monovalent aliphatic hydrocarbon group, and
* represents a bonding position,

Formula (A2): $*\text{-NR}^{21}\text{-}*$

in Formula (A2), $R^{21}$ represents a hydrogen atom or a monovalent aliphatic hydrocarbon group, and
* represents a bonding position,

Formula (A3): $*\text{-N}^{+}\text{R}^{22}\text{R}^{23}\text{-}*$

in Formula (A3), $R^{22}$ and $R^{23}$ each independently represent a hydrogen atom or a monovalent aliphatic hydrocarbon group, and
* represents a bonding position.

**18.** The magnetic particle-containing composition according to any one of claims 11 to 14,
wherein a content of the dispersant is 0.3% by mass or more with respect to a total solid content of the composition.

**19.** The magnetic particle-containing composition according to any one of claims 11 to 14, further comprising:
a rheology control agent.

**20.** The magnetic particle-containing composition according to any one of claims 11 to 14,
wherein the magnetic particles include soft magnetic particles.

**21.** The magnetic particle-containing composition according to any one of claims 11 to 14,
wherein a volume average particle size of the magnetic particles is 4 μm or more.

**22.** A magnetic particle-containing cured product formed of the magnetic particle-containing composition according to any one of claims 11 to 14.

**23.** A magnetic particle-introduced substrate comprising:

a substrate in which a hole portion is formed; and
the magnetic particle-containing cured product according to claim 22, which is disposed in the hole portion.

**24.** An electronic material comprising:
the magnetic particle-introduced substrate according to claim 23.

# INTERNATIONAL SEARCH REPORT

International application No. **PCT/JP2022/036384**

**A. CLASSIFICATION OF SUBJECT MATTER**

***C08L 101/12***(2006.01)i; ***C08G 81/00***(2006.01)i; ***C08K 3/01***(2018.01)i; ***C08L 35/02***(2006.01)i; ***C08L 67/00***(2006.01)i; ***C08L 79/02***(2006.01)i; ***C08L 101/02***(2006.01)i
FI: C08L101/12; C08G81/00; C08L35/02; C08L67/00; C08L79/02; C08L101/02; C08K3/01

According to International Patent Classification (IPC) or to both national classification and IPC

**B. FIELDS SEARCHED**

Minimum documentation searched (classification system followed by classification symbols)

C08L101/12; C08G81/00; C08K3/01; C08L35/02; C08L67/00; C08L79/02; C08L101/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2021/157274 A1 (FUJIFILM CORPORATION) 12 August 2021 (2021-08-12) claims, examples | 11-24<br>1-10 |
| X<br>A | WO 2021/117395 A1 (FUJIFILM CORPORATION) 17 June 2021 (2021-06-17) claims, examples, paragraph [0169] | 11-24<br>1-10 |
| X<br>A | JP 2000-219816 A (KONICA CORP) 08 August 2000 (2000-08-08) claims, examples, paragraphs [0076], [0077], [0085], [0086] | 1-22<br>23, 24 |

☐ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 November 2022** | **06 December 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/036384**

| Patent document cited in search report | Publication date (day/month/year) | Patent family member(s) | Publication date (day/month/year) |
|---|---|---|---|
| WO 2021/157274 A1 | 12 August 2021 | (Family: none) | |
| WO 2021/117395 A1 | 17 June 2021 | (Family: none) | |
| JP 2000-219816 A | 08 August 2000 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020013943 A
- JP 2019067960 A
- JP 2013249417 A
- JP 5923557 B
- WO 2016088645 A
- JP 2012155288 A
- JP 2009265518 A
- JP 2008260927 A
- JP 2015068893 A
- JP 2013029760 A
- JP 2008292970 A
- JP 2004043405 A
- JP 2014005382 A
- JP 10291969 A
- JP H10291969 A
- JP 4225898 B
- JP 2009191179 A
- JP 2001233842 A
- JP 2000080068 A
- JP 2006342166 A
- JP 2000066385 A
- JP 2004534797 A
- JP 2009519904 A
- US 7626957 B
- JP 2010015025 A
- US 2009292039 A
- WO 2009131189 A
- US 7556910 B
- JP 2009221114 A
- JP 2010262028 A
- JP 2014500852 A
- JP 2013164471 A
- JP 2014137466 A
- WO 2015036910 A
- JP 2010097210 A
- KR 1020160109444
- JP 2014041318 A
- WO 2014017669 A
- JP 2011132503 A
- JP 2020008634 A
- JP 2011089090 A
- JP 2016060682 A
- JP 2017157252 A


### Non-patent literature cited in the description


- **A. J. LEO.** Comprehensive Medicinal Chemistry. Pergamon Press, 1990, vol. 4, 295
- **C. HANSCH ; A. J. LEO.** Substituent Constants For Correlation Analysis in Chemistry and Biology. John Wiley & Sons
- **A. J. LEO.** Calculating logPoct from structure. *Chem. Rev.,* 1993, vol. 93, 1281-1306
- **KIYOMI KATO.** Ultraviolet Curing System. Sogo Gijutsu Center, 1989, 65-148
- *J. C. S. Perkin,* 1979, vol. II, 1653-1660
- *J. C. S. Perkin,* 1979, vol. II, 156-162
- *Journal of Photopolymer Science and Technology,* 1995, 202-232